(19) Europäisches Patentamt
European Patent Office
Office européen des brevets

(11) EP 4 083 910 A1

(12) EUROPEAN PATENT APPLICATION
published in accordance with Art. 153(4) EPC

(43) Date of publication:
02.11.2022 Bulletin 2022/44

(21) Application number: 20907766.8

(22) Date of filing: 15.12.2020

(51) International Patent Classification (IPC):
*G06T 7/00* (2017.01) *G06N 20/00* (2019.01)

(52) Cooperative Patent Classification (CPC):
G06N 20/00; G06T 7/00

(86) International application number:
PCT/JP2020/046778

(87) International publication number:
WO 2021/131911 (01.07.2021 Gazette 2021/26)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 24.12.2019 JP 2019233594

(71) Applicant: Sony Group Corporation
Tokyo 108-0075 (JP)

(72) Inventor: SATOH, Ryuta
Tokyo 108-0075 (JP)

(74) Representative: Witte, Weller & Partner
Patentanwälte mbB
Postfach 10 54 62
70047 Stuttgart (DE)

# (54) INFORMATION PROCESSING DEVICE, INFORMATION PROCESSING SYSTEM, INFORMATION PROCESSING METHOD AND INFORMATION PROCESSING PROGRAM

(57) An object of the present disclosure is to provide an information processing apparatus, an information processing system, an information processing method, and an information processing program capable of achieving efficient use of training data. An information processing apparatus according to the present disclosure includes: a recognition unit (101) that performs object recognition processing using sensor information acquired by a sensor, the object recognition processing being performed by a first recognizer that has been pretrained; and a training data application determination unit (22d) that determines whether the sensor information is applicable as training data to a second recognizer different from the first recognizer.

FIG.2

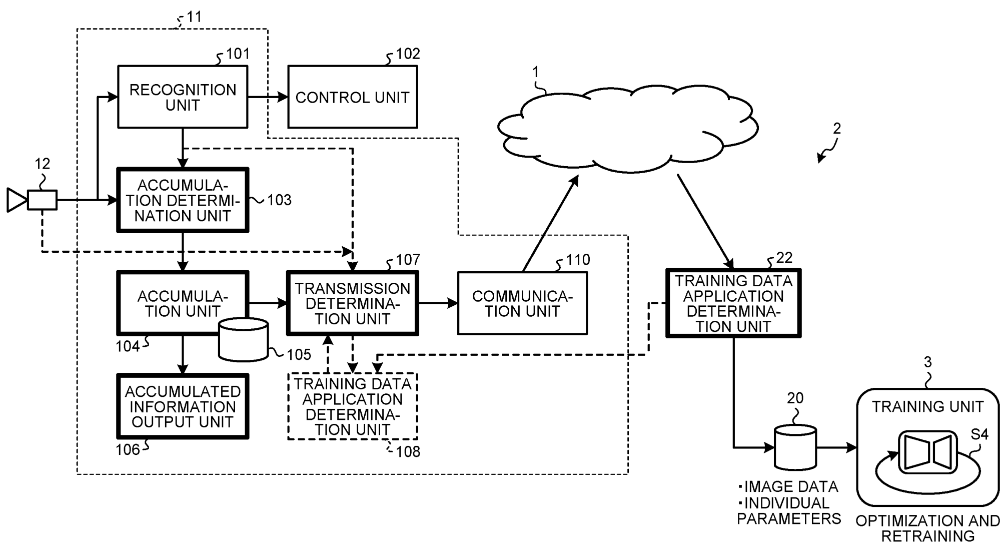


EP 4 083 910 A1

## Description

### Field

The present disclosure relates to an information processing apparatus, an information processing system, an information processing method, and an information processing program.

### Background

There has been proposed an information processing system that analyzes a captured image, specifically, an image captured when a vehicle travels, using an in-vehicle camera mounted on the vehicle, and determines whether an obstacle such as a person exists in a traveling direction of the vehicle. Furthermore, there is proposed a technique of detecting in such an information processing system, an obstacle based on a captured image using a recognition model trained by machine learning. In addition, in a known configuration, a recognition model trained by machine learning is built by a server on a network, for example.

Meanwhile, when using machine learning to detect an obstacle or the like based on a captured image, it is preferable to occasionally collect training data and perform retraining on the recognition model to update the recognition model. For example, the server acquires and collects, via communication, data obtained by the vehicle and performs retraining on the recognition model using the collected data as training data, and updates the recognition model. The updated recognition model is transmitted to the vehicle by communication. This makes it possible, on the vehicle side, to detect an obstacle or the like with higher accuracy by using the updated recognition model.

### Citation List

### Patent Literature

Patent Literature 1: JP 2018-202595 A

### Summary

### Technical Problem

However, data transmitted for retraining has various attributes depending on a situation of acquisition of the data such as an area where the data transmission has been performed, and the data utilization has been limited to the range in which the attributes are effective.

An object of the present disclosure is to provide an information processing apparatus, an information processing system, an information processing method, and an information processing program capable of achieving efficient use of training data.

### Solution to Problem

For solving the problem described above, an information processing apparatus according to one aspect of the present disclosure has a recognition unit that performs object recognition processing using sensor information acquired by a sensor, the object recognition processing being performed by a first recognizer that has been pretrained; and a training data application determination unit that determines whether the sensor information is applicable as training data to a second recognizer different from the first recognizer.

### Brief Description of Drawings

FIG. 1 is a schematic diagram of an example schematically illustrating an overall picture of a driving assistance system related to each embodiment.
FIG. 2 is a block diagram illustrating a configuration of an example of a driving assistance system according to each embodiment.
FIG. 3 is a block diagram illustrating an example of a hardware configuration of a terminal device applicable to each embodiment.
FIG. 4 is a block diagram illustrating an example of a hardware configuration of a server system applicable to an embodiment.

FIG. 5 is a block diagram illustrating a configuration of an example of a driving assistance system according to a first embodiment.

FIG. 6 is a functional block diagram of an example illustrating functions of a server system according to the first embodiment.

FIG. 7 is a flowchart of an example illustrating processing in the server system according to the first embodiment.

FIG. 8 is a functional block diagram of an example illustrating functions of a server system according to a first modification of the first embodiment.

FIG. 9 is a flowchart of an example illustrating processing in the server system according to the first embodiment.

FIG. 10 is a functional block diagram of an example illustrating functions of a server system according to a second modification of the first embodiment.

FIG. 11 is a schematic diagram illustrating an example of an image based on image data included in sensor information.

FIG. 12 is a flowchart of an example illustrating processing in the server system according to the second modification of the first embodiment.

FIG. 13 is a block diagram illustrating a configuration of an example of a driving assistance system according to a second embodiment.

FIG. 14 is a functional block diagram of an example illustrating functions of a terminal device according to the second embodiment.

FIG. 15 is a flowchart of an example illustrating processing in the terminal device according to the second embodiment.

FIG. 16 is a functional block diagram of an example illustrating functions of a terminal device according to a first modification of the second embodiment.

FIG. 17 is a flowchart of an example illustrating processing in the terminal device according to the first modification of the second embodiment.

FIG. 18 is a functional block diagram of an example illustrating functions of a terminal device according to a second modification of the second embodiment.

FIG. 19 is a flowchart of an example illustrating processing in the terminal device according to the second modification of the second embodiment.

FIG. 20 is a functional block diagram of an example illustrating functions of a terminal device according to a third modification of the second embodiment.

FIG. 21 is a flowchart of an example illustrating processing in the terminal device according to the third modification of the second embodiment.

FIG. 22 is a block diagram illustrating a configuration of an example of a driving assistance system according to a third embodiment.

FIG. 23 is a functional block diagram of an example illustrating functions of a terminal device according to the third embodiment.

FIG. 24 is a flowchart of an example illustrating processing in the terminal device according to the third embodiment.

FIG. 25 is a functional block diagram of an example illustrating functions of a terminal device according to a first modification of the third embodiment.

FIG. 26 is a flowchart of an example illustrating processing in the terminal device according to the first modification of the third embodiment.

FIG. 27 is a functional block diagram of an example illustrating functions of a terminal device according to a second modification of the third embodiment.

FIG. 28 is a flowchart of an example illustrating processing in the terminal device according to the second modification of the third embodiment.

FIG. 29 is a block diagram illustrating a schematic configuration example of a vehicle control system, which is an example of a moving body control system to which the technology according to the present disclosure is applicable.

FIG. 30 is a diagram illustrating an example of an installation position of an imaging unit.

## Description of Embodiments

Embodiments of the present disclosure will be described below in detail with reference to the drawings. In each of the following embodiments, the same parts are denoted by the same reference symbols, and a repetitive description thereof will be omitted.

Hereinafter, embodiments of the present disclosure will be described in the following order.

1. Technology applicable to each embodiment

1-1. Overall picture of system applicable to each embodiment
1-2. Outline of system according to each embodiment
1-3. Hardware configuration example

2. First embodiment

2-1. First modification
2-2. Second modification

3. Second embodiment

3-1. First modification
3-2. Second modification
3-3. Third modification

4. Third embodiment

4-1. First modification
4-2. Second modification

5. Fourth embodiment

[1. Technology applicable to each embodiment]

(1-1. Overall picture of system applicable to each embodiment)

First, a technology applicable to each embodiment of the present disclosure will be described. FIG. 1 is a schematic diagram of an example schematically illustrating an overall picture of a driving assistance system related to each embodiment. In FIG. 1, the driving assistance system includes a server system 2 and one or more vehicles 10, with the server system 2 and the vehicles 10 being connected to a network 1. The network 1 is, for example, a V2X network for performing vehicle-to-vehicle (V2X) communication.

The server system 2 can be actualized by using a cloud system including a plurality of computers and storage devices that are connected to each other via a network and operate in cooperation. The server system 2 is not limited thereto, and may be configured by a server device using a single computer. By machine learning, the server system 2 can generate a recognizer that performs object recognition based on sensor information.

The vehicle 10 is equipped with a terminal device 11 connected to the network 1. The terminal device 11 has a configuration as an information processing apparatus including, for example, a central processing unit (CPU), read only memory (ROM), random access memory (RAM), and various interfaces, and further includes a recognizer that performs object recognition processing based on an output of a sensor 12. An example of the sensor 12 is a camera. Hereinafter, the sensor 12 will be described as a camera 12. For example, the recognizer generated by the server system 2 is downloaded via the network 1 to be mounted on the terminal device 11. Installation of the recognizer is not limited thereto, and the recognizer may be mounted on the terminal device 11 in advance.

The terminal device 11 performs object recognition processing by a recognizer based on the captured image which is acquired by the camera 12. The terminal device 11 can perform driving assistance in the vehicle 10 by the object recognition processing. Here, it is preferable to occasionally update the recognizer using new training data so as to achieve improvement of the performance of the recognition processing. In view of this, the terminal device 11 transmits image data based on the captured image acquired by the camera 12 to the server system 2 via the network 1 (step S1 and step S2).

The server system 2 accumulates the image data transmitted from the terminal device 11 in a storage unit 20. The storage unit 20 can be actualized by adopting a storage device such as a hard disk drive or large-scale flash memory, and further accumulates a recognizer and parameter information for generating a recognizer that performs object recognition processing. The server system 2 uses, in a training unit 3, each data stored in the storage unit 20 including the image data transmitted from the terminal device 11 as training data (step S3), and executes optimization and retraining of the recognizer (step S4). This optimization and retraining generates a post-retraining recognizer 21, which is an updated recognizer (step S5).

The server system 2 transmits the generated post-retraining recognizer 21 to the terminal device 11 via the network 1 (step S6 and step S7). The terminal device 11 updates an existing recognizer by the post-retraining recognizer 21 transmitted via the network 1. In this manner, by retraining the existing recognizer using the newly collected training data, it is possible to improve the performance of the recognition processing performed by the recognizer.

In such a driving assistance system, while it is conceivable to improve the machine learning method to perform retraining on the recognizer, it will also be effective to perform retraining using new training data. In order to improve the performance of the recognizer by retraining using new training data, it is desirable to continue to collect training data (for example, image data) contributing to performance improvement.

At this time, the time-series data and the image data transmitted from the terminal device 11 to the server system 2 for use in retraining are generally large in size, which might increase communication cost. In addition, the time-series data and the image data have various attributes, and in addition, the attributes might be different for various factors such as for each vehicle 10 and for each area, for example. As an example, the recognition data regarding the traffic road sign varies in each country, for example, and image data including the traffic road sign acquired in country A might not be usable as training data for recognizing the traffic road sign in country B.

An object of each embodiment of the present disclosure is to enable efficient use of new training data for use in retraining.

(1-2. Outline of system according to each embodiment)

Next, an outline of a driving assistance system according to each embodiment will be described. FIG. 2 is a block diagram illustrating a configuration of an example of a driving assistance system according to each embodiment. In FIG. 2, portions deeply associated with individual embodiments and their modifications are indicated with thick frames.

In FIG. 2, the server system 2 includes a training data application determination unit 22 in addition to the training unit 3 and the storage unit 20 described above. The storage unit 20 accumulates training data and stores a plurality of recognizers. As will be described in detail below, based on the sensor information transmitted from the terminal device 11, the training data application determination unit 22 designates a recognizer to be retrained using the sensor information from among the recognizers stored in the storage unit 20. The server system 2 transmits information indicating the recognizer designated by the training data application determination unit 22 to the terminal device 11.

In FIG. 2, the terminal device 11 includes a recognition unit 101, a control unit 102, an accumulation determination unit 103, an accumulation unit 104, a storage unit 105, an accumulated information output unit 106, a transmission determination unit 107, and a communication unit 110. The terminal device 11 can further include a training data application determination unit 108.

The recognition unit 101 includes a recognizer downloaded from the server system 2, for example, and performs object recognition processing on the basis of sensor information including image data based on a captured image, that is, an image captured by the camera 12.

At this time, the recognition unit 101 can use RAW data as a captured image, that is, an image captured by the camera 12. Specifically, image data captured by the camera 12 and used for visual recognition is generally subjected to image processing such as demosaic processing or compression processing on data of each color of RGB to 8 bits, for example. In contrast, recognition processing does not need such image processing in usual cases and in the case of night or distant recognition, in particular, a higher recognition rate (recognition score) can be obtained by using RAW data, which uses output of the image sensor of the camera 12 in a substantially unprocessed state. The recognition score is a value indicating the degree of recognition, and takes a range of 0 or more and 1 or less, for example. The larger the recognition score, the higher the degree of recognition.

Furthermore, in particular, in consideration of recognition of a distant object, it is preferable that the resolution of the camera 12 (the resolution of the image sensor) be high.

An object recognition result obtained by the recognition unit 101 is passed to the control unit 102 that performs driving control of the vehicle 10. The control unit 102 performs automated driving control such as obstacle avoidance based on the object recognition result passed from the recognition unit 101.

Here, the sensor information includes not only image data but also metadata, which is attribute information regarding the camera 12 and regarding imaging using the camera 12. The metadata can include, for example, information regarding camera performance such as a model number, resolution, and frame rate of the camera 12, and information indicating image processing (white balance processing, gain adjustment processing, and the like) executed in the camera 12. The metadata can further include information regarding the vehicle 10, such as information indicating the vehicle type and destination of the vehicle 10, information related to the current location of the vehicle 10, and the traveling speed of the vehicle 10.

The accumulation determination unit 103 determines whether to accumulate sensor information output from the camera 12 in the storage unit 105 being a storage device, for example, by the accumulation unit 104. Although a specific example will be described below, the accumulation determination unit 103 determines whether to accumulate the sensor information in the storage unit 105 by the accumulation unit 104 based on image data or metadata included in the sensor information, for example. The accumulated information output unit 106 outputs the sensor information accumulated in the storage unit 105 to the outside. The accumulated information output unit 106 may output the sensor information to the outside by wired communication or can output the sensor information to the outside by wireless communication such as Wi-Fi (registered trademark) or Bluetooth (registered trademark).

The transmission determination unit 107 determines whether to transmit the sensor information output from the camera 12 to the server system 2. For example, the transmission determination unit 107 determines whether to transmit the sensor information to the server system 2 based on the recognition result by the recognition unit 101 and the sensor information. Having determined to transmit the sensor information to the server system 2, the transmission determination unit 107 adds information indicating the recognizer, which has been transmitted from the training data application determination unit 22 in the server system 2, to the sensor information to be transmitted. The sensor information determined not to be transmitted to the server system 2 by the transmission determination unit 107 will be accumulated in the storage unit 105 by the accumulation unit 104.

According to this driving assistance system, the transmission determination unit 107 determines whether to transmit the sensor information in the terminal device 11, making it possible to suppress the communication cost related to the transmission of sensor information. Furthermore, the server system 2 causes the training data application determination unit 22 to determine the recognizer to which the sensor information transmitted from the terminal device 11 is to be applied, making it possible to apply the sensor information to a recognizer that performs recognition processing different from that of the recognizer included in the terminal device 11, leading to achievement of efficient use of sensor information.

(1-3. Hardware configuration example)

Next, an example of a hardware configuration of the server system 2 and the terminal device 11 applicable to each embodiment will be described. FIG. 3 is a block diagram illustrating an example of a hardware configuration of the terminal device 11 applicable to each embodiment. In FIG. 3, the terminal device 11 includes a CPU 1001, ROM 1002, RAM 1003, interfaces (I/F) 1004 and 1005, a communication interface 1006, and a GNSS receiver 1007, which are communicably connected to each other via a bus 1030.

The CPU 1001 controls the entire operation of the terminal device 11 by using the RAM 1003 as work memory according to a program stored in advance in the ROM 1002. Note that the ROM 1002 is formed to have stored data and programs rewritable under the control of the CPU 1001, and can store and update, for example, the program constituting the recognizer downloaded from the server system 2 described above. Memory devices are not limited thereto, and the RAM 1003 may include a nonvolatile region, and a program constituting the recognizer may be stored in the nonvolatile region of the RAM 1003.

The interface 1004 is an interface for communicating with the camera 12. Image data generated from a captured image, that is, an image captured by the camera 12 and sensor information including the image data are input from the interface 1004 to the terminal device 11. Furthermore, the CPU 1001 can send an instruction such as imaging to the camera 12 via the interface 1004.

The interface 1005 is an interface for a control system of the vehicle 10 on which the terminal device 11 is mounted. Information such as an object recognition result by the recognizer is passed to the control system of the vehicle 10 via the interface 1005. The interface 1005 controls communication with the network 1 according to an instruction of the CPU 1001.

The GNSS receiver 1007 receives a signal based on a global navigation satellite system (GNSS) and acquires positional information indicating a current position. Furthermore, the GNSS receiver 1007 can acquire the current altitude and time together with the current position. Incidentally, when the vehicle 10 equipped with the terminal device 11 separately includes a positional information acquisition means, by acquiring the positional information from the positional information acquisition means, it is possible to omit the GNSS receiver 1007 in the terminal device 11.

In this manner, the terminal device 11 includes the CPU 1001, the ROM 1002, the RAM 1003, and various interfaces, and functions as a computer (information processing apparatus).

Note that the recognition unit 101, the accumulation determination unit 103, the accumulation unit 104, the accumulated information output unit 106, the transmission determination unit 107, and the communication unit 110 included in the terminal device 11 described above are actualized by an information processing program operating on the CPU 1001. Not limited to this, for example, some or all of the accumulation determination unit 103, the accumulation unit 104, the accumulated information output unit 106, the transmission determination unit 107, and the communication unit 110 may be configured by hardware circuits that operate in cooperation with each other.

FIG. 4 is a block diagram illustrating an example of a hardware configuration of the server system 2 applicable to the embodiment. In FIG. 4, the server system 2 is illustrated as a single computer (information processing apparatus). In FIG. 4, the server system 2 includes a CPU 2000, ROM 2001, RAM 2002, a storage device 2004, and a communication interface 2005, which are communicably connected to each other via a bus 2010.

The CPU 2000 controls the entire operation of the server system 2 using the RAM 2002 as work memory according to a program stored in advance in the ROM 2001 or the storage device 2004. Under the CPU 2000, the program and each parameter constituting the recognizer generated by machine learning according to the program are stored in the storage device 2004, for example.

The communication interface 2005 is an interface that controls communication with the network 1.

Note that the training unit 3 and the training data application determination unit 22 included in the server system 2 described above are actualized by an information processing program operating on the CPU 2000. Not limited to this, some or all of the training unit 3 and the training data application determination unit 22 may be configured by hardware circuits that operate in cooperation with each other.

[2. First embodiment]

Next, a first embodiment of the present disclosure will be described. In each embodiment of the present disclosure, it is possible to designate a recognizer to which the sensor information acquired in the terminal device 11 is to be applied as training data for retraining, from among a plurality of recognizers. In the first embodiment, the designation of the recognizer is performed in the server system 2. FIG. 5 is a block diagram illustrating a configuration of an example of a driving assistance system according to the first embodiment. As illustrated as a colored area in FIG. 5, the first embodiment uses a training data application determination unit 22a on the server system 2 side without using the training data application determination unit 108 on the terminal device 11 side illustrated in FIG. 2.

In the first embodiment, regarding sensor information transmitted from the terminal device 11, a scene at the time of capturing image data included in the sensor information is determined based on a predetermined rule or learning. Subsequently, a recognizer to which the sensor information is to be applied as training data is designated for each determined scene, for example.

Here, the scene indicates a situation when sensing, that is, imaging by the camera 12 is performed, and includes a place and environmental conditions regarding the imaging. More specifically, the scene information indicating the scene may include the following information.

- Information acquired from the outside of the camera 12, such as a current position acquired by the GNSS receiver 1007 or the like, information indicating a current time, and a system status of an in-vehicle system mounted on the vehicle 10.
- Sensor internal information such as exposure time and white balance processing at the time of imaging stored in the camera 12.
- Information estimated based on a predetermined rule from information obtained by sensing (for example, image data based on a captured image) or information estimated by learning.

The training data application determination unit 22a estimates an applicable recognizer by a rule-based method or a database search based on the scene information acquired as described above. The recognizer is not limited thereto, and the training data application determination unit 22a can directly designate an applicable recognizer based on the scene information by learning.

FIG. 6 is a functional block diagram of an example illustrating functions of the server system 2 according to the first embodiment. In FIG. 6, the server system 2 includes a communication unit 200, a training data application determination unit 22aa, a training data accumulation unit 201, a training unit 202, and a learning result utilization unit 203. In addition, the training data application determination unit 22a includes a metadata analysis unit 221 and a training data determination unit 222. The communication unit 200, the training data application determination unit 22a (the metadata analysis unit 221 and the training data determination unit 222), the training data accumulation unit 201, the training unit 202, and the learning result utilization unit 203 are actualized by an information processing program operating on the CPU 2000.

Here, the server system 2 includes a plurality of recognizers $210_1$, $210_2$, $210_3$, $210_4$, .... Note that, in the following description, in a case where it is not necessary to distinguish the recognizers $210_1$, $210_2$, $210_3$, $210_4$,..., these recognizers are represented by the recognizer 210. The training data accumulation unit 201 accumulates training data for generating the plurality of recognizers 210, with the accumulation performed for each of the recognizers 210.

The communication unit 200 controls the communication interface 2005 to receive sensor information transmitted from the terminal device 11, for example. The metadata analysis unit 221 extracts the metadata from the sensor information, and analyzes the extracted metadata. The training data determination unit 222 designates the recognizer 210 to which the sensor information is applicable among the plurality of recognizers 210 based on the analysis result of the metadata.

At this time, the training data determination unit 222 can designate a recognizer different from the recognizer included in the terminal device 11 that has transmitted the sensor information, as the recognizer 210 to which the sensor information is applicable. For example, the training data determination unit 222 determines which of the above-described scene information the sensor information corresponds to, and designates the recognizer 210 to which the sensor information is applicable according to the scene information to which the sensor information corresponds.

The training data determination unit 222 adds information indicating the designated recognizer 210 to the sensor information, for example, and accumulates the obtained sensor information in the training data accumulation unit 201.

The training unit 202 retrains the recognizer 210 by using the training data accumulated for each recognizer 210 designated in the training data accumulation unit 201, and then updates the recognizer 210. The learning result utilization unit 203 performs utilization processing on the recognizer 210 retrained and updated by the training unit 202. For example, the learning result utilization unit 203 transmits the updated recognizer 210 to the corresponding terminal device 11.

FIG. 7 is a flowchart of an example illustrating processing in the server system 2 according to the first embodiment. In the first step S100, the server system 2 performs communication processing by the communication unit 200, and receives the sensor information transmitted from the terminal device 11 via the network 1. The processing in step S100 includes processing of receiving each piece of sensor information transmitted from each of the plurality of terminal devices 11.

In the next step S101, the server system 2 causes the metadata analysis unit 221 to acquire image data and metadata from each piece of sensor information acquired in the communication processing in step S100. In the next step S102, the server system 2 causes the metadata analysis unit 221 to execute analysis processing of each piece of metadata acquired in step S101.

The next step S103st represents a start of loop processing indicating execution of processing of step S103st to step S103ed for all the sensor information acquired in the communication processing of step S100. The next step S104st represents a start of loop processing indicating execution of processing of step S104st to step S104ed for all the application targets of each piece of sensor information, that is, for each of the recognizers 210.

In step S105, the server system 2 causes the training data determination unit 222 to execute metadata application determination processing. That is, in step S105, the training data determination unit 222 examines, based on the metadata, whether one piece of sensor information (referred to as target sensor information) among the pieces of sensor information acquired in the communication processing in step S100 is applicable to the target recognizer 210 among the individual recognizers 210.

In the next step S106, when the training data determination unit 222 has determined that the target sensor information is applicable to the target recognizer 210 (step S106, "Yes"), the processing proceeds to step S107. In step S107, the server system 2 causes the training data accumulation unit 201 to execute accumulation processing of the training data of the application target. That is, in step S107, the training data accumulation unit 201 accumulates the target sensor information as training data for the target recognizer 210 determined to be applicable in step S106.

After the processing of step S107, the server system 2 returns the processing from step S104ed to step S104st, and executes the processing of steps S105 and S106 on the next recognizer 210 set as the target recognizer 210 among the individual recognizers 210.

In contrast, when it is determined in step S106 that the target sensor information is not applicable to the target recognizer 210 (step S106, "No"), the processing returns from step S104ed to step S104st.

After completion of the processing of steps S104st to S104ed for each of the recognizers 210 regarding the target sensor information, the server system 2 returns the processing from step S103ed to step S103st, and iterates the processing of steps S103st to S103ed on the next sensor information as target sensor information among the pieces of sensor information acquired in the communication processing of step S100.

After completion of the processing of steps S103st to S103ed for each piece of sensor information, the server system 2 proceeds to the processing of step S108. In step S108, the server system 2 causes the training unit 202 to perform retraining processing on the corresponding recognizer 210 by using each piece of sensor information accumulated in the training data accumulation unit 201 by the above-described processing, as training data. After completion of the processing of step S108, the server system 2 proceeds to the processing of step S109, and causes the learning result utilization unit 203 to execute the utilization processing of each recognizer 210 retrained in step S108.

In this manner, in the first embodiment, each piece of sensor information transmitted from each terminal device 11 is applied as training data for the recognizer 210 determined applicable based on the metadata. Therefore, each piece of sensor information transmitted from each of the terminal devices 11 is applicable as the training data to a recognition machine different from the recognizer used for the sensor information by the terminal device 11 being the transmission source, making is possible to utilize the sensor information as training data with higher efficiency.

(2-1. First modification)

Next, a first modification of the first embodiment will be described. The first modification of the first embodiment uses a configuration in which designation of the recognizer is performed in the server system 2, in which the server system 2 designates a recognizer 210 capable of converting the sensor information transmitted from the terminal device 11 to applicable information from among the plurality of recognizers 210 included in the server system 2 as the recognizer to which the sensor information is to be applied as training data. In the first modification of the first embodiment, the configuration of the driving assistance system according to the first embodiment described with reference to FIG. 5 is applicable.

FIG. 8 is a functional block diagram of an example illustrating functions of the server system 2 according to the first modification of the first embodiment. As illustrated in FIG. 8, the first modification of the first embodiment uses a training data application determination unit 22b on the server system 2 side without using the training data application determination unit 108 on the terminal device 11 side illustrated in FIG. 2. Furthermore, unlike the configuration of the training data application determination unit 22a of the first embodiment described above, the training data application determination unit 22b includes a domain analysis unit 230, a domain evaluation unit 231, and a training data determination unit 232.

In the first modification of the first embodiment, the server system 2 converts the domain of the sensor information using the applicability obtained by domain adaptation. Here, the domain indicates a region (category) for specifying the target, such as an area (country and the like) and an environment (day/night, highway/local road, and so on). The domain adaptation is a technique of converting a region (object, country, task,...) to be a target of a recognizer. As an example, domain adaptation allows a recognizer trained with Japanese data to be recognizable with US data. In this case, two domains of Japan and the US are converted.

That is, the training data application determination unit 22b according to the first modification of the first embodiment sets a region to be a target of the recognizer 210 to be adapted to a combination rule of domains capable of domain adaptation. As a specific example, assumed domains are N domains, namely, domains #1, #2, #3,..., #N. In the N domains, a combination of transformable domains represented by a directed graph is assumed to exist, for example, as follows.

- Domain #1 -> Domain #2, Domain #5, Domain #7,...
- Domain #2 -> Domain #1, Domain #3,...

The number of steps indicating the number of stages necessary for conversion into domain #j when domain #i has been input is defined as S_{ij}. In addition, an evaluation value per hop count is defined as $\alpha$(< 1), and an evaluation value when domain #i is converted to domain #j is defined as $\beta$_{ij}(<1).

The evaluation value Ev from domain #a to domain #b of the input sensor information is obtained by the following Formula (1).

$$Ev=\alpha^{(S_\{ij\})}+\beta_\{ij\} \quad (1)$$

A threshold is set for the evaluation value Ev, and the recognizer 210 having the evaluation value Ev higher than the threshold is set as the applicable recognizer 210.

The domain analysis unit 230 analyzes the sensor information received by the communication unit 200 from the terminal device 11, and obtains a domain related to the sensor information. The domain analysis unit 230 may obtain the domain from the image data included in the sensor information or may obtain the domain from the metadata. Based on the domain obtained by the domain analysis unit 230, the domain evaluation unit 231 calculates the evaluation value Ev for each recognizer 210 included in the server system 2, for example, by the above-described Formula (1).

The training data determination unit 232 compares each evaluation value Ev calculated by the domain evaluation unit 231 with a threshold, and designates the recognizer 210 having the evaluation value Ev higher than the threshold as the recognizer 210 to which the sensor information is applicable.

FIG. 9 is a flowchart of an example illustrating processing in the server system 2 according to the first modification of the first embodiment. In the first step S200, the server system 2 performs communication processing by the communication unit 200, and receives the sensor information transmitted from the terminal device 11 via the network 1. The processing in step S200 includes processing of receiving each piece of sensor information transmitted from each of the plurality of terminal devices 11.

In the next step S201, the domain analysis unit 230 in the server system 2 acquires the sensor information received in the communication processing in step S200. In the next step S202, the domain analysis unit 230 analyzes the sensor information acquired in step S201 to obtain a domain related to the sensor information.

The next step S203st represents a start of loop processing indicating execution of processing of step S203st to step S203ed for all the sensor information acquired in the communication processing of step S200. The next step S204st represents a start of loop processing indicating execution of processing of step S204st to step S204ed for all the application targets of each piece of sensor information, that is, for each of the domain conversion targets.

In step S205, the domain analysis unit 230 in the server system 2 calculates a conversion path from the domain obtained from the target sensor information for the target domain as the conversion target. In the next step S206, in the server system 2, the domain evaluation unit 231 calculates the evaluation value Ev for the conversion path of the domain calculated in step S205 according to the above-described Formula (1).

In the next step S207, the training data determination unit 232 determines whether the evaluation value Ev calculated in step S206 exceeds a threshold.

When the training data determination unit 232 has determined in step S207 that the evaluation value Ev exceeds the threshold (step S207, "Yes"), the processing proceeds to step S208. In step S208, the training data accumulation unit 201 in the server system 2 executes accumulation processing of the training data of the application target. That is, in step S208, the training data accumulation unit 201 accumulates the target sensor information as training data for the target recognizer 210 determined to be applicable in step S206.

After the processing of step S208, the server system 2 returns the processing from step S204ed to step S204st, and executes the processing of steps S205 to S207 with the next domain among the individual domains as the target domain of the conversion target.

In contrast, when the training data determination unit 232 determines in step S207 that the evaluation value Ev is a threshold or less (step S207, "No"), the processing returns from step S204ed to step S204st.

After completion of the processing of steps S204st to S204ed for each of domains regarding the target sensor information, the server system 2 returns the processing from step S203ed to step S203st, and iterates the processing of steps S203st to S203ed on the next sensor information as target sensor information among the pieces of sensor information acquired in the communication processing of step S200.

After completion of the processing of steps S203st to S203ed for each piece of sensor information, the server system 2 proceeds to the processing of step S209. In step S209, the server system 2 causes the training unit 202 to perform retraining processing on the corresponding recognizer 210 by using each piece of sensor information accumulated in the training data accumulation unit 201 by the above-described processing, as training data. After completion of the processing of step S208, the server system 2 proceeds to the processing of step S210, and causes the learning result utilization unit 203 to execute the utilization processing of each recognizer 210 retrained in step S209.

In this manner, according to the first modification of the first embodiment, the sensor information transmitted from the terminal device 11 is applicable to a domain different from the domain at the acquisition of the sensor information. This makes it possible to use the sensor information with higher efficiency.

(2-2. Second modification)

Next, a second modification of the first embodiment will be described. The second modification of the first embodiment uses a configuration in which designation of the recognizer is performed in the server system 2, in which the server system 2 designates, from among the plurality of recognizers 210 included in the server system 2, a recognizer based on an object included in image data included in the sensor information transmitted from the terminal device 11, as the recognizer to which the sensor information is to be applied as training data. In the second modification of the first embodiment, the configuration of the driving assistance system according to the first embodiment described with reference to FIG. 5 is applicable.

FIG. 10 is a functional block diagram of an example illustrating functions of the server system 2 according to the second modification of the first embodiment. As illustrated in FIG. 10, the second modification of the first embodiment uses a training data application determination unit 22c on the server system 2 side without using the training data application determination unit 108 on the terminal device 11 side illustrated in FIG. 2. Furthermore, unlike the configuration of the training data application determination unit 22a of the first embodiment described above, the training data application determination unit 22c includes a sensing analysis unit 240 and a training data determination unit 241.

In FIG. 10, the sensing analysis unit 240 analyzes image data included in the sensor information received by the communication unit 200. The training data determination unit 241 designates the recognizer 210 to which the sensor information is applicable among the plurality of recognizers 210 based on the information analyzed by the sensing analysis unit 240.

This point will be described more specifically. The second modification of the first embodiment analyzes image data included in sensor information transmitted from the terminal device 11 so as to obtain an object or an object class included in the image data. Subsequently, for each obtained object or object class, a database is used to search whether the sensor information is applicable as training data. It is possible to apply, as a constituent of the database, a pair of an application candidate recognizer and a target object. In this case, the constituent of the database is not limited to a positive list that lists applicable objects but may be a negative list (list of inapplicable objects) or a combination of a positive list and a negative list.

Examples of the database for the recognizer applicable to the second modification of the first embodiment include the following.

- Sign recognizer: Negative list of signs in other countries when used in Japan

- Pedestrian detector: positive list of pedestrians when used in Japan

FIG. 11 is a schematic diagram illustrating an example of an image 50 based on image data included in sensor information. The image 50 illustrated in FIG. 11 includes a pedestrian 51, a traffic road sign 52, and a vehicle 53 as objects.

The sensing analysis unit 240 analyzes the image 50 to detect each object (the pedestrian 51, the traffic road sign 52 and the vehicle 53). Here, a case where the detected pedestrian 51 and the traffic road sign 52 are those of the US as targets for the recognizer used in Japan will be discussed. Since a foreign sign is present in the image 50 based on the analysis result of the sensing analysis unit 240, the training data determination unit 241 unselects the sign recognizer as a recognizer to be applied to the sensor information. On the other hand, since a pedestrian is present in the image 50, the pedestrian detector is selected as a recognizer to be applied to the sensor information.

FIG. 12 is a flowchart of an example illustrating processing in the server system 2 according to the second modification of the first embodiment. In the first step S300, the server system 2 performs communication processing by the communication unit 200, and receives the sensor information transmitted from the terminal device 11 via the network 1. The processing in step S300 includes processing of receiving each piece of sensor information transmitted from each of the plurality of terminal devices 11.

In the next step S301, the sensing analysis unit 240 in the server system 2 acquires the sensor information received in the communication processing in step S300. In the next step S302, the sensing analysis unit 240 analyzes the sensor information acquired in step S301 to obtain an object or an object class included in the image data included in the sensor information. Hereinafter, an object will be described as an example among objects and object classes analyzed from image data.

The next step S303st represents a start of loop processing indicating execution of processing of step S303st to step S303ed for all the sensor information acquired in the communication processing of step S300. The next step S304st represents a start of loop processing indicating execution of processing of step S304st to step S304ed for all the application targets of each piece of sensor information, that is, for each of the recognizers 210.

In step S305, in the server system 2, based on each object included in the image data included in the target sensor information in step S302, the training data determination unit 241 examines whether the sensor information is applicable to the target recognizer 210 among the individual recognizers 210.

When the training data determination unit 241 has determined in step S306 that the target sensor information is applicable to the target recognizer 210 (step S306, "Yes"), the processing proceeds to step S307. In step S307, the training data accumulation unit 201 in the server system 2 executes accumulation processing of the training data of the application target. That is, in step S307, the training data accumulation unit 201 accumulates the target sensor information as training data for the target recognizer 210 determined to be applicable in step S306.

After the processing of step S307, the server system 2 returns the processing from step S304ed to step S304st, and the next recognizer 210 among the individual recognizers 210 is set as the target recognizer 210, and the processing of steps S305 and S306 is executed.

In contrast, when the training data determination unit 232 has determined in step S306 that the target sensor information is not applicable to the target recognizer 210 (step S306, "No"), the processing returns from step S304ed to step S304st.

After completion of the processing of steps S304st to S304ed for each of the recognizers 210 regarding the target sensor information, the server system 2 returns the processing from step S303ed to step S303st, and iterates the processing of steps S303st to S303ed on the next sensor information as target sensor information among the pieces of sensor information acquired in the communication processing of step S300.

After completion of the processing of steps S303st to S303ed for each piece of sensor information, the server system 2 proceeds to the processing of step S308. In step S308, the server system 2 causes the training unit 202 to perform retraining processing on the corresponding recognizer 210 by using each piece of sensor information accumulated in the training data accumulation unit 201 by the above-described processing, as training data. After completion of the processing of step S308, the server system 2 proceeds to the processing of step S309, and causes the learning result utilization unit 203 to execute the utilization processing of each recognizer 210 retrained in step S308.

In this manner, in the second modification of the first embodiment, the recognizer 210 to which the sensor information is applicable is selected based on the object or the object class included in the image data included in the sensor information transmitted from the terminal device 11. This makes it possible to use the sensor information with higher efficiency.

[3. Second embodiment]

Next, a second embodiment of the present disclosure will be described. In the first embodiment and its modifications described above, the server system 2 designates the recognizer 210 to which the sensor information transmitted from the terminal device 11 is to be applied. In contrast, in the second embodiment, the terminal device 11 designates the recognizer 210 to which the sensor information to be transmitted is to be applied. Furthermore, in the second embodiment, the terminal device 11 determines whether to transmit acquired sensor information to the server system 2.

FIG. 13 is a block diagram illustrating a configuration of an example of a driving assistance system according to the second embodiment. The driving assistance system illustrated in FIG. 13 uses the training data application determination unit 108 illustrated in FIG. 2 in the terminal device 11. In this case, for example, the training data application determination unit 22 on the server system 2 side transmits information indicating the recognizer 210 included in the server system 2 to the training data application determination unit 108 on the terminal device 11 side. In addition, in the second embodiment and its modifications described below, a transmission determination unit 107a plays a central role as illustrated as a colored area in the figure.

For example, similarly to the first embodiment described above, the training data application determination unit 108 determines to which of the recognizers 210 included in the server system 2 the sensor information is to be applied based on the metadata included in the sensor information acquired from the camera 12. The transmission determination unit 107a adds information indicating the recognizer 210 to which the sensor information is determined to be applied by the training data application determination unit 108 to the sensor information to be transmitted to the server system 2, and transmits the obtained sensor information to the server system 2. At this time, the transmission determination unit 107a determines whether to transmit the sensor information to the server system 2 based on metadata included in the sensor information, for example. This makes it possible to achieve efficient use of the sensor information as well as suppression of the communication cost for transmitting the sensor information.

FIG. 14 is a functional block diagram of an example illustrating functions of the terminal device 11 according to the second embodiment. In FIG. 14, the terminal device 11 includes an imaging unit 300, a recognition unit 101, a recognition result utilization unit 301, a training data application determination unit 108a, a transmission determination unit 107a, and a communication unit 110. The imaging unit 300, the recognition unit 101, the training data application determination unit 108a, the transmission determination unit 107a, and the communication unit 110 are actualized by an information processing program operating on the CPU 1001.

The imaging unit 300 controls the camera 12 to acquire image data based on a captured image and also acquires metadata related to imaging. The imaging unit 300 outputs the acquired image data and metadata, as sensor information. The recognition unit 101 executes the object recognition processing on the image data included in the sensor information output from the imaging unit 300 by using the recognizer 210 acquired from the server system 2 via the network 1, for example. The recognition result utilization unit 301 is included in a control system of the vehicle 10 equipped with the terminal device 11, and performs control such as obstacle avoidance according to a result of the object recognition processing, for example.

A metadata analysis unit 250 and a training data determination unit 222 are functionally equivalent to the metadata analysis unit 221 and the training data determination unit 222 described in the first embodiment, respectively, for example. For example, the metadata analysis unit 250 extracts metadata from the sensor information, and analyzes the extracted metadata. Based on the analysis result on the metadata, the training data determination unit 251 designates the recognizer 210 to which the sensor information is applicable among the plurality of recognizers 210 included in the server system 2.

The transmission determination unit 107a determines whether to transmit the sensor information acquired by the imaging unit 300 to the server system 2. For example, the transmission determination unit 107a determines whether to transmit the sensor information based on the sensor information. Transmission determination is not limited thereto, and the transmission determination unit 107a can determine whether to transmit the sensor information according to a recognition result of the recognition unit 101 based on the sensor information.

The communication unit 110 transmits the sensor information determined to be transmitted by the transmission determination unit 107a, to the server system 2 via the network 1.

FIG. 15 is a flowchart of an example illustrating processing in the terminal device 11 according to the second embodiment. In the first step S400, the terminal device 11 performs imaging processing by the imaging unit 300, and receives, from the camera 12, sensor information including image data based on the captured image and metadata related to imaging performed by the camera 12.

In the next step S401, the terminal device 11 causes the recognition unit 101 to perform object recognition processing based on the sensor information acquired in the imaging processing in step S400. In the next step S402, the terminal device 11 causes the recognition result utilization unit 301 to execute processing using the recognition result of the object recognition processing performed by the recognition unit 101.

In the next step S403, the metadata analysis unit 250 acquires metadata from the sensor information acquired in the imaging processing in step S400, and then executes analysis processing on the acquired metadata.

The next step S404st represents a start of loop processing indicating execution of processing of step S404st to step S404ed for all the application targets of the sensor information, that is, for each of the recognizers 210 included in the server system 2.

In step S405, in the terminal device 11, the metadata application determination processing is executed by the training data determination unit 251. That is, in step S405, the training data determination unit 251 examines, based on the metadata, whether the sensor information acquired in the imaging processing in step S400 is applicable to the target recognizer 210 among the individual recognizers 210. Here, the determination method described in the first embodiment is applicable to the training data determination unit 251. That is, the training data determination unit 251 determines a scene at the time of capturing the image data included in the sensor information regarding the sensor information based on a predetermined rule or learning, and designates the recognizer 210 to which the sensor information is to be applied as the training data for each determined scene, for example.

When the training data determination unit 251 has determined in the next step S406 that the sensor information is applicable to the target recognizer 210 (step S406, "Yes"), the processing proceeds to step S407. In step S407, the accumulation determination unit 103 in the terminal device 11 executes accumulation processing of the training data of the application target. That is, in step S407, the accumulation determination unit 103 determines to accumulate the sensor information as training data for the target recognizer 210 determined to be applicable in step S406. In accordance with this determination, the accumulation unit 104 stores and accumulates the sensor information in the storage unit 105.

After the processing of step S407, the terminal device 11 returns the processing from step S404ed to step S404st, and executes the processing of steps S405 to S407 on the next recognizer 210 as the target recognizer 210 among the individual recognizers 210.

In contrast, when it is determined in step S406 that the target sensor information is not applicable to the target recognizer 210 (step S406, "No"), the processing returns from step S404ed to step S404st.

After completion of the processing of steps S404st to S404ed for each of the recognizers 210 regarding the sensor information, the terminal device 11 proceeds to the processing of step S408. In step S408, the terminal device 11 determines whether the number of recognizers 210 determined by the transmission determination unit 107a as application targets of the sensor information in the processing of steps S404st to S404ed is sufficient (for example, whether the number exceeds a threshold). When the transmission determination unit 107a determines that the number of the recognizers 210 determined as the application targets of the sensor information is not sufficient, the transmission determination unit 107a ends a series of processing according to the flowchart of FIG. 15 without transmitting the sensor information to the server system 2.

In contrast, when the transmission determination unit 107a has determined in step S408 that the number of the recognizers 210 determined as the application targets of the sensor information is sufficient, the processing proceeds to step S409. In step S409, the transmission determination unit 107a performs transmission processing of the sensor information. For example, the transmission determination unit 107a adds information indicating each of the recognizers 210 determined to be applicable by the processing of steps S404st to S404ed to the sensor information stored in the storage unit 105 in step S407.

In the next step S410, the sensor information to which the information indicating each recognizer 210 has been added is read from the storage unit 105 and then transmitted by the communication unit 110 to the server system 2 via the network 1. The server system 2 stores the sensor information transmitted from the terminal device 11 in the storage unit 20 in association with each of the recognizers 210 as training data for performing retraining of each of the recognizers 210 based on the information indicating each of the recognizers 210 added to the sensor information.

In this manner, the second embodiment makes a determination as to whether the sensor information including the image data based on the captured image and including the metadata, output from the camera 12, is applicable to each recognizer 210 of the server system 2 based on the metadata. Therefore, the terminal device 11 can apply the sensor information acquired from the camera 12 as the training data to a recognition machine different from the recognizer used for the sensor information by the terminal device 11, making is possible to utilize the sensor information as training data with higher efficiency. Furthermore, the terminal device 11 causes the transmission determination unit 107a to determine whether to transmit the sensor information to the server system 2 based on the metadata included in the sensor information, for example. This makes it possible to suppress the communication cost for transmitting the sensor information.

Although the above description is an exemplary case where the transmission determination unit 107a determines whether to transmit the sensor information to the server system 2 based on the metadata included in the sensor information, determination is not limited to this example. For example, the transmission determination unit 107a may determine whether to transmit the sensor information to the server system 2 based on a recognition score included in a recognition result for image data included in the sensor information, obtained by the recognition unit 101. In this case, for example, it is conceivable that the transmission determination unit 107a transmits the sensor information to the server system 2 when the recognition score is a predetermined value or less. In the server system 2, the recognition performance can be further improved by implementing training based on the sensor information having such a low recognition score.

(3-1. First modification)

Next, a first modification of the second embodiment will be described. The first modification of the second embodiment is an example in which the terminal device 11 determines whether to transmit the acquired sensor information to the server system 2 based on the immediacy of the sensor information. In the first modification of the second embodiment, the configuration of the driving assistance system according to the first embodiment described with reference to FIG. 13 is applicable.

This point will be described more specifically. The sensor information acquired by the camera 12 sometimes include pieces of information having significantly different orders of time constants at the same time. As an example, there is a great temporal difference from the occurrence of the information until the point where a response is necessary between information regarding lens aging degradation correction included in the metadata of sensor information and the pedestrian recognition processing performed based on image data. In view of this, the first modification of the second embodiment obtains the degree of necessity of immediate transmission for each purpose of use regarding the target sensor information, and transmits sensor information to the server system 2 with priority given the sensor information with immediate necessity. Sensor information with less immediacy is accumulated and is not transmitted at the point of acquisition.

FIG. 16 is a functional block diagram of an example illustrating functions of the terminal device 11 according to the first modification of the second embodiment. In FIG. 16, compared to the configuration of the terminal device 11 according to the second embodiment described with reference to FIG. 14, the terminal device 11 has a configuration in which a training data immediacy calculation unit 152 and a training data immediacy determination unit 153 are inserted between the training data application determination unit 108a and the transmission determination unit 107a.

The training data immediacy calculation unit 151 calculates the immediacy of the sensor information designated to be applied to the recognizer 210 by the training data determination unit 251. For example, the training data immediacy calculation unit 151 calculates the immediacy of the sensor information according to the purpose of use of the recognizer 210 to which application of the sensor information has been designated by the training data determination unit 251. The training data immediacy determination unit 153 determines the immediacy of the sensor information based on the calculated immediacy.

In the above-described example, the recognizer 210 performs recognition related to lens aging correction. When the span of change in the recognized content is long, the training data immediacy calculation unit 152 obtains the next correction timing based on metadata of the sensor information, for example, and calculates a difference between the timing and the current time. When the calculated difference is longer than a threshold, the training data immediacy determination unit 153 determines that the sensor information has low immediacy. In another example described above, in a case where the recognizer 210 performs pedestrian recognition, the training data immediacy determination unit 153 determines that the immediacy of the sensor information is high.

A transmission determination unit 107b determines whether to transmit the sensor information to the server system 2 according to the immediacy determined by the training data immediacy determination unit 153. That is, the transmission determination unit 107b determines that the sensor information determined to have high immediacy will be transmitted to the server system 2 at that point. In contrast, the transmission determination unit 107b determines that the sensor information determined to have low immediacy does not need to be transmitted at that point, and accumulates the sensor information in the storage unit 105 by the accumulation unit 104, for example.

The communication unit 110 immediately transmits the sensor information determined to be transmitted by the transmission determination unit 107b to the server system 2.

FIG. 17 is a flowchart of an example illustrating processing in the terminal device 11 according to the first modification of the second embodiment. In the first step S500, the terminal device 11 performs imaging processing by the imaging unit 300, and acquires, from the camera 12, sensor information including image data based on a captured image and including metadata related to imaging by the camera 12.

In the next step S501, the terminal device 11 causes the recognition unit 101 to perform object recognition processing based on the sensor information acquired in the imaging processing of step S500. In the next step S502, the terminal device 11 causes the recognition result utilization unit 301 to execute processing using the recognition result obtained in the object recognition processing performed by the recognition unit 101.

In the next step S503, the metadata analysis unit 250 acquires metadata from the sensor information acquired in the imaging processing in step S500, and executes analysis processing on the acquired metadata.

The next step S504st represents a start of loop processing indicating execution of processing of step S504st to step S504ed for all the application targets of the sensor information, that is, for each of the recognizers 210 included in the server system 2.

In step S505, in the terminal device 11, the metadata application determination processing is executed by the training data determination unit 251. That is, in step S505, the training data determination unit 251 examines, based on the metadata, whether the sensor information acquired in the imaging processing in step S500 is applicable to the target recognizer 210 among the individual recognizers 210. Here, the determination method described in the first embodiment is applicable to the training data determination unit 251. That is, the training data determination unit 251 determines a scene at the time of capturing the image data included in the sensor information regarding the sensor information based on a predetermined rule or learning, and designates the recognizer 210 to which the sensor information is to be applied as the training data for each determined scene, for example.

When the training data determination unit 251 has determined in the next step S506 that the sensor information is applicable to the target recognizer 210 (step S506, "Yes"), the processing proceeds to step S507. In step S507, the accumulation determination unit 103 in the terminal device 11 executes accumulation processing of the training data of the application target. That is, in step S507, the accumulation determination unit 103 determines to accumulate the sensor information as training data for the target recognizer 210 determined to be applicable in step S506. In accordance with this determination, the accumulation unit 104 stores and accumulates the sensor information in the storage unit 105.

After the processing of step S507, the terminal device 11 returns the processing from step S504ed to step S504st, and executes the processing of steps S505 to S507 on the next recognizer 210 as the target recognizer 210 among the individual recognizers 210.

In contrast, when it is determined in step S506 that the target sensor information is not applicable to the target recognizer 210 (step S506, "No"), the processing returns from step S504ed to step S504st.

After completion of the processing of steps S504st to S504ed for each of the recognizers 210 regarding the sensor information, the terminal device 11 proceeds to the processing of step S508. In step S508, the terminal device 11 calculates the immediacy of the sensor information by the training data immediacy calculation unit 152. In the next step S509, the terminal device 11 causes the training data immediacy determination unit 153 to determine the immediacy of the sensor information.

In the next step S510, the terminal device 11 causes the transmission determination unit 107b to determine whether to transmit the sensor information to the server system 2 based on the immediacy determined in step S509. When it is determined that the immediacy of the sensor information is low, the transmission determination unit 107b determines not to transmit the sensor information to the server system 2 (step S510, "No"), and ends the series of processing of the flowchart of FIG. 17.

In contrast, when it is determined in step S510 that the immediacy of the sensor information is high, the transmission determination unit 107b determines to transmit the sensor information to the server system 2 (step S510, "Yes"), and proceeds to the processing of step S511. In step S511, the transmission determination unit 107b performs transmission processing of the sensor information. For example, the transmission determination unit 107b adds, to the sensor information, information indicating the recognizer 210 determined to be applicable by the processing of steps S504st to S504ed.

In the next step S512, the sensor information to which the information indicating each recognizer 210 has been added is transmitted to the server system 2 via the network 1 by the communication unit 110. The server system 2 stores the sensor information transmitted from the terminal device 11 in association with the recognizer 210 in the storage unit 20 as training data for performing retraining of the recognizer 210 based on the information indicating the recognizer 210 added to the sensor information.

In this manner, in the first modification of the second embodiment, whether to transmit the sensor information to the server system 2 is determined based on the immediacy of the sensor information. This makes it possible to suppress the communication cost for transmitting the sensor information.

(3-2. Second modification)

Next, a second modification of the second embodiment will be described. The second modification of the second embodiment is an example in which the terminal device 11 determines whether to transmit the acquired sensor information to the server system 2 based on the rarity of the sensor information. In the second modification of the second embodiment, the configuration of the driving assistance system according to the first embodiment described with reference to FIG. 13 can be applied.

This point will be described more specifically. Some sensor information acquired by the camera 12 is rare and needs to be collected early. For example, sensor information regarding a newly introduced road or traffic system is preferably reflected in training data as early as possible. In order to collect such sensor information, a region involving occurrence of a situation having a need of early collection is set in advance or occasionally by communication such as V2X, and the sensor information acquired in the region is determined as information to be transmitted to the server system 2.

FIG. 18 is a functional block diagram of an example illustrating functions of the terminal device 11 according to the second modification of the second embodiment. In FIG. 18, as compared with the configuration of the terminal device 11 according to the second embodiment described with reference to FIG. 14, the terminal device 11 has a configuration in which the training data application determination unit 108a is omitted and a rarity analysis unit 310 and a rarity determination unit 311 have been added.

The sensor information acquired by the imaging unit 300 is input to a transmission determination unit 107e via the recognition unit 101. On the other hand, the rarity analysis unit 310 analyzes the rarity of an event in a range captured by the camera 12. The rarity determination unit 311 determines the rarity of the event analyzed by the rarity analysis unit 310.

For example, the rarity analysis unit 310 performs processing of setting a region including a rare event by communication with the outside, user setting, or the like. Furthermore, the rarity analysis unit 310 acquires positional information indicating the current position from the GNSS receiver 1007 included in the terminal device 11, for example. Based on the analysis result of the rarity analysis unit 310, the rarity determination unit 311 determines whether an imaging range captured by the camera 12 includes a set region. For example, based on the positional information indicating the current position acquired by the rarity analysis unit 310 and the set region, the rarity determination unit 311 determines that there is rarity in the sensor information acquired from the camera 12 when the acquired positional information corresponds to the set region.

The transmission determination unit 107c determines whether to transmit the sensor information acquired from the camera 12 to the server system 2 in accordance with the determination result of the rarity determination unit 311. The communication unit 110 transmits the sensor information determined to be transmitted by the transmission determination unit 107c, to the server system 2 via the network 1.

FIG. 19 is a flowchart of an example illustrating processing in the terminal device 11 according to the second modification of the second embodiment. In the first step S600, the terminal device 11 performs imaging processing by the imaging unit 300, and receives, from the camera 12, sensor information including image data based on the captured image and metadata related to imaging performed by the camera 12.

In the next step S601, the terminal device 11 causes the recognition unit 101 to perform object recognition processing based on the sensor information acquired in the imaging processing of step S600. In the next step S602, the terminal device 11 causes the recognition result utilization unit 301 to execute processing using the recognition result obtained in the object recognition processing performed by the recognition unit 101.

In the next step S603, the rarity analysis unit 310 acquires metadata from the set sensor information acquired in the imaging processing in step S600, and executes analysis processing on the acquired metadata. In the next step S604, the rarity analysis unit 310 analyzes the rarity. For example, the rarity analysis unit 310 acquires positional information indicating the current position and information regarding the set region.

In the next step S605, based on the analysis result in step S604, the rarity determination unit 311 determines whether the sensor information is applicable to the recognizer 210 trained by using the sensor information having rarity. For example, when the current position is a position corresponding to the region based on the positional information indicating the current position and the information indicating the set region, the rarity determination unit 311 can determine that the sensor information acquired from the camera 12 is sensor information having rarity.

In the next step S606, when the rarity determination unit 311 has determined that the sensor information is applicable to the recognizer 210 trained by using the sensor information having rarity (step S606, "Yes"), the processing proceeds to step S607. In step S607, the terminal device 11 performs transmission processing of the sensor information by the transmission determination unit 107c. For example, the transmission determination unit 107c adds information indicating that there is rarity to the sensor information. The sensor information having the added information is transmitted to the server system 2 by the communication unit 110 via the network 1.

On the other hand, in a case where it is determined in step S606 that the sensor information is not applicable to the recognizer 210 trained by using the sensor information having rarity, the series of processing according to the flowchart of FIG. 19 is terminated without transmitting the sensor information to the server system 2.

In this manner, in the second modification of the second embodiment, it is determined whether to transmit the sensor information to the server system 2 based on the rarity of the sensor information. This makes it possible to suppress the communication cost for transmitting the sensor information.

(3-3. Third modification)

Next, a third modification of the second embodiment will be described. The third modification of the second embodiment is an example having a capability of avoiding the transmission of duplicated sensor information from a plurality of vehicles 10. In the third modification of the second embodiment, the configuration of the driving assistance system according to the first embodiment described with reference to FIG. 13 is applicable.

That is, when a plurality of vehicles 10 having a sensor information transmission function exists in relatively close proximity, for example, there is a possibility that a plurality of pieces of similar sensor information will be transmitted from the plurality of vehicles 10 to the server system 2. Therefore, in the third modification of the second embodiment, a plurality of vehicles 10 existing in proximity has a capability to transmit mutually different data to the server system 2. More specifically, in the third modification of the second embodiment, the target vehicle 10 (hereinafter, target vehicle) transmits and receives metadata of the sensor information to be transmitted to and from the surrounding vehicles 10 so as to suppress transmission of sensor information similar to the sensor information already transmitted by another vehicle 10 from the target vehicle.

FIG. 20 is a functional block diagram of an example illustrating functions of the terminal device 11 according to the third modification of the second embodiment. In FIG. 20, the terminal device 11 of the target vehicle includes an imaging unit 300, a recognition unit 101, a recognition result utilization unit 301, a transmission determination unit 107d, a communication unit 110a, a non-target-vehicle data accumulation unit 320, and a storage unit 321. In addition, as compared to the target vehicle, other vehicles $10_1$, $10_2$, $10_3$,... each include an imaging unit 300, a recognition unit 101, a recognition result utilization unit 301, a transmission determination unit 107, and a communication unit 110. Vehicle configuration is not limited to this, and each of the other vehicles $10_1$, $10_2$, $10_3$,... may have a configuration similar to the target vehicle.

The imaging unit 300, the recognition unit 101, and the recognition result utilization unit 301 have functions equivalent to those of the imaging unit 300, the recognition unit 101, and the recognition result utilization unit 301 illustrated in FIG. 14, for example, and thus, description thereof is omitted here.

In FIG. 20, the communication unit 110a communicates with the communication unit 110 of the other vehicles $10_1$, $10_2$, $10_3$,..., and acquires information indicating sensor information already transmitted to the server system 2 by the other vehicles $10_1$, $10_2$, $10_3$,....

For example, in the target vehicle, the recognition unit 101 performs object recognition processing on image data included in the sensor information acquired from the camera 12, and passes a recognition result to the transmission determination unit 107d. Similarly, in each of the vehicles $10_1$, $10_2$, $10_3$,..., the recognition unit 101 performs object recognition processing on the image data included in the sensor information acquired from the camera 12, and passes the recognition result to each of the transmission determination units 107d.

The communication unit 110a communicates with each of the vehicles $10_1$, $10_2$, $10_3$,..., and requests information indicating sensor information to be transmitted to each of the vehicles $10_1$, $10_2$, $10_3$,.... In response to this request, each of the transmission determination units 107 of the vehicles $10_1$, $10_2$, $10_3$,... transmits, for example, metadata included in the sensor information and the recognition result to the target vehicle via the network 1.

In the terminal device 11 mounted on the target vehicle, the communication unit 110a passes the metadata and the recognition result received from each of the vehicles $10_1$, $10_2$, $10_3$,... to the non-target-vehicle data accumulation unit 320. The non-target-vehicle data accumulation unit 320 accumulates the received metadata and the recognition result in the storage unit 321.

Based on the recognition result passed from the recognition unit 101 and the metadata included in the sensor information, the transmission determination unit 107d determines whether the already-transmitted data corresponding to the recognition result and the metadata is accumulated in the storage unit 321. When the data is not accumulated, the transmission determination unit 107d transmits the recognition result and the metadata to the server system 2 via the communication unit 110a. In contrast, when the data is accumulated, the recognition result and the metadata will not be transmitted.

In this manner, by avoiding transmission of duplicated sensor information among the plurality of vehicles 10, it is possible to reduce the communication cost.

FIG. 21 is a flowchart of an example illustrating processing in the terminal device 11 according to the third modification of the second embodiment. In FIG. 21, the processing of steps S700 to S709 illustrated in section (a) and the processing of steps S720 to S721 illustrated in section (b) are processing that operates independently of each other by mutually different threads, for example. Furthermore, the processing in sections (a) and (b) is processing executed by the terminal device 11 mounted on the target vehicle.

First, the processing of section (b) will be described. In step S720, the communication unit 110a performs reception processing for receiving non-target-vehicle transmission information. For example, the communication unit 110a requests metadata of the transmitted sensor information and the recognition result based on the sensor information to each of the other vehicles $10_1$, $10_2$, $10_3$,.... In the next step S721, the communication unit 110a performs accumulation processing of accumulating the non-target-vehicle transmission information according to the request in step S720 in the storage unit 321 by the non-target-vehicle data accumulation unit 320. For example, in response to the request in step S720, the communication unit 110a receives sets of the metadata and the recognition result transmitted from the other vehicles $10_1$, $10_2$, $10_3$,..., and passes the received sets of the metadata and the recognition result to the non-target-vehicle data accumulation unit 320. The non-target-vehicle data accumulation unit 320 stores and accumulates the sets of the metadata and the recognition result passed from the communication unit 110a in the storage unit 321.

The processing in steps S720 and S721 in section (b) is executed occasionally.

Next, the processing of section (a) will be described. In the first step S700, the terminal device 11 performs imaging processing by the imaging unit 300, and acquires, from the camera 12, sensor information including image data based on a captured image and including metadata related to imaging by the camera 12.

In the next step S701, the terminal device 11 causes the recognition unit 101 to perform object recognition processing based on the sensor information acquired in the imaging processing of step S700. In the next step S702, the terminal device 11 causes the recognition result utilization unit 301 to execute processing using the recognition result obtained in the object recognition processing performed by the recognition unit 101. Furthermore, the recognition unit 101 passes the recognition result and the metadata included in the sensor information to the transmission determination unit 107d.

The next step S703st indicates the start of loop processing indicating that the processing is to be executed in steps S703st to S703ed for all the non-target-vehicle data (the recognition result and the metadata) accumulated in the storage unit 321 in step S721 of section (b).

In step S704, the transmission determination unit 107d requests the non-target-vehicle data accumulation unit 320 to read one set of the metadata and the recognition result accumulated in the storage unit 321, and acquires the set of the metadata and the recognition result read from the storage unit 321 in response to the request.

In the next step S705, the transmission determination unit 107d determines whether the set of the metadata and the recognition result read from the storage unit 321 in step S704 is data close to the set of the metadata and the recognition result passed from the recognition unit 101 in step S702. For example, the transmission determination unit 107d obtains the similarity between the individual recognition results, and when the obtained similarity is a threshold or less, the transmission determination unit 107d can determine that the set of the metadata and the recognition result read from the storage unit 321 is data close to the set of the metadata and the recognition result passed from the recognition unit 101. The comparison method is not limited to this and the determination may be made by comparing the pieces of metadata.

Having determined that the two sets are data close to each other (step S706, "Yes"), the transmission determination unit 107d proceeds to processing of step S706, and sets a non-transmit flag in the set of the metadata and the recognition result read from the storage unit 321. After the processing of step S706, the transmission determination unit 107d returns the processing from step S703ed to step S703st, and executes the processing from step S704 on the next set of the metadata and the recognition result accumulated in the storage unit 321.

In contrast, when having determined that the sets of data are not data close to each other (step S705, "No"), the transmission determination unit 107d returns the processing from step S703ed to step S703st, and executes the processing from step S704 on the next set of the metadata and the recognition result accumulated in the storage unit 321.

After completion of the processing of step S704 and step S705 for all the sets of the metadata and the recognition result accumulated in the storage unit 321, the transmission determination unit 107d proceeds to the processing of step S707.

In step S707, the transmission determination unit 107d determines the presence or absence of a set of the metadata and the recognition result to which the non-transmit flag is set in step S706 among all sets of the metadata and the recognition result accumulated in the storage unit 321. When the transmission determination unit 107d has determined that the non-transmit flag is not set in all the sets of the metadata and the recognition result accumulated in the storage unit 321 (step S707, "Yes"), the processing proceeds to step S708.

In step S708, the transmission determination unit 107d passes the sensor information corresponding to the set of the metadata and the recognition result passed from the recognition unit 101 in step S702 to the communication unit 110a, and performs transmission processing for transmitting the sensor information to the server system 2. In the next step S709, the communication unit 110a transmits the sensor information passed from the transmission determination unit 107d to the server system 2 via the network 1.

In contrast, when having determined, in step S707, that there is at least one set of the metadata and the recognition result to which the non-transmit flag is set in step S706 among all the sets of the metadata and the recognition result accumulated in the storage unit 321 (step S707, "No"), the transmission determination unit 107d ends the series of processing of the flowchart in section (a) in FIG. 21 without performing the transmission processing of the sensor information.

In this manner, the third modification of the second embodiment suppress transmission of sensor information close to the sensor information already transmitted by the other vehicle 10, making it possible to reduce the communication cost for transmitting the sensor information.

[4. Third embodiment]

Next, a third embodiment will be described. The third embodiment relates to sensor information that has not been transmitted to the server system 2 in the second embodiment described above, and is applicable to any of the second embodiment and their modifications. Here, for the sake of explanation, the processing according to the third embodiment will be described as being applied to the second embodiment described above.

FIG. 22 is a block diagram illustrating a configuration of an example of a driving assistance system according to the third embodiment. The configuration illustrated in FIG. 22 is equivalent to the configuration described in the second embodiment with reference to FIG. 13. However, as illustrated in FIG. 22 as a colored area, an accumulation determination unit 103, an accumulation unit 104, and an accumulated information output unit 106 play main roles.

Specifically, there may be a case where sensor information that has not been transmitted in the above-described second embodiment and the like is also necessary. Therefore, in the third embodiment, the sensor information that has not been transmitted is stored and accumulated in the storage unit 105 by the accumulation unit 104. Thereafter, at an arbitrary timing, the sensor information is output from the accumulated information output unit 106 by direct connection which is not via the Internet or the like, such as cable connection or a local area network (LAN) .

FIG. 23 is a functional block diagram of an example illustrating functions of the terminal device 11 according to the third embodiment. Since the basic configuration is similar to the configuration of the terminal device 11 according to the second embodiment described with reference to FIG. 14, a detailed description thereof will be omitted. In the terminal device 11 according to the third embodiment, the transmission determination unit 107e passes the sensor information determined not to be transmitted, to the accumulation unit 104, and the accumulation unit 104 stores and accumulates the received sensor information in the storage unit 105. When an external device capable of collecting sensor information is connected, the accumulated information output unit 106 requests the accumulation unit 104 for the sensor information accumulated in the storage unit 105, and outputs the sensor information read from the storage unit 105 by the accumulation unit 104 to the external device.

FIG. 24 is a flowchart illustrating an example of processing in the terminal device 11 according to the third embodiment. In FIG. 24, the processing of steps S820 to S821 illustrated in section (b) is processing to be started when an external device is connected to the accumulated information output unit 106, for example.

First, the processing of section (a) will be described. The processing of section (a) is substantially the same as the processing according to the second embodiment described with reference to FIG. 15. That is, in the first step S800, the terminal device 11 performs the imaging processing by the imaging unit 300, and receives, from the camera 12, sensor information including the image data based on the captured image and the metadata related to the imaging by the camera 12. In the next step S801, the terminal device 11 causes the recognition unit 101 to perform object recognition processing based on the sensor information acquired in the imaging processing in step S800. In the next step S802, the terminal device 11 causes the recognition result utilization unit 301 to execute processing using the recognition result by the object recognition processing of the recognition unit 101.

In the next step S803, the metadata analysis unit 250 acquires metadata from the sensor information acquired in the imaging processing in step S800, and executes analysis processing on the acquired metadata.

The next step S804st represents a start of loop processing indicating execution of processing of step S804st to step S804ed for all the application targets of the sensor information, that is, for each of the recognizers 210 included in the server system 2.

In step S805, in the terminal device 11, the metadata application determination processing is executed by the training data determination unit 251. That is, in step S805, the training data determination unit 251 examines, based on the metadata, whether the sensor information acquired in the imaging processing in step S800 is applicable to the target recognizer 210 among the individual recognizers 210 by using the determination method described in the first embodiment, for example

When the training data determination unit 251 has determined in the next step S806 that the sensor information is applicable to the target recognizer 210 (step S806, "Yes"), the processing proceeds to step S807. In step S807, the accumulation determination unit 103 in the terminal device 11 executes accumulation processing of the training data of the application target. That is, in step S807, the accumulation determination unit 103 determines to accumulate the sensor information as training data for the target recognizer 210 determined to be applicable in step S806. In accordance with this determination, the accumulation unit 104 stores and accumulates the sensor information in the storage unit 105.

After the processing of step S807, the terminal device 11 returns the processing from step S804ed to step S804st, and executes the processing of steps S805 to S807 on the next recognizer 210 as the target recognizer 210 among the individual recognizers 210.

In contrast, when it is determined in step S806 that the target sensor information is not applicable to the target recognizer 210 (step S806, "No"), the processing returns from step S804ed to step S804st.

After completion of the processing of steps S804st to S804ed for each of the recognizers 210 regarding the sensor information, the terminal device 11 proceeds to the processing of step S808. In step S808, the terminal device 11 determines whether the number of recognizers 210 determined by the transmission determination unit 107e as application targets of the sensor information in the processing of steps S804st to S804ed is sufficient (for example, whether the number exceeds a threshold).

Having determined that the number of the recognizers 210 determined as the application targets of the sensor information is not sufficient, the transmission determination unit 107e proceeds to the processing of step S811. In step S811, the transmission determination unit 107e performs accumulation processing of sensor information. For example, the transmission determination unit 107e instructs the accumulation unit 104 to continue to hold the sensor information accumulated in the storage unit 105 in step S807. The end of the accumulation processing completes the series of processing according to the flowchart of section (a) of FIG. 24.

In contrast, when the transmission determination unit 107e has determined in step S808 that the number of the recognizers 210 determined as the application targets of the sensor information is sufficient, the processing proceeds to step S809. In step S809, the transmission determination unit 107e performs transmission processing of the sensor information. For example, the transmission determination unit 107e adds information indicating each of the recognizers 210 determined to be applicable by the processing of steps S804st to S804ed to the sensor information accumulated in the storage unit 105 in step S807.

In the next step S810, the sensor information to which the information indicating each recognizer 210 has been added is read from the storage unit 105 and then transmitted by the communication unit 110 to the server system 2 via the network 1. The accumulation unit 104 deletes the transmitted sensor information from the storage unit 105. The server system 2 stores the sensor information transmitted from the terminal device 11 in the storage unit 20 in association with each of the recognizers 210 as training data for performing retraining of each of the recognizers 210 based on the information indicating each of the recognizers 210 added to the sensor information.

The processing of section (b) will be described. When the external device is directly connected by a cable or the like, the accumulated information output unit 106 executes processing of connecting with the external device in step S820. When the connection with the external device is established, the accumulated information output unit 106 issues an instruction to the accumulation unit 104 to read the accumulated sensor information from the storage unit 105. The accumulated information output unit 106 transmits each piece of sensor information read from the storage unit 105 by the accumulation unit 104 to the external device.

In this manner, in the third embodiment, the sensor information that has not been transmitted to the server system 2 by the transmission determination unit 107e can be output to the external device at an arbitrary timing. With this configuration, it is possible to efficiently use the sensor information without increasing a communication cost by the network 1.

(4-1. First modification)

Next, a first modification of the third embodiment will be described. The first modification of the third embodiment relates to sensor information that has not been transmitted to the server system 2 in the second embodiment and their modifications described above, and is applicable to any of the second embodiment and their modifications. Here, for the sake of explanation, the processing according to the third embodiment will be described as being applied to the second embodiment described above.

The communication cost at transmission of sensor information from the terminal device 11 to the server system 2 via the network 1 varies in cases, for example, where a Wi-Fi (registered trademark) hot spot is used to connect to the network 1 or where communication is performed at a timing with a low communication load. Therefore, in the first modification of the third embodiment, a network communication fee plan (hourly communication fee information) and a communication plan (hourly communication amount plan) are set in advance, or set by communication such as V2X. In addition, accumulated sensor information is to be transmitted at a timing when the communication cost is low, in a time zone when the communication load is not high, in a case where the communication amount in the own vehicle is small, and the like.

FIG. 25 is a functional block diagram of an example illustrating functions of the terminal device 11 according to the first modification of the third embodiment. Since the basic configuration is similar to the configuration of the terminal device 11 according to the second embodiment described with reference to FIG. 14, a detailed description thereof will be omitted. In the terminal device 11 according to the first modification of the third embodiment, the transmission determination unit 107e passes the sensor information determined not to be transmitted, to the accumulation unit 104, and the accumulation unit 104 stores and accumulates the sensor information in the storage unit 105. At a timing when the communication cost is low, in a time zone where the communication load is not high, when the communication amount in the own vehicle is small, or the like, the transmission determination unit 107e reads the accumulated sensor information from the storage unit 105 and transmits the sensor information to the server system 2 via the network 1.

FIG. 26 is a flowchart of an example illustrating processing in the terminal device 11 according to the first modification of the third embodiment. In FIG. 26, the processing of steps S900 to S911 illustrated in section (a) and the processing of steps S920 to S924 illustrated in section (b) are processing that operates independently of each other by mutually different threads, for example.

First, the processing of section (a) will be described. The processing of section (a) is substantially the same as the processing according to the second embodiment described with reference to FIG. 15. That is, in the first step S900, the terminal device 11 performs the imaging processing by the imaging unit 300, and receives, from the camera 12, sensor information including the image data based on the captured image and the metadata related to the imaging by the camera 12. In the next step S901, the terminal device 11 causes the recognition unit 101 to perform object recognition processing based on the sensor information acquired in the imaging processing in step S900. In the next step S902, the terminal device 11 causes the recognition result utilization unit 301 to execute processing using the recognition result by the object recognition processing of the recognition unit 101.

In the next step S903, the metadata analysis unit 250 acquires metadata from the sensor information acquired in the imaging processing in step S900, and executes analysis processing on the acquired metadata.

The next step S904st represents a start of loop processing indicating execution of processing of step S904st to step S904ed for all the application targets of the sensor information, that is, for each of the recognizers 210 included in the server system 2.

In step S905, in the terminal device 11, the metadata application determination processing is executed by the training data determination unit 251. That is, in step S905, the training data determination unit 251 examines, based on the metadata, whether the sensor information acquired in the imaging processing in step S900 is applicable to the target recognizer 210 among the individual recognizers 210 by using the determination method described in the first embodiment, for example.

When the training data determination unit 251 has determined in the next step S906 that the sensor information is applicable to the target recognizer 210 (step S906, "Yes"), the processing proceeds to step S907. In step S907, the accumulation determination unit 103 in the terminal device 11 executes accumulation processing of the training data of the application target. That is, in step S907, the accumulation determination unit 103 determines to accumulate the sensor information as training data for the target recognizer 210 determined to be applicable in step S906. In accordance with this determination, the accumulation unit 104 stores and accumulates the sensor information in the storage unit 105.

After the processing of step S907, the terminal device 11 returns the processing from step S904ed to step S904st, and executes the processing of steps S905 to S907 on the next recognizer 210 as the target recognizer 210 among the individual recognizers 210.

In contrast, when it is determined in step S906 that the target sensor information is not applicable to the target recognizer 210 (step S906, "No"), the processing returns from step S904ed to step S904st.

After completion of the processing of steps S904st to S904ed for each of the recognizers 210 regarding the sensor information, the terminal device 11 proceeds to the processing of step S908. In step S908, the terminal device 11 determines whether the number of recognizers 210 determined by the transmission determination unit 107e as application targets of the sensor information in the processing of steps S904st to S904ed is sufficient (for example, whether the number exceeds a threshold).

When the transmission determination unit 107e has determined in step S908 that the number of the recognizers 210 determined as the application targets of the sensor information is not sufficient (step S908, "No"), the processing proceeds to step S911. In step S911, the transmission determination unit 107e performs accumulation processing of sensor information. For example, the transmission determination unit 107e instructs the accumulation unit 104 to continue to hold the sensor information accumulated in the storage unit 105 in step S907. The end of the accumulation processing completes the series of processing according to the flowchart of section (a) of FIG. 26.

In contrast, when the transmission determination unit 107e has determined in step S908 that the number of the recognizers 210 determined as the application targets of the sensor information is sufficient (step S908, "Yes"), the processing proceeds to step S909. In step S909, the transmission determination unit 107e performs transmission processing of the sensor information. For example, the transmission determination unit 107e adds information indicating each of the recognizers 210 determined to be applicable by the processing of steps S904st to S904ed to the sensor information accumulated in the storage unit 105 in step S907.

In the next step S910, the sensor information to which the information indicating each recognizer 210 has been added is read from the storage unit 105 and then transmitted by the communication unit 110 to the server system 2 via the network 1. The accumulation unit 104 deletes the transmitted sensor information from the storage unit 105. The server system 2 stores the sensor information transmitted from the terminal device 11 in the storage unit 20 in association with each of the recognizers 210 as training data for performing retraining of each of the recognizers 210 based on the information indicating each of the recognizers 210 added to the sensor information.

Next, the processing of section (b) will be described. In step S920, the transmission determination unit 107e performs connection processing of connecting to the network 1 by the communication unit 110. In the next step S921, the transmission determination unit 107e performs estimation processing of estimating the communication cost in the network 1. For example, the transmission determination unit 107e estimates the communication cost based on a communication plan, a fee plan, a time zone, traffic of the network 1, and the like regarding the connection to the network 1.

In the next step S922, the transmission determination unit 107e determines whether the communication cost estimated in step S921 is low, for example, whether the communication cost is less than a predetermined value. In a case where the transmission determination unit 107e determines that the estimated communication cost is high (step S922, "No"), the transmission determination unit 107e ends the series of processing in the flowchart of this section (b) without transmitting the sensor information accumulated in the storage unit 105.

In contrast, when having determined, in step S922, that the communication cost estimated in step S921 is low (step S922, "Yes"), the transmission determination unit 107e proceeds to the processing of step S923. In step S923, the transmission determination unit 107e performs transmission processing of the sensor information accumulated in the storage unit 105. For example, the transmission determination unit 107e instructs the accumulation unit 104 to read the sensor information accumulated in the storage unit 105.

In the next step S924, the transmission determination unit 107e transmits the sensor information read from the storage unit 105 by the accumulation unit 104 in response to the instruction in step S923 to the server system 2 via the network 1 by the communication unit 110. The accumulation unit 104 deletes the transmitted sensor information from the storage unit 105.

In this manner, in the first modification of the third embodiment, the sensor information accumulated in the storage unit 105 without being transmitted to the server system 2 at the time of acquisition is to be transmitted to the server system 2 via the network 1 according to the communication cost. This makes it possible to reduce the communication cost related to the transmission of the sensor information.

(4-2. Second modification)

Next, a second modification of the third embodiment will be described. The second modification of the third embodiment relates to sensor information that has not been transmitted to the server system 2 in the second embodiment and their modifications described above, and is applicable to any of the second embodiment and their modifications. Here, for the sake of explanation, the processing according to the second modification of the third embodiment will be described as being applied to the second embodiment described above.

In the second modification of the third embodiment, the sensor information that has not been transmitted to the server system 2 at the time of acquisition is prioritized, and accumulation of the sensor information is controlled according to the priority. Specifically, the priority of the sensor information sometimes differs depending on the content included, the situation at the time of acquisition, and the like. Accordingly, at accumulation of the sensor information that has not been transmitted to the server system 2, the accumulation determination unit 103 prioritizes the sensor information and accumulates the prioritized sensor information in the storage unit 105. When accumulating the sensor information exceeding the amount of information that can be accumulated in the accumulation unit 104 (storage unit 105), the accumulation determination unit 103 sequentially deletes the sensor information in order from the lowest priority data out of the accumulated sensor information while accumulating the sensor information with higher priority.

FIG. 27 is a functional block diagram of an example illustrating functions of the terminal device 11 according to the second modification of the third embodiment. Since the basic configuration is similar to the configuration of the terminal device 11 according to the second embodiment described with reference to FIG. 14, a detailed description thereof will be omitted. In the terminal device 11 according to the second modification of the third embodiment, the sensor information determined not to be transmitted is passed to the accumulation determination unit 103, and the accumulation determination unit 103 prioritizes the sensor information. The accumulation unit 104 stores and accumulates the prioritized sensor information in the storage unit 105. At this time, when the storage unit 105 has no capacity, the accumulation determination unit 103 deletes the sensor information of the lowest priority among the pieces of sensor information stored in the storage unit 105.

In addition, at a timing when the communication cost is low, in a time zone where the communication load is not high, when the communication amount in the own vehicle is small, or the like, the transmission determination unit 107e reads the accumulated sensor information from the storage unit 105 and transmits the sensor information to the server system 2 via the network 1.

FIG. 28 is a flowchart of an example illustrating processing in the terminal device 11 according to the second modification of the third embodiment. Note that, in FIG. 28, the processing of steps S1000 to S1017 illustrated in section (a) and the processing of steps S1030 to S1034 illustrated in section (b) are processing that operate independently of each other by mutually different threads.

First, the processing of section (a) will be described. In the processing of section (a), the processing of steps S1000 to S1010 is substantially the same as the processing of steps S400 to S410 in the flowchart of FIG. 15. That is, in the first step S1000, the terminal device 11 performs the imaging processing by the imaging unit 300, and receives, from the camera 12, sensor information including the image data based on the captured image and the metadata related to the imaging by the camera 12. In the next step S1001, the terminal device 11 causes the recognition unit 101 to perform object recognition processing based on the sensor information acquired in the imaging processing in step S1000. In the next step S1002, the terminal device 11 causes the recognition result utilization unit 301 to execute processing using the recognition result by the object recognition processing of the recognition unit 101.

In the next step S1003, the metadata analysis unit 250 acquires metadata from the sensor information acquired in the imaging processing in step S1000, and executes analysis processing on the acquired metadata.

The next step S1004st represents a start of loop processing indicating execution of processing of step S1004st to step S1004ed for all the application targets of the sensor information, that is, for each of the recognizers 210 included in the server system 2.

In step S1005, in the terminal device 11, the metadata application determination processing is executed by the training data determination unit 251. That is, in step S1005, the training data determination unit 251 examines, based on the metadata, whether the sensor information acquired in the imaging processing in step S1000 is applicable to the target recognizer 210 among the individual recognizers 210 by using the determination method described in the first embodiment, for example.

When the training data determination unit 251 has determined in the next step S1006 that the sensor information is applicable to the target recognizer 210 (step S1006, "Yes"), the processing proceeds to step S1007. In step S1007, the accumulation determination unit 103 in the terminal device 11 executes accumulation processing of the training data of the application target. That is, in step S1007, the accumulation determination unit 103 determines to accumulate the sensor information as training data for the target recognizer 210 determined to be applicable in step S1006. In accordance with this determination, the accumulation unit 104 stores and accumulates the sensor information in the storage unit 105.

After the processing of step S1007, the terminal device 11 returns the processing from step S1004ed to step S1004st, and executes the processing of steps S1005 to S1007 on the next recognizer 210 as the target recognizer 210 among the individual recognizers 210.

In contrast, when it is determined in step S1006 that the target sensor information is not applicable to the target recognizer 210 (step S1006, "No"), the processing returns from step S1004ed to step S1004st.

After completion of the processing of steps S1004st to S1004ed for each of the recognizers 210 regarding the sensor information, the terminal device 11 proceeds to the processing of step S1008. In step S1008, the terminal device 11 determines whether the number of recognizers 210 determined by the transmission determination unit 107e as application targets of the sensor information in the processing of steps S1004st to S1004ed is sufficient (for example, whether the number exceeds a threshold).

In contrast, when the transmission determination unit 107e has determined in step S1008 that the number of the recognizers 210 determined as the application targets of the sensor information is sufficient (step S1008, "Yes"), the processing proceeds to step S1009. In step S1009, the transmission determination unit 107e performs transmission processing of the sensor information. For example, the transmission determination unit 107e adds information indicating each of the recognizers 210 determined to be applicable by the processing of steps S1004st to S1004ed to the sensor information accumulated in the storage unit 105 in step S1007.

In the next step S1010, the sensor information to which the information indicating each recognizer 210 has been added is read from the storage unit 105 and then transmitted by the communication unit 110 to the server system 2 via the network 1. The accumulation unit 104 deletes the transmitted sensor information from the storage unit 105. The server system 2 stores the sensor information transmitted from the terminal device 11 in the storage unit 20 in association with each of the recognizers 210 as training data for performing retraining of each of the recognizers 210 based on the information indicating each of the recognizers 210 added to the sensor information.

When the transmission determination unit 107e has determined in step S1008 that the number of the recognizers 210 determined as the application targets of the sensor information is not sufficient (step S1008, "No"), the processing proceeds to step S1011.

In step S1011, the accumulation determination unit 103 sets priority to the sensor information (referred to as new sensor information). For example, the accumulation determination unit 103 can set the priority based on the metadata included in the new sensor information. Furthermore, the accumulation determination unit 103 can set a priority to the new sensor information based on the recognition result of the recognition unit 101. For example, the accumulation determination unit 103 can set priority to the new sensor information such that the higher the recognition rate indicated by the recognition result, the higher the priority given to the sensor information.

In the next step S1012, the accumulation determination unit 103 determines whether the capacity in the storage unit 105 to store the new sensor information is insufficient. For example, the accumulation determination unit 103 inquires of the accumulation unit 104 about the capacity of the storage unit 105.

When it is determined in step S1012 that there is sufficient capacity for storing new sensor information in the storage unit 105 (step S1012, "No"), the accumulation determination unit 103 proceeds to the processing of step S1017. In step S1017, the accumulation determination unit 103 instructs the accumulation unit 104 to store the new sensor information in the storage unit 105. In response to this instruction, the storage unit 105 stores and accumulates the new sensor information in the storage unit 105. Completion of the storage of the sensor information in the storage unit 105 will end the series of processing according to the flowchart of section (a).

In contrast, when it is determined in step S1012 that there is no sufficient capacity for storing new sensor information in the storage unit 105 (step S1012, "Yes"), the accumulation determination unit 103 proceeds to the processing of step S1013. In step S1013, the accumulation determination unit 103 instructs the accumulation unit 104 to search for the sensor information to which the lowest priority is set among the pieces of sensor information accumulated in the storage unit 105.

In the next step S1014, the accumulation determination unit 103 compares the priority of the sensor information obtained by the search in step S1013 with the priority of the new sensor information. When it is determined, as a result of the comparison, that the priority of the sensor information (lowest-priority sensor information) obtained by the search in step S1013 is higher than the priority of the new sensor information (step S1014, "when the lowest priority data has higher priority"), the series of processing according to the flowchart of section (a) will end. In this case, the new sensor information will be discarded, for example.

In contrast, when the accumulation determination unit 103 has determined in step S1014, that the priority of the new sensor information is higher than the priority of the lowest-priority sensor information (step S1014, "when the new priority data has higher priority"), the processing proceeds to step S1015. In step S1015, the accumulation determination unit 103 instructs the accumulation unit 104 to delete the lowest-priority sensor information from the storage unit 105. In response to this instruction, the accumulation unit 104 deletes the lowest-priority sensor information from the storage unit 105.

In the next step S1016, the accumulation determination unit 103 instructs the accumulation unit 104 to store the new sensor information in the storage unit 105. In response to this instruction, the storage unit 105 stores and accumulates the new sensor information in the storage unit 105. Completion of the storage of the sensor information in the storage unit 105 will end the series of processing according to the flowchart of section (a).

The processing of section (b) will be described. The processing according to section (b) in FIG. 28 is substantially the same as the processing according to section (b) in FIG. 26. Specifically, in step S1030, the transmission determination unit 107e performs connection processing of connecting to the network 1 by the communication unit 110. In the next step S1031, the transmission determination unit 107e performs estimation processing of estimating the communication cost in the network 1. For example, the transmission determination unit 107e estimates the communication cost based on a communication plan, a fee plan, a time zone, traffic of the network 1, and the like regarding the connection to the network 1.

In the next step S1032, the transmission determination unit 107e determines whether the communication cost estimated in step S1031 is low, for example, whether the communication cost is less than a predetermined value. In a case where the transmission determination unit 107e determines that the estimated communication cost is high (step S1032, "No"), the transmission determination unit 107e ends the series of processing in the flowchart of this section (b) without transmitting the sensor information accumulated in the storage unit 105.

In contrast, when having determined, in step S1032, that the communication cost estimated in step S1031 is low (step S1032, "Yes"), the transmission determination unit 107e proceeds to the processing of step S1033. In step S1033, the transmission determination unit 107e performs transmission processing of the sensor information accumulated in the storage unit 105. For example, the transmission determination unit 107e instructs the accumulation unit 104 to read the sensor information accumulated in the storage unit 105.

In the next step S1034, the transmission determination unit 107e transmits the sensor information read from the storage unit 105 by the accumulation unit 104 in response to the instruction in step S1033 to the server system 2 via the network 1 by the communication unit 110. The accumulation unit 104 deletes the transmitted sensor information from the storage unit 105.

In this manner, in the second modification of the third embodiment, priority is set to the sensor information that has not been transmitted to the server system 2, and the sensor information with low priority is deleted when there is no more capacity for storing the sensor information in the storage unit 105. This makes it possible to save the storage capacity of the storage unit 105. In addition, since the sensor information with high priority is accumulated in the storage unit 105, by reading the sensor information stored in the storage unit 105 at a predetermined timing and transmitting the sensor information to the server system 2, it is possible to achieve efficient use of the sensor information, leading to the reduction of the communication cost.

[5. Fourth embodiment]

The technology according to the present disclosure (the present technology) is applicable to various products. The technology according to the present disclosure may be applied to devices mounted on any of moving objects such as automobiles, electric vehicles, hybrid electric vehicles, motorcycles, bicycles, personal mobility, airplanes, drones, ships, and robots.

FIG. 29 is a block diagram illustrating a schematic configuration example of a vehicle control system, which is an example of a moving body control system to which the technology according to the present disclosure is applicable.

A vehicle control system 12000 includes a plurality of electronic control units connected via a communication network 12001. In the example illustrated in FIG. 29, the vehicle control system 12000 includes a drive system control unit 12010, a body system control unit 12020, a vehicle exterior information detection unit 12030, a vehicle interior information detection unit 12040, and an integrated control unit 12050. Furthermore, as a functional configuration of the integrated control unit 12050, a microcomputer 12051, an audio image output unit 12052, and an in-vehicle network interface (I/F) 12053 are illustrated.

The drive system control unit 12010 controls the operation of the device related to the drive system of the vehicle in accordance with various programs. For example, the drive system control unit 12010 functions as a control device of a driving force generation device that generates a driving force of a vehicle such as an internal combustion engine or a driving motor, a driving force transmission mechanism that transmits a driving force to the wheels, a steering mechanism that adjusts steering angle of the vehicle, a braking device that generates a braking force of the vehicle, or the like.

The body system control unit 12020 controls the operation of various devices mounted on the vehicle body in accordance with various programs. For example, the body system control unit 12020 functions as a control device for a keyless entry system, a smart key system, a power window device, or various lamps such as a head lamp, a back lamp, a brake lamp, a turn signal lamp, or a fog lamp. In this case, the body system control unit 12020 can receive input of radio waves transmitted from a portable device that substitutes for the key or signals from various switches. The body system control unit 12020 receives the input of these radio waves or signals and controls the door lock device, the power window device, the lamp, or the like, of the vehicle.

The vehicle exterior information detection unit 12030 detects information outside the vehicle equipped with the vehicle control system 12000. For example, an imaging unit 12031 is connected to the vehicle exterior information detection unit 12030. The vehicle exterior information detection unit 12030 causes the imaging unit 12031 to capture an image of the exterior of the vehicle and receives the captured image. The vehicle exterior information detection unit 12030 may perform object detection processing or distance detection processing of people, vehicles, obstacles, signs, characters on the road surface, or the like based on the received image.

The imaging unit 12031 is an optical sensor that receives light and outputs an electric signal corresponding to the amount of received light. The imaging unit 12031 can output the electric signal as an image and also as distance measurement information. Furthermore, the light received by the imaging unit 12031 may be visible light or invisible light such as infrared rays.

The vehicle interior information detection unit 12040 detects vehicle interior information. The vehicle interior information detection unit 12040 is connected to a driver state detector 12041 that detects the state of the driver, for example. The driver state detector 12041 may include a camera that images the driver, for example. The vehicle interior information detection unit 12040 may calculate the degree of fatigue or degree of concentration of the driver or may determine whether the driver is dozing off based on the detection information input from the driver state detector 12041.

The microcomputer 12051 can calculate a control target value of the driving force generation device, the steering mechanism, or the braking device based on vehicle external/internal information obtained by the vehicle exterior information detection unit 12030 or the vehicle interior information detection unit 12040, and can output a control command to the drive system control unit 12010. For example, the microcomputer 12051 can perform cooperative control for the purpose of achieving a function of an advanced driver assistance system (ADAS) including collision avoidance or impact mitigation of vehicles, follow-up running based on an inter-vehicle distance, cruise control, vehicle collision warning, vehicle lane departure warning, or the like.

Furthermore, it is allowable such that the microcomputer 12051 controls the driving force generation device, the steering mechanism, the braking device, or the like, based on the information regarding the surroundings of the vehicle obtained by the vehicle exterior information detection unit 12030 or the vehicle interior information detection unit 12040, thereby performing cooperative control for the purpose of autonomous driving or the like, in which the vehicle performs autonomous traveling without depending on the operation of the driver.

Furthermore, the microcomputer 12051 can output a control command to the body system control unit 12020 based on the vehicle exterior information acquired by the vehicle exterior information detection unit 12030. For example, the microcomputer 12051 can control the head lamp in accordance with the position of the preceding vehicle or the oncoming vehicle sensed by the vehicle exterior information detection unit 12030, and thereby can perform cooperative control aiming at antiglare such as switching the high beam to low beam.

The audio image output unit 12052 transmits an output signal in the form of at least one of audio or image to an output device capable of visually or audibly notifying the occupant of the vehicle or the outside of the vehicle of information. In the example of FIG. 29, an audio speaker 12061, a display unit 12062, and an instrument panel 12063 are illustrated as exemplary output devices. The display unit 12062 may include, for example, at least one of an onboard display and a head-up display.

FIG. 30 is a diagram illustrating an example of an installation position of the imaging unit 12031.

In FIG. 30, a vehicle 12100 has imaging units 12101, 12102, 12103, 12104, and 12105 as the imaging units 12031.

For example, the imaging units 12101, 12102, 12103, 12104, and 12105 are installed at positions on the vehicle 12100, including a front nose, a side mirror, a rear bumper, a back door, an upper portion of the windshield in a vehicle interior, or the like. The imaging unit 12101 provided on the front nose and the imaging unit 12105 provided on the upper portion of the windshield in the vehicle interior mainly acquire an image in front of the vehicle 12100. The imaging units 12102 and 12103 provided in the side mirrors mainly acquire images of the side of the vehicle 12100. The imaging unit 12104 provided on the rear bumper or the back door mainly acquires an image behind the vehicle 12100. The images in front acquired by the imaging units 12101 and 12105 are mainly used for detecting a preceding vehicle or a pedestrian, an obstacle, a traffic light, a traffic sign, a lane, or the like.

Note that FIG. 30 illustrates an example of the imaging range of the imaging units 12101 to 12104. An imaging range 12111 indicates an imaging range of the imaging unit 12101 provided on the front nose, imaging ranges 12112 and 12113 indicate imaging ranges of the imaging units 12102 and 12103 provided on the side mirrors, respectively, and an imaging range 12114 indicates an imaging range of the imaging unit 12104 provided on the rear bumper or the back door. For example, by superimposing pieces of image data captured by the imaging units 12101 to 12104, it is possible to obtain a bird's-eye view image of the vehicle 12100 as viewed from above.

At least one of the imaging units 12101 to 12104 may have a function of acquiring distance information. For example, at least one of the imaging units 12101 to 12104 may be a stereo camera including a plurality of imaging elements, or an imaging element having pixels for phase difference detection.

For example, the microcomputer 12051 can obtain a distance to each of three-dimensional objects in the imaging ranges 12111 to 12114 and a temporal change (relative speed with respect to the vehicle 12100) of the distance based on the distance information obtained from the imaging units 12101 to 12104, and thereby can extract a three-dimensional object traveling at a predetermined speed (for example, 0 km/h or more) in substantially the same direction as the vehicle 12100 being the closest three-dimensional object on the traveling path of the vehicle 12100, as a preceding vehicle. Furthermore, the microcomputer 12051 can set an inter-vehicle distance to be ensured in front of the preceding vehicle in advance, and can perform automatic brake control (including follow-up stop control), automatic acceleration control (including follow-up start control), or the like. In this manner, it is possible to perform cooperative control for the purpose of autonomous driving or the like, in which the vehicle autonomously travels without depending on the operation of the driver.

For example, based on the distance information obtained from the imaging units 12101 to 12104, the microcomputer 12051 can extract three-dimensional object data regarding the three-dimensional object with classification into three-dimensional objects, such as a two-wheeled vehicle, a regular vehicle, a large vehicle, a pedestrian, and other three-dimensional objects such as a utility pole, and can use the data for automatic avoidance of obstacles. For example, the microcomputer 12051 distinguishes obstacles around the vehicle 12100 into obstacles having high visibility to the driver of the vehicle 12100 and obstacles having low visibility to the driver. Subsequently, the microcomputer 12051 determines a collision risk indicating the risk of collision with each of obstacles. When the collision risk is a set value or more and there is a possibility of collision, the microcomputer 12051 can output an alarm to the driver via the audio speaker 12061 and the display unit 12062, and can perform forced deceleration and avoidance steering via the drive system control unit 12010, thereby achieving driving assistance for collision avoidance.

At least one of the imaging units 12101 to 12104 may be an infrared camera that detects infrared rays. For example, the microcomputer 12051 can recognize a pedestrian by determining whether a pedestrian is present in the captured images of the imaging units 12101 to 12104. Such pedestrian recognition is performed, for example, by a procedure of extracting feature points in a captured image of the imaging units 12101 to 12104 as an infrared camera, and by a procedure of performing pattern matching processing on a series of feature points indicating the contour of the object to discriminate whether it is a pedestrian. When the microcomputer 12051 determines that a pedestrian is present in the captured images of the imaging units 12101 to 12104 and recognizes a pedestrian, the audio image output unit 12052 controls the display unit 12062 to perform superimposing display of a rectangular contour line for emphasis to the recognized pedestrian. Furthermore, the audio image output unit 12052 may control the display unit 12062 to display an icon indicating a pedestrian or the like at a desired position.

Hereinabove, an example of the vehicle control system to which the technology according to the present disclosure is applicable has been described. According to the technology of the present disclosure, the camera 12 is applicable to the imaging unit 12031, and the terminal device 11 is applicable to the vehicle exterior information detection unit 12030 among the described configurations. By applying the technology of the present disclosure to the vehicle exterior information detection unit 12030, it is possible to use the sensor information acquired by the camera 12 with higher efficiency, leading to improvement of the recognition rate of pedestrians and the like. Furthermore, by applying the second embodiment and its modifications and the third embodiment and its modifications to the vehicle exterior information detection unit 12030, it is also possible to reduce the communication cost for transmitting sensor information.

Note that the present technology can also have the following configurations.

(1) An information processing apparatus comprising:

a recognition unit that performs object recognition processing using sensor information acquired by a sensor, the object recognition processing being performed by a first recognizer that has been pretrained; and
a training data application determination unit that determines whether the sensor information is applicable as training data to a second recognizer different from the first recognizer.

(2) The information processing apparatus according to the above (1), further comprising
a transmission determination unit that determines, based on the sensor information, whether to transmit the sensor information to a server capable of generating the first recognizer in order to apply the sensor information to the second recognizer as the training data.

(3) The information processing apparatus according to the above (2),

wherein the transmission determination unit
transmits, to the server, sensor information in which the number of recognizers capable of performing recognition processing, designated from among the second recognizers by the training data application determination unit, is a predetermined number or more, among pieces of the sensor information.

(4) The information processing apparatus according to the above (2) or (3),

wherein the transmission determination unit
transmits, to the server, the sensor information that is to be next updated in a time less than a predetermined time.

(5) The information processing apparatus according to any one of the above (2) to (4),

wherein the transmission determination unit
transmits, to the server, the sensor information that occurs at a frequency less than a predetermined frequency.

(6) The information processing apparatus according to any one of the above (2) to (5), further comprising

a communication unit capable of communicating with another information processing apparatus,
wherein the transmission determination unit
causes the communication unit to acquire information indicating sensor information to be transmitted to the server by the another information processing apparatus through communication with the another information processing apparatus, and determines whether to transmit the sensor information acquired by the sensor to the server based on the acquired information.

(7) The information processing apparatus according to any one of the above (2) to (6), further comprising

an accumulation determination unit that determines whether to accumulate the sensor information in an accumulation unit,
wherein the accumulation determination unit
accumulates the sensor information determined not to be transmitted to the server by the transmission determination unit, in the accumulation unit.

(8) The information processing apparatus according to the above (7),

wherein the transmission determination unit
transmits the sensor information accumulated in the accumulation unit to the server at a timing when a communication cost is low.

(9) The information processing apparatus according to the above (7) or (8),

wherein the accumulation determination unit
obtains a priority of the sensor information determined not to be transmitted to the server, and determines whether to accumulate the sensor information in the accumulation unit based on the priority.

(10) An information processing system comprising:

a server;
an information processing apparatus capable of communicating with the server,
wherein the server includes
a training unit that generates a first recognizer and a second recognition unit different from the first recognizer by using machine learning based on training data, and
the information processing apparatus includes:

a recognition unit that performs, by the first recognizer, object recognition processing using sensor information acquired by a sensor; and
a training data application determination unit that determines whether the sensor information is applicable as training data to a second recognizer different from the first recognizer.

(11) An information processing method executed by a processor, the method comprising:

a recognition step of performing, by using a first recognizer that has been pretrained, object recognition processing using sensor information acquired by a sensor;
a recognizer determination step of designating a recognizer capable of performing recognition processing using the sensor information out of a second recognizer different from the first recognizer based on the sensor information; and
a training data application determination step of determining whether the sensor information is applicable as training data to the second recognizer different from the first recognizer.

(12) An information processing program for causing a computer to execute processing, the processing comprising:

a recognition step of performing, by using a first recognizer that has been pretrained, object recognition processing using sensor information acquired by a sensor;
a recognizer determination step of designating a recognizer capable of performing recognition processing using the sensor information out of a second recognizer different from the first recognizer based on the sensor information; and
a training data application determination step of determining whether the sensor information is applicable as training data to the second recognizer different from the first recognizer.

(13) An information processing apparatus comprising:

a training unit that generates a first recognizer and a second recognizer different from the first recognizer by using machine learning based on training data; and
a training data application determination unit that determines whether sensor information transmitted from a terminal device including the first recognizer is applicable as training data to the second recognizer based on the sensor information,
wherein, when the training data application determination unit has determined that the sensor information is applicable to the second recognizer as training data, the training unit retrains the second recognizer based on the sensor information and updates the second recognizer.

(14) The information processing apparatus according to the above (13),

wherein the training data application determination unit
determines whether the sensor information is applicable to the second recognizer as training data based on a scene indicated by the sensor information.

(15) The information processing apparatus according to the above (13) or (14),

wherein the training data application determination unit
determines whether conversion of the sensor information will make the sensor information applicable to the second recognizer as training data.

(16) The information processing apparatus according to any one of the above (13) to (15),

wherein the training data application determination unit
determines whether the sensor information is applicable to the second recognizer as training data according to an object detected by a sensor, the detected objected being indicated in the sensor information.

(17) An information processing system comprising

an information processing apparatus; and
a terminal device including a first recognizer that performs object recognition processing using sensor information acquired by a sensor, the terminal device being capable of communicating with the information processing apparatus;
wherein the information processing apparatus includes:

a training unit that generates the first recognizer and a second recognizer different from the first recognizer by using machine learning based on training data; and
a training data application determination unit that determines whether sensor information transmitted from the terminal device including the first recognizer is applicable as training data to the second recognizer based on the sensor information, and
when the training data application determination unit has determined that the sensor information is applicable to the second recognizer as training data, the training unit retrains the second recognizer based on the sensor information and updates the second recognizer.

(18) An information processing method executed by a processor, the method comprising:

a training step of generating a first recognizer and a second recognizer different from the first recognizer by using machine learning based on training data; and
a training data application determination step of determining whether sensor information transmitted from a terminal device including the first recognizer is applicable as training data to the second recognizer based on the sensor information,
wherein, when the training data application determination step has determined that the sensor information is applicable to the second recognizer as training data, the training step retrains the second recognizer based on the sensor information and updates the second recognizer.

(19) An information processing program that causes a computer to execute processing, the processing comprising:

a training step of generating a first recognizer and a second recognizer different from the first recognizer by using machine learning based on training data; and
a training data application determination step of determining whether sensor information transmitted from a terminal device including the first recognizer is applicable as training data to the second recognizer based on the sensor information,
wherein, when the training data application determination step has determined that the sensor information is applicable to the second recognizer as training data, the training step retrains the second recognizer based on the sensor information and updates the second recognizer.

Reference Signs List

1 NETWORK
2 SERVER SYSTEM
3, 202 TRAINING UNIT
10, $10_1$, $10_2$, $10_3$ VEHICLE
11 TERMINAL DEVICE
12 CAMERA
20, 105 STORAGE UNIT
22, 22a, 22b, 22c, 22d, 108, 108a TRAINING DATA APPLICATION DETERMINATION UNIT
101 RECOGNITION UNIT
103 ACCUMULATION DETERMINATION UNIT
104 ACCUMULATION UNIT
106 ACCUMULATED INFORMATION OUTPUT UNIT
107, 107a, 107b, 107c, 107d, 107e TRANSMISSION DETERMINATION UNIT
110, 110a, 200 COMMUNICATION UNIT
152 TRAINING DATA IMMEDIACY CALCULATION UNIT
153 TRAINING DATA IMMEDIACY DETERMINATION UNIT
201 TRAINING DATA ACCUMULATION UNIT
210, $210_1$, $210_2$, $210_3$, $210_4$ RECOGNIZER
221, 250 METADATA ANALYSIS UNIT
230 DOMAIN ANALYSIS UNIT
231 DOMAIN EVALUATION UNIT
232, 241, 251 TRAINING DATA DETERMINATION UNIT
240 SENSING ANALYSIS UNIT

300 IMAGING UNIT
310 RARITY ANALYSIS UNIT
311 RARITY DETERMINATION UNIT
320 NON-TARGET-VEHICLE DATA ACCUMULATION UNIT

## Claims

1. An information processing apparatus comprising:

   a recognition unit that performs object recognition processing using sensor information acquired by a sensor, the object recognition processing being performed by a first recognizer that has been pretrained; and
   a training data application determination unit that determines whether the sensor information is applicable as training data to a second recognizer different from the first recognizer.

2. The information processing apparatus according to claim 1, further comprising
   a transmission determination unit that determines, based on the sensor information, whether to transmit the sensor information to a server capable of generating the first recognizer in order to apply the sensor information to the second recognizer as the training data.

3. The information processing apparatus according to claim 2,

   wherein the transmission determination unit
   transmits, to the server, sensor information in which the number of recognizers capable of performing recognition processing, designated from among the second recognizers by the training data application determination unit, is a predetermined number or more, among pieces of the sensor information.

4. The information processing apparatus according to claim 2,

   wherein the transmission determination unit
   transmits, to the server, the sensor information that is to be next updated in a time less than a predetermined time.

5. The information processing apparatus according to claim 2,

   wherein the transmission determination unit
   transmits, to the server, the sensor information that occurs at a frequency less than a predetermined frequency.

6. The information processing apparatus according to claim 2, further comprising

   a communication unit capable of communicating with another information processing apparatus,
   wherein the transmission determination unit
   causes the communication unit to acquire information indicating sensor information to be transmitted to the server by the another information processing apparatus through communication with the another information processing apparatus, and determines whether to transmit the sensor information acquired by the sensor to the server based on the acquired information.

7. The information processing apparatus according to claim 2, further comprising

   an accumulation determination unit that determines whether to accumulate the sensor information in an accumulation unit,
   wherein the accumulation determination unit
   accumulates the sensor information determined not to be transmitted to the server by the transmission determination unit, in the accumulation unit.

8. The information processing apparatus according to claim 7,

   wherein the transmission determination unit
   transmits the sensor information accumulated in the accumulation unit to the server at a timing when a communication cost is low.

**9.** The information processing apparatus according to claim 7,

wherein the accumulation determination unit
obtains a priority of the sensor information determined not to be transmitted to the server, and determines whether to accumulate the sensor information in the accumulation unit based on the priority.

**10.** An information processing system comprising:

a server;
an information processing apparatus capable of communicating with the server,
wherein the server includes
a training unit that generates a first recognizer and a second recognition unit different from the first recognizer by using machine learning based on training data, and
the information processing apparatus includes:

a recognition unit that performs, by the first recognizer, object recognition processing using sensor information acquired by a sensor; and
a training data application determination unit that determines whether the sensor information is applicable as training data to a second recognizer different from the first recognizer.

**11.** An information processing method executed by a processor, the method comprising:

a recognition step of performing, by using a first recognizer that has been pretrained, object recognition processing using sensor information acquired by a sensor;
a recognizer determination step of designating a recognizer capable of performing recognition processing using the sensor information out of a second recognizer different from the first recognizer based on the sensor information; and
a training data application determination step of determining whether the sensor information is applicable as training data to the second recognizer different from the first recognizer.

**12.** An information processing program for causing a computer to execute processing, the processing comprising:

a recognition step of performing, by using a first recognizer that has been pretrained, object recognition processing using sensor information acquired by a sensor;
a recognizer determination step of designating a recognizer capable of performing recognition processing using the sensor information out of a second recognizer different from the first recognizer based on the sensor information; and
a training data application determination step of determining whether the sensor information is applicable as training data to the second recognizer different from the first recognizer.

**13.** An information processing apparatus comprising:

a training unit that generates a first recognizer and a second recognizer different from the first recognizer by using machine learning based on training data; and
a training data application determination unit that determines whether sensor information transmitted from a terminal device including the first recognizer is applicable as training data to the second recognizer based on the sensor information,
wherein, when the training data application determination unit has determined that the sensor information is applicable to the second recognizer as training data, the training unit retrains the second recognizer based on the sensor information and updates the second recognizer.

**14.** The information processing apparatus according to claim 13,

wherein the training data application determination unit
determines whether the sensor information is applicable to the second recognizer as training data based on a scene indicated by the sensor information.

**15.** The information processing apparatus according to claim 13,

wherein the training data application determination unit
determines whether conversion of the sensor information will make the sensor information applicable to the second recognizer as training data.

**16.** The information processing apparatus according to claim 13,

wherein the training data application determination unit
determines whether the sensor information is applicable to the second recognizer as training data according to an object detected by a sensor, the detected objected being indicated in the sensor information.

**17.** An information processing system comprising

an information processing apparatus; and
a terminal device including a first recognizer that performs object recognition processing using sensor information acquired by a sensor, the terminal device being capable of communicating with the information processing apparatus;
wherein the information processing apparatus includes:

a training unit that generates the first recognizer and a second recognizer different from the first recognizer by using machine learning based on training data; and
a training data application determination unit that determines whether sensor information transmitted from the terminal device including the first recognizer is applicable as training data to the second recognizer based on the sensor information, and
when the training data application determination unit has determined that the sensor information is applicable to the second recognizer as training data, the training unit retrains the second recognizer based on the sensor information and updates the second recognizer.

**18.** An information processing method executed by a processor, the method comprising:

a training step of generating a first recognizer and a second recognizer different from the first recognizer by using machine learning based on training data; and
a training data application determination step of determining whether sensor information transmitted from a terminal device including the first recognizer is applicable as training data to the second recognizer based on the sensor information,
wherein, when the training data application determination step has determined that the sensor information is applicable to the second recognizer as training data, the training step retrains the second recognizer based on the sensor information and updates the second recognizer.

**19.** An information processing program that causes a computer to execute processing, the processing comprising:

a training step of generating a first recognizer and a second recognizer different from the first recognizer by using machine learning based on training data; and
a training data application determination step of determining whether sensor information transmitted from a terminal device including the first recognizer is applicable as training data to the second recognizer based on the sensor information,
wherein, when the training data application determination step has determined that the sensor information is applicable to the second recognizer as training data, the training step retrains the second recognizer based on the sensor information and updates the second recognizer.

FIG.1

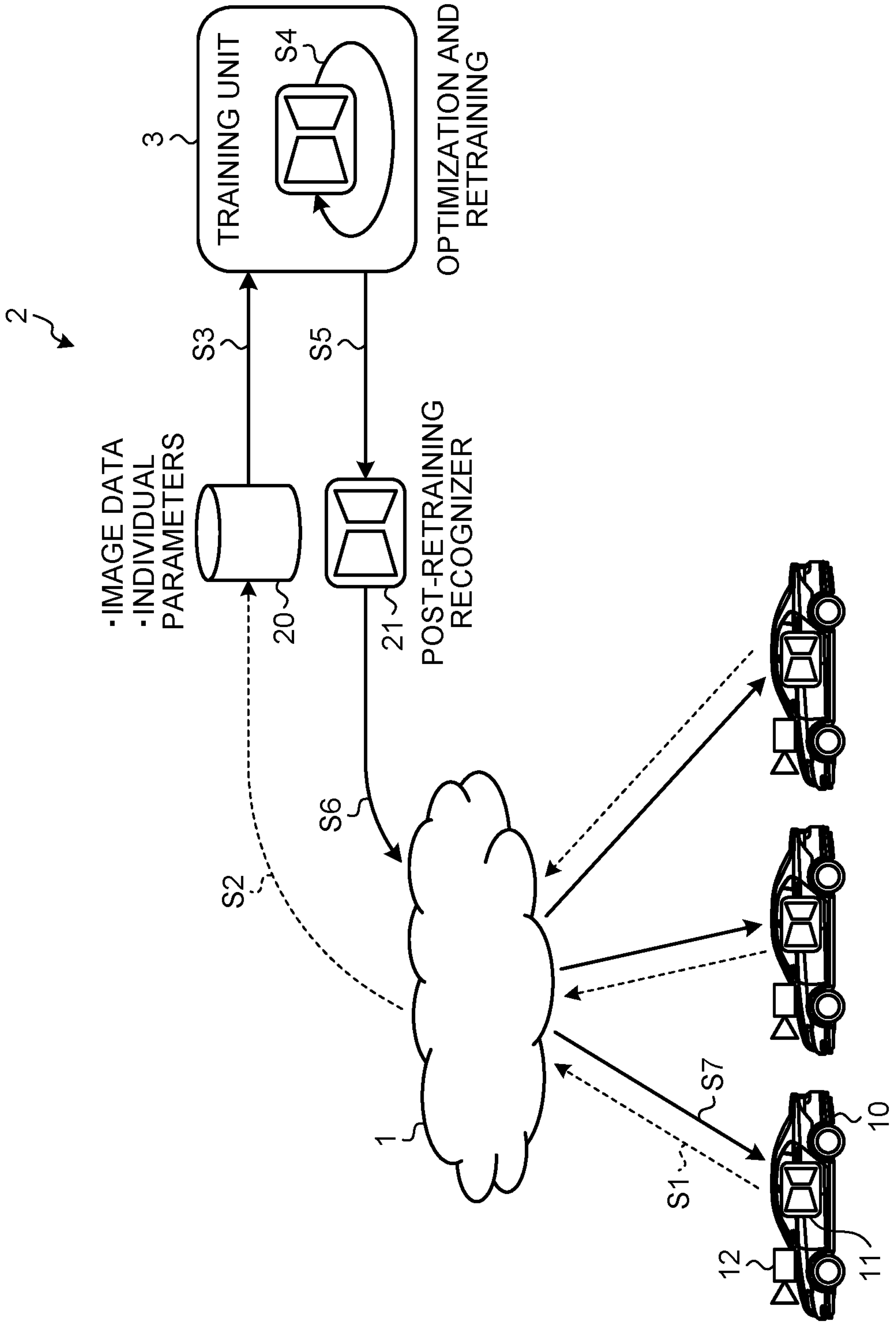
2
3
TRAINING UNIT
S4
OPTIMIZATION AND RETRAINING
S3
S5
·IMAGE DATA
·INDIVIDUAL PARAMETERS
20
POST-RETRAINING RECOGNIZER
21
S2
S6
1
S7
S1
10
11
12

FIG.2

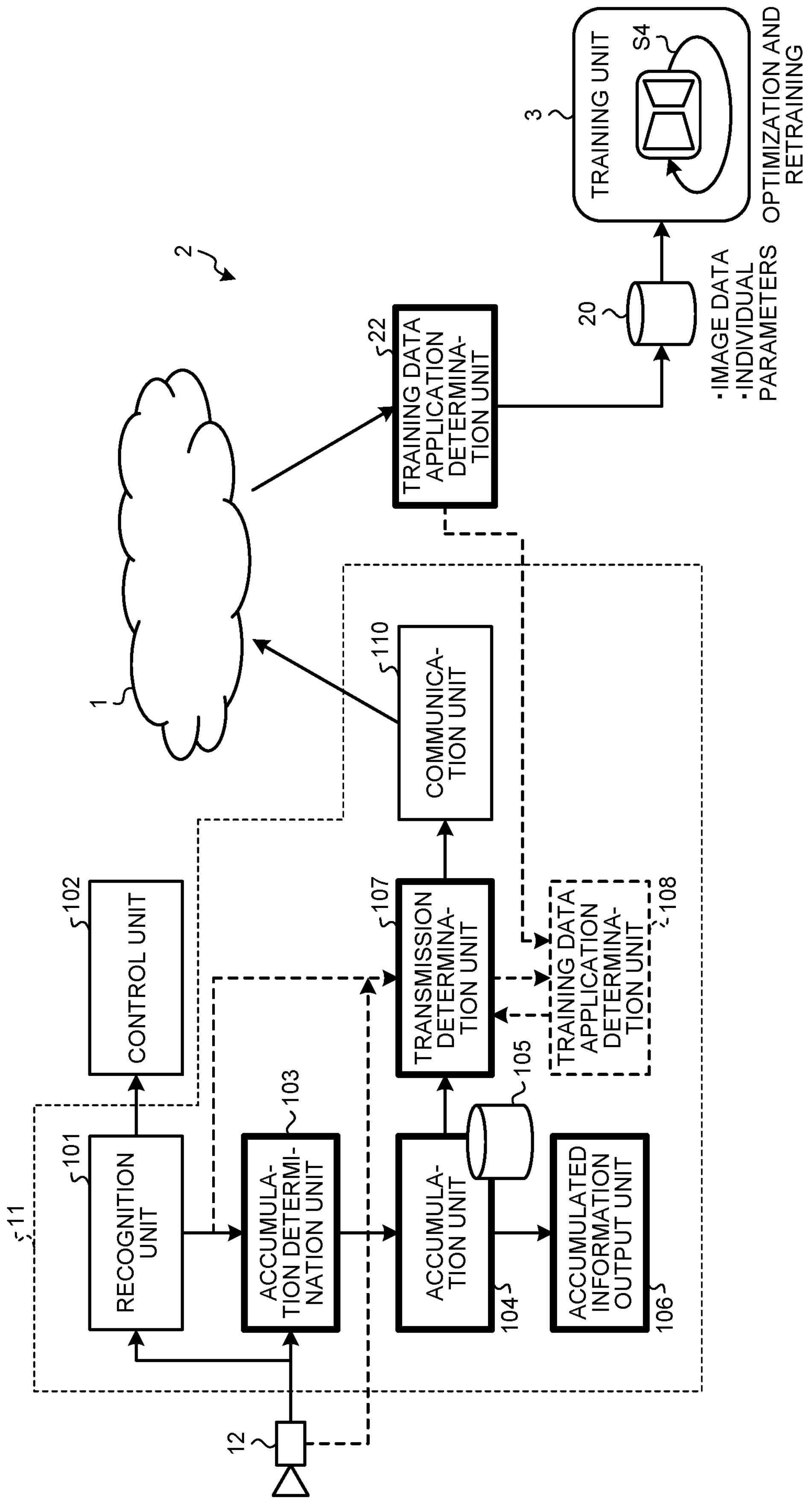
2
1
3
TRAINING UNIT
S4
OPTIMIZATION AND RETRAINING
20
·IMAGE DATA
·INDIVIDUAL PARAMETERS
22
TRAINING DATA APPLICATION DETERMINA-TION UNIT
110
COMMUNICA-TION UNIT
11
101
RECOGNITION UNIT
102
CONTROL UNIT
103
ACCUMULA-TION DETERMI-NATION UNIT
104
ACCUMULA-TION UNIT
105
106
ACCUMULATED INFORMATION OUTPUT UNIT
107
TRANSMISSION DETERMINA-TION UNIT
108
TRAINING DATA APPLICATION DETERMINA-TION UNIT
12

FIG.3

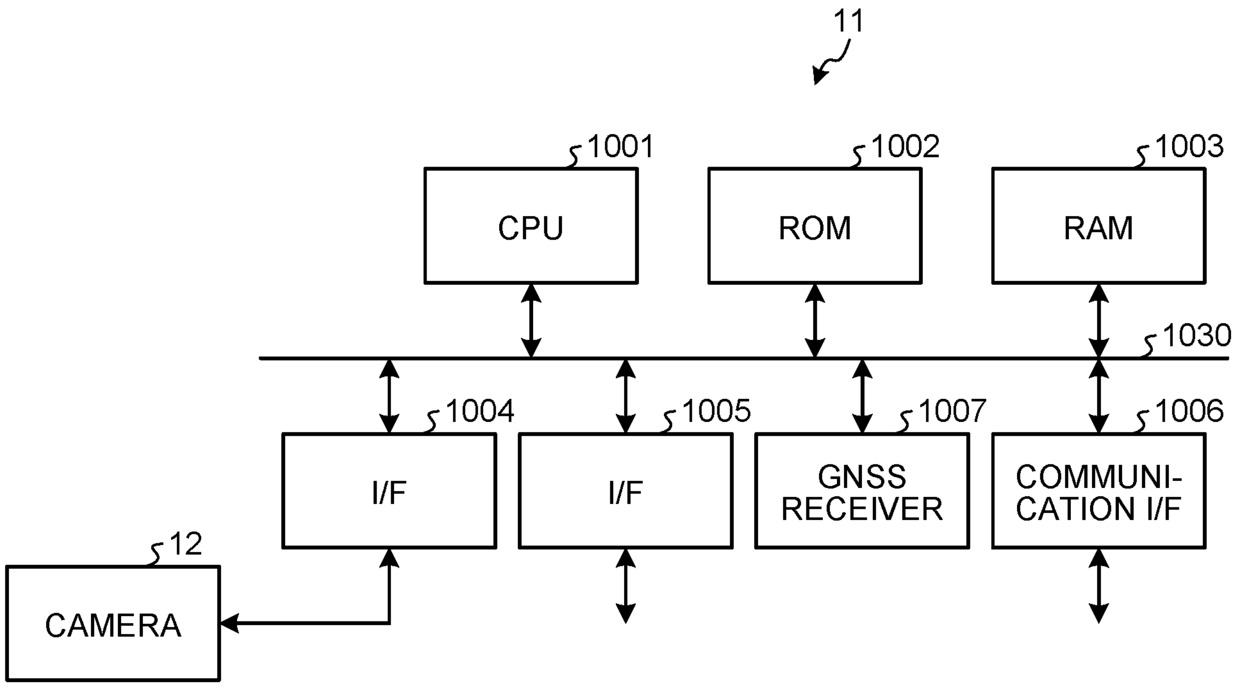
11
1001
CPU
1002
ROM
1003
RAM
1030
1004
I/F
1005
I/F
1007
GNSS RECEIVER
1006
COMMUNI-CATION I/F
12
CAMERA

FIG.4

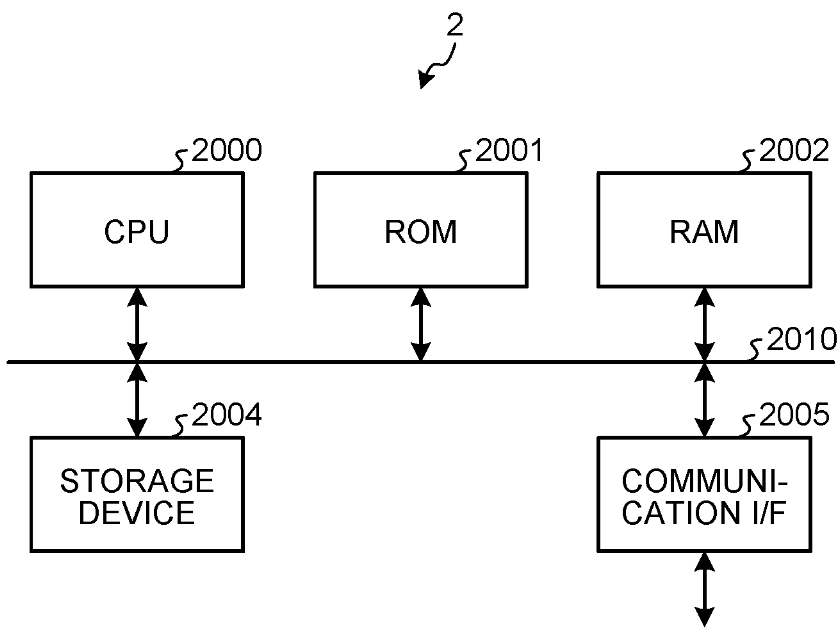
2
2000
CPU
2001
ROM
2002
RAM
2010
2004
STORAGE DEVICE
2005
COMMUNI-CATION I/F

FIG.5

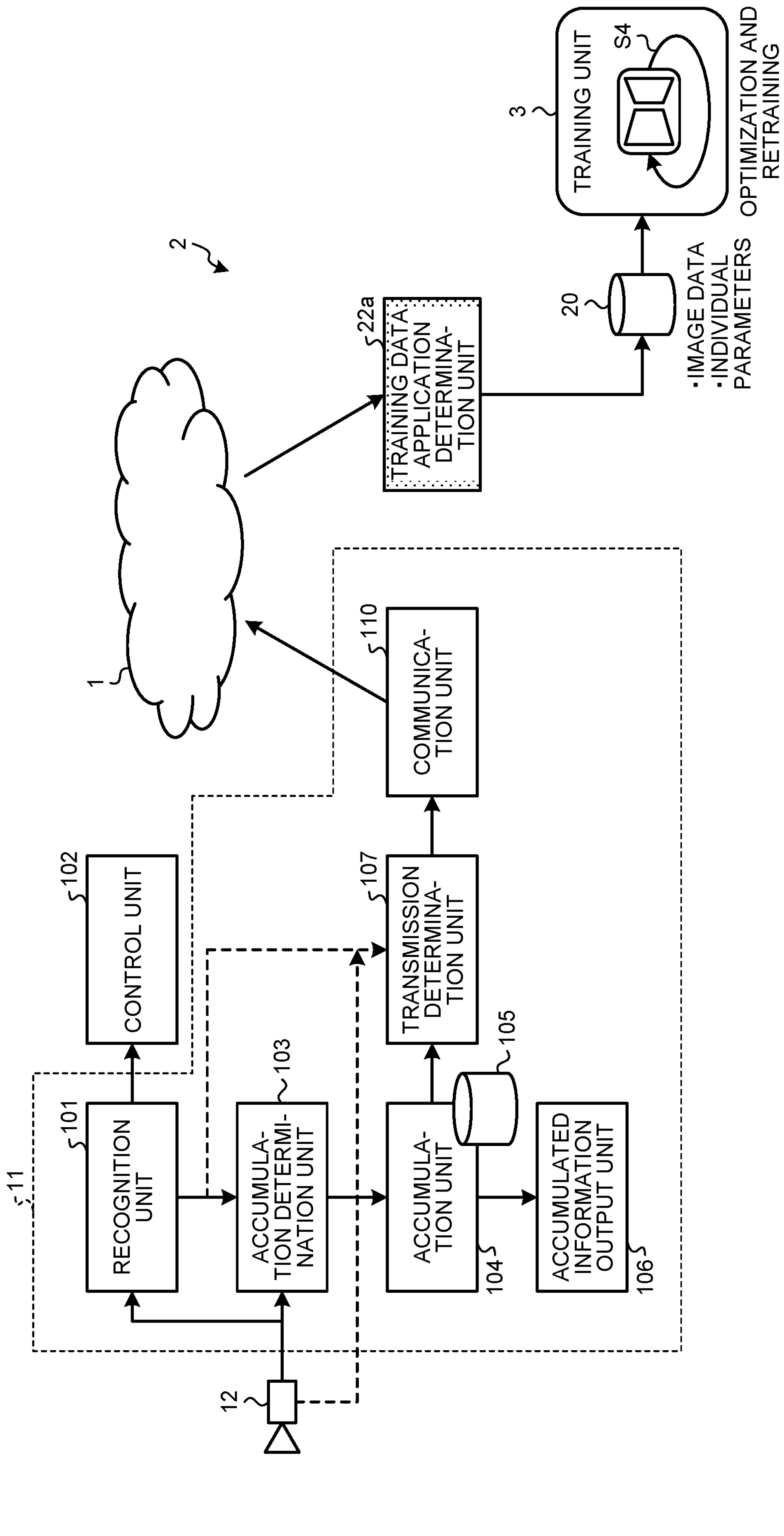
2
1
11
12
101
RECOGNITION UNIT
102
CONTROL UNIT
103
ACCUMULA-TION DETERMI-NATION UNIT
104
ACCUMULA-TION UNIT
105
106
ACCUMULATED INFORMATION OUTPUT UNIT
107
TRANSMISSION DETERMINA-TION UNIT
110
COMMUNICA-TION UNIT
22a
TRAINING DATA APPLICATION DETERMINA-TION UNIT
20
·IMAGE DATA
·INDIVIDUAL PARAMETERS
3
TRAINING UNIT
S4
OPTIMIZATION AND RETRAINING

FIG.6

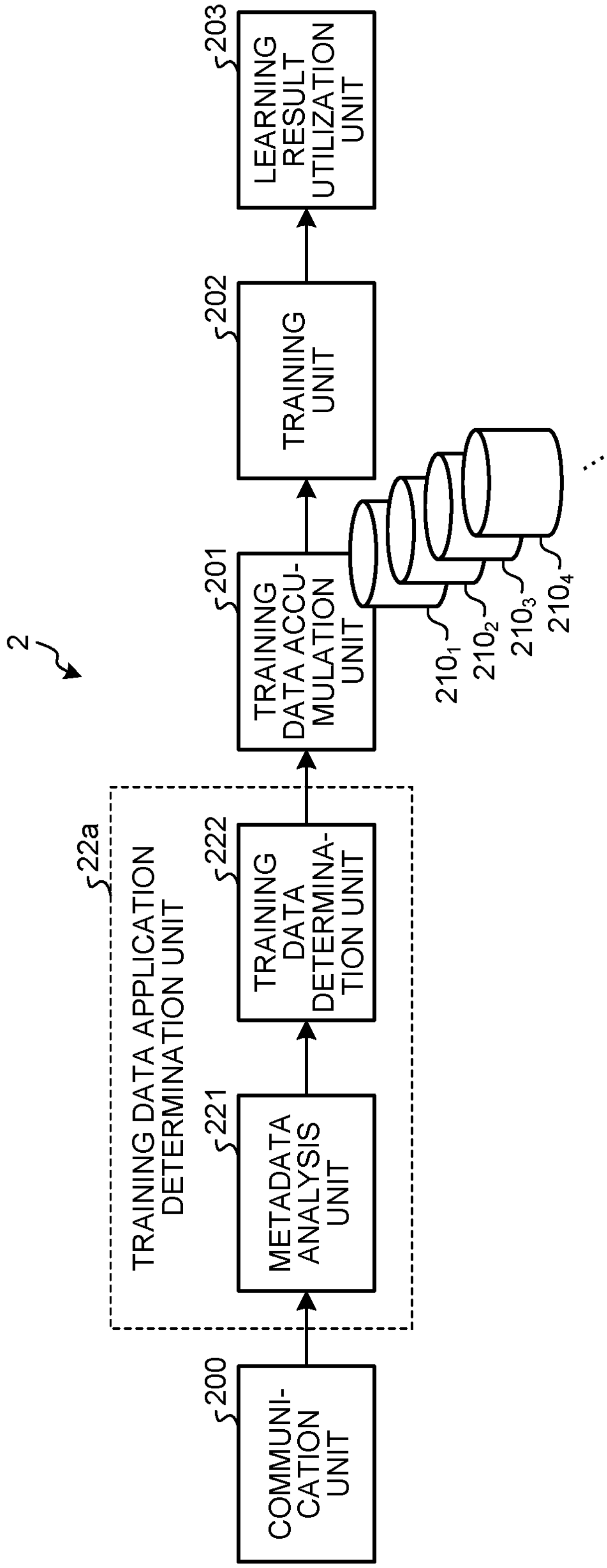
2
COMMUNI-CATION UNIT
200
TRAINING DATA APPLICATION DETERMINATION UNIT
22a
METADATA ANALYSIS UNIT
221
TRAINING DATA DETERMINA-TION UNIT
222
TRAINING DATA ACCU-MULATION UNIT
201
TRAINING UNIT
202
LEARNING RESULT UTILIZATION UNIT
203
$210_1$
$210_2$
$210_3$
$210_4$

FIG.7

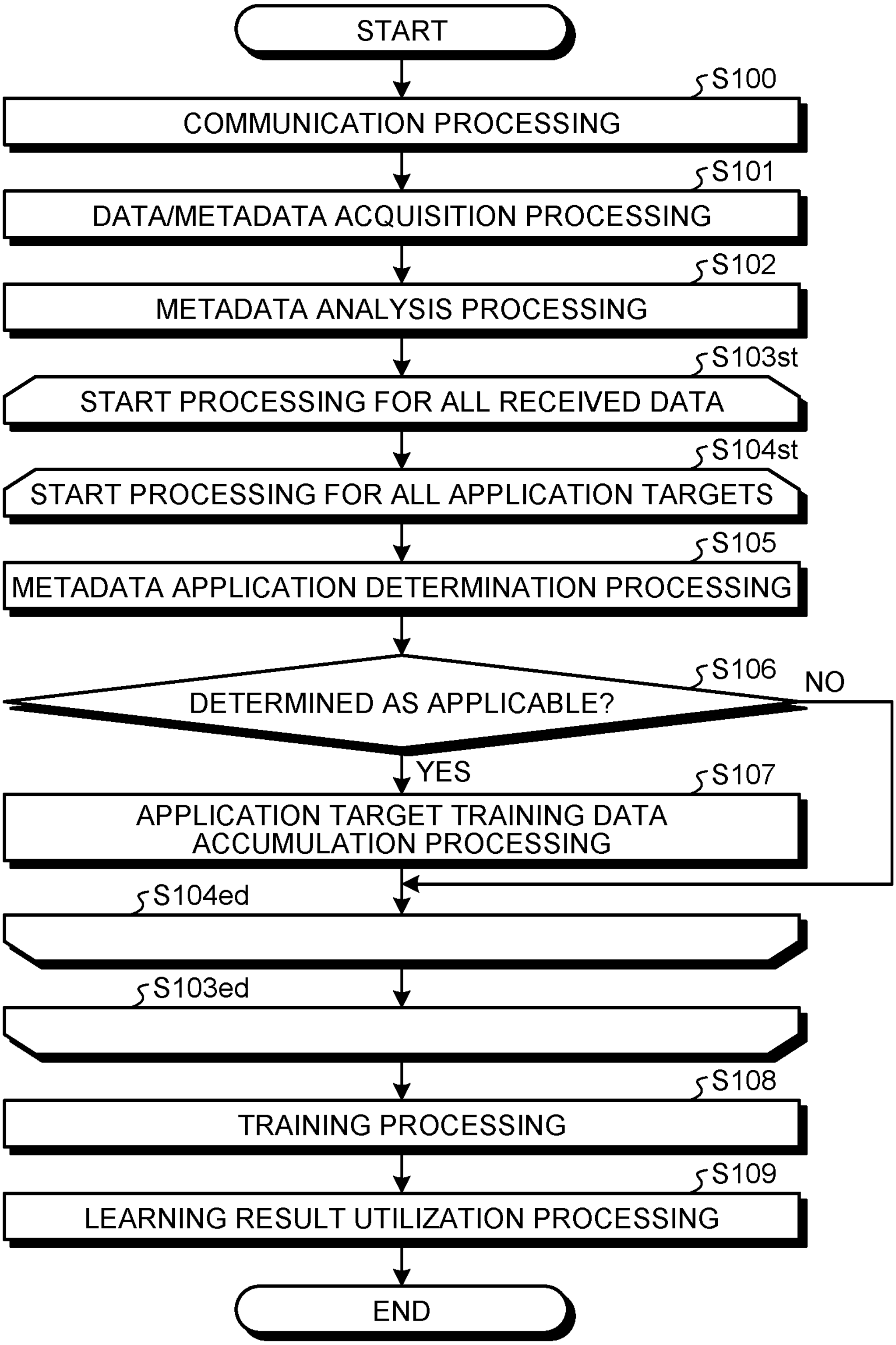
START
S100
COMMUNICATION PROCESSING
S101
DATA/METADATA ACQUISITION PROCESSING
S102
METADATA ANALYSIS PROCESSING
S103st
START PROCESSING FOR ALL RECEIVED DATA
S104st
START PROCESSING FOR ALL APPLICATION TARGETS
S105
METADATA APPLICATION DETERMINATION PROCESSING
S106
DETERMINED AS APPLICABLE?
NO
YES
S107
APPLICATION TARGET TRAINING DATA ACCUMULATION PROCESSING
S104ed
S103ed
S108
TRAINING PROCESSING
S109
LEARNING RESULT UTILIZATION PROCESSING
END

FIG.8

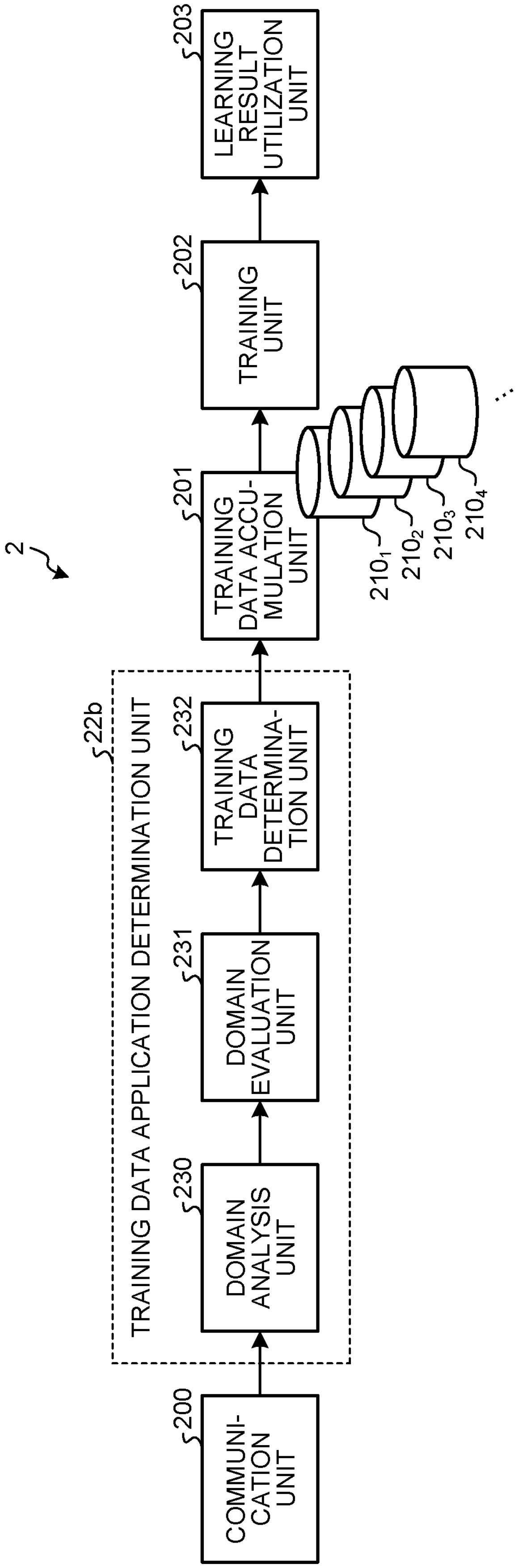
2
COMMUNI-CATION UNIT
200
TRAINING DATA APPLICATION DETERMINATION UNIT
22b
DOMAIN ANALYSIS UNIT
230
DOMAIN EVALUATION UNIT
231
TRAINING DATA DETERMINA-TION UNIT
232
TRAINING DATA ACCU-MULATION UNIT
201
$210_1$
$210_2$
$210_3$
$210_4$
...
TRAINING UNIT
202
LEARNING RESULT UTILIZATION UNIT
203

FIG.9

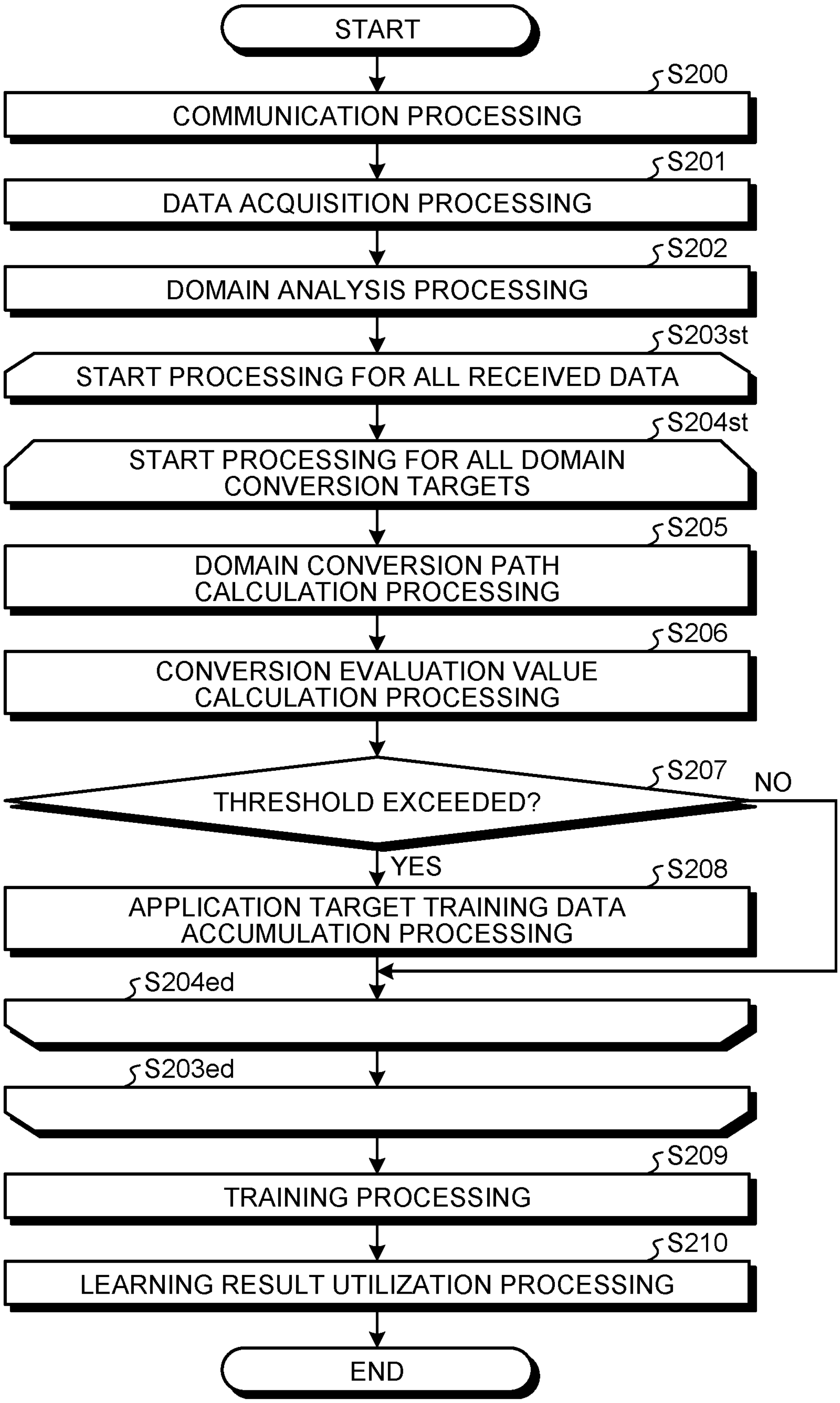
START
S200
COMMUNICATION PROCESSING
S201
DATA ACQUISITION PROCESSING
S202
DOMAIN ANALYSIS PROCESSING
S203st
START PROCESSING FOR ALL RECEIVED DATA
S204st
START PROCESSING FOR ALL DOMAIN CONVERSION TARGETS
S205
DOMAIN CONVERSION PATH CALCULATION PROCESSING
S206
CONVERSION EVALUATION VALUE CALCULATION PROCESSING
S207
THRESHOLD EXCEEDED?
NO
YES
S208
APPLICATION TARGET TRAINING DATA ACCUMULATION PROCESSING
S204ed
S203ed
S209
TRAINING PROCESSING
S210
LEARNING RESULT UTILIZATION PROCESSING
END

FIG.10

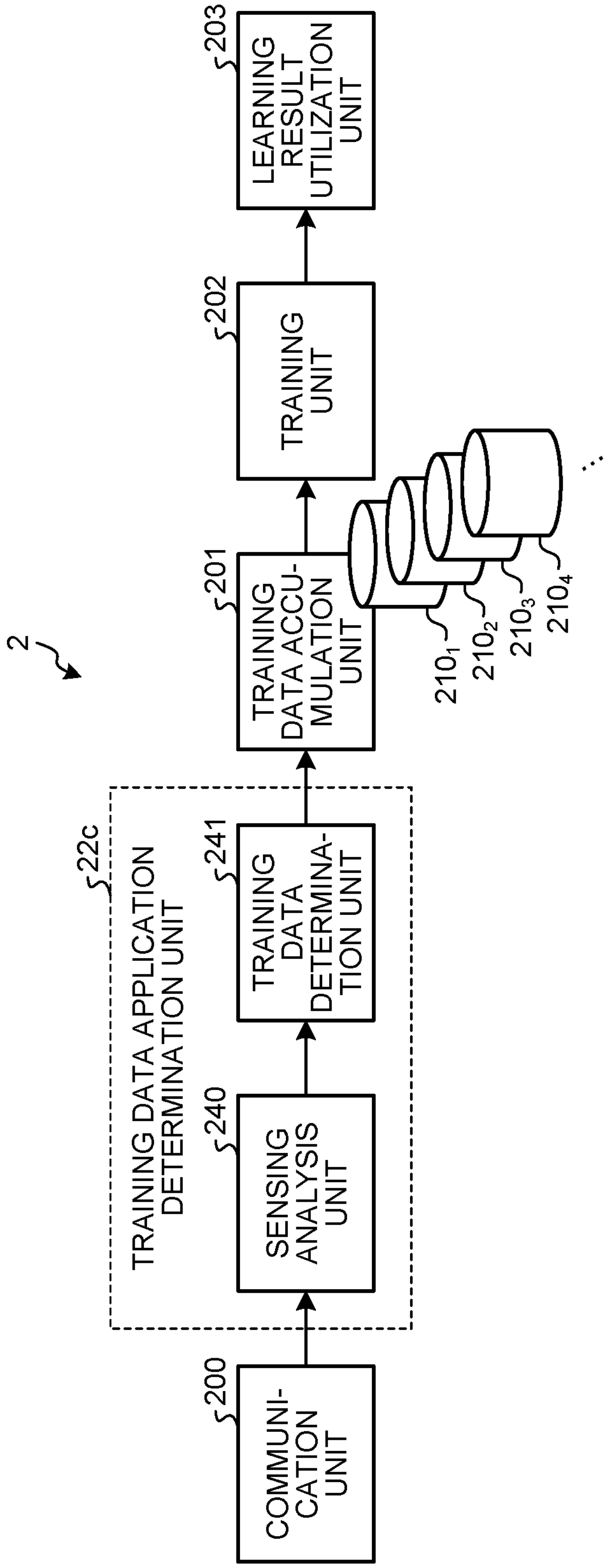
2
COMMUNI-
CATION
UNIT
200
TRAINING DATA APPLICATION
DETERMINATION UNIT
22c
SENSING
ANALYSIS
UNIT
240
TRAINING
DATA
DETERMINA-
TION UNIT
241
TRAINING
DATA ACCU-
MULATION
UNIT
201
TRAINING
UNIT
202
LEARNING
RESULT
UTILIZATION
UNIT
203
$210_1$
$210_2$
$210_3$
$210_4$
...

FIG.11

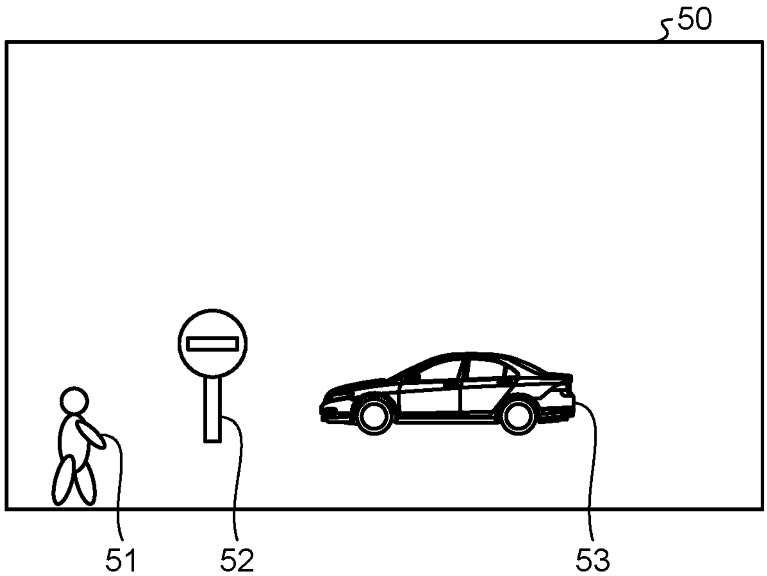

FIG.12

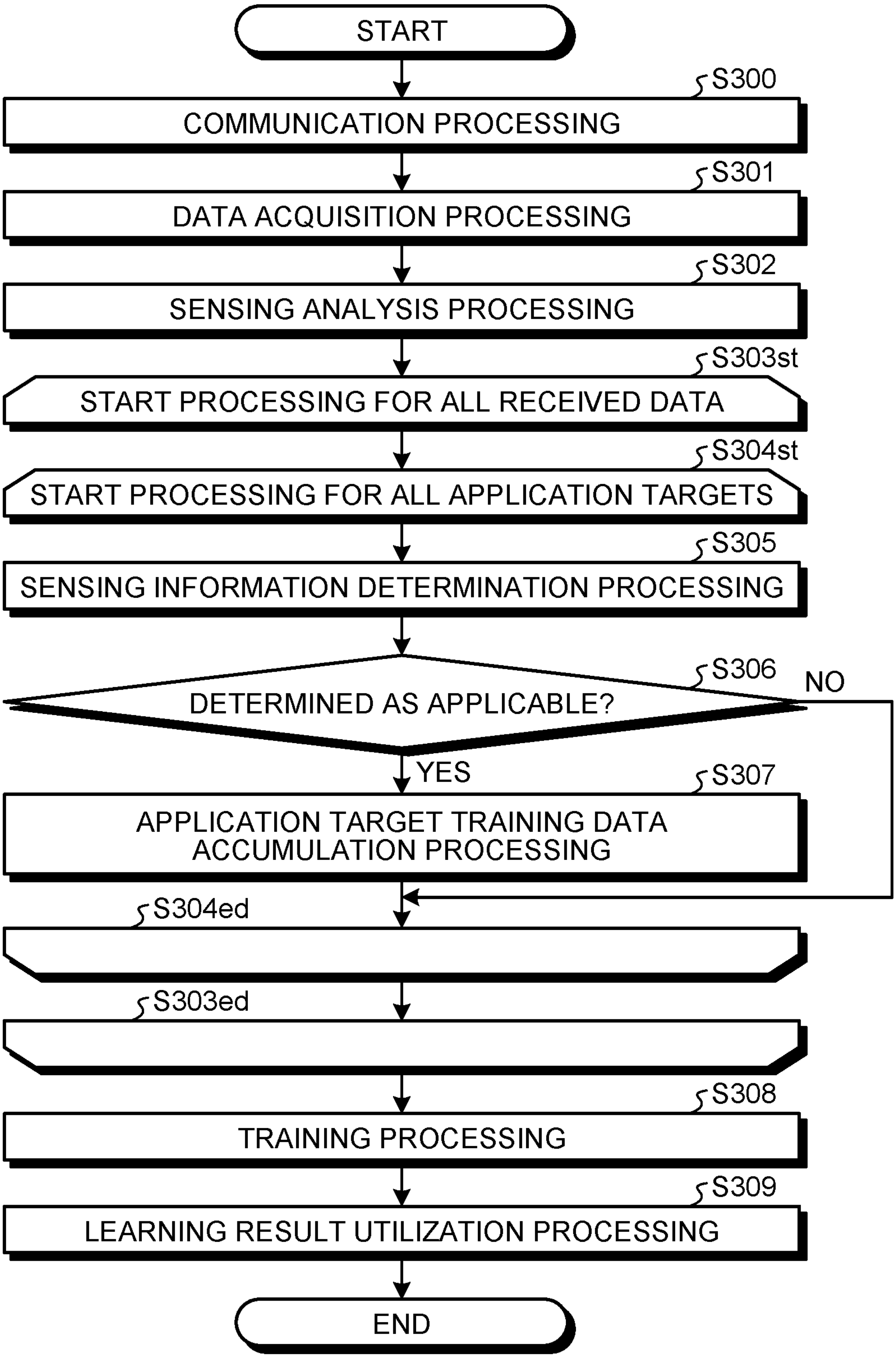
START
S300
COMMUNICATION PROCESSING
S301
DATA ACQUISITION PROCESSING
S302
SENSING ANALYSIS PROCESSING
S303st
START PROCESSING FOR ALL RECEIVED DATA
S304st
START PROCESSING FOR ALL APPLICATION TARGETS
S305
SENSING INFORMATION DETERMINATION PROCESSING
S306
DETERMINED AS APPLICABLE?
NO
YES
S307
APPLICATION TARGET TRAINING DATA ACCUMULATION PROCESSING
S304ed
S303ed
S308
TRAINING PROCESSING
S309
LEARNING RESULT UTILIZATION PROCESSING
END

FIG.13

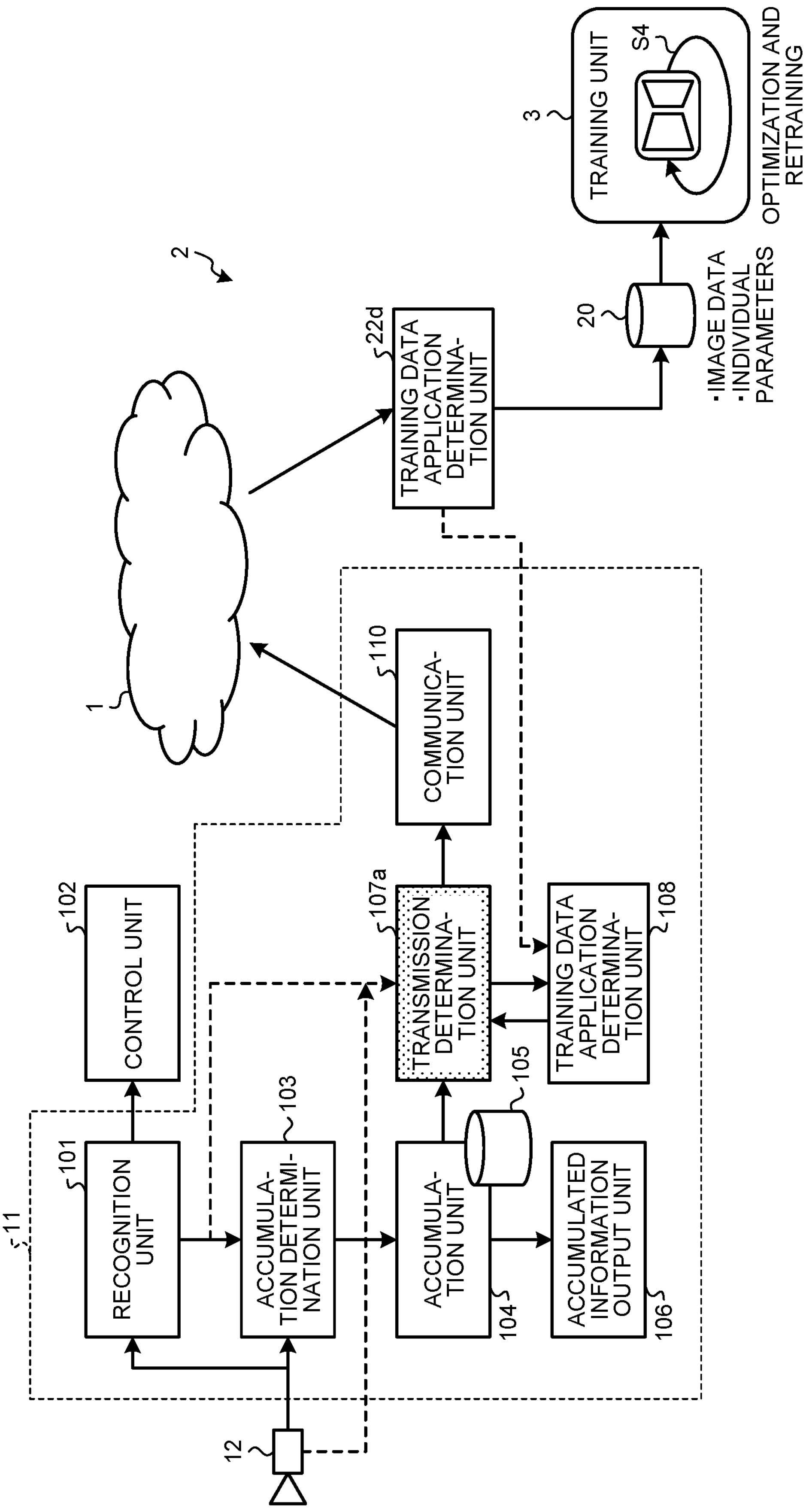
2
1
3
TRAINING UNIT
S4
OPTIMIZATION AND RETRAINING
22d
TRAINING DATA APPLICATION DETERMINATION UNIT
20
·IMAGE DATA
·INDIVIDUAL PARAMETERS
110
COMMUNICATION UNIT
11
101
RECOGNITION UNIT
102
CONTROL UNIT
103
ACCUMULATION DETERMINATION UNIT
104
ACCUMULATION UNIT
105
107a
TRANSMISSION DETERMINATION UNIT
108
TRAINING DATA APPLICATION DETERMINATION UNIT
106
ACCUMULATED INFORMATION OUTPUT UNIT
12

FIG.14

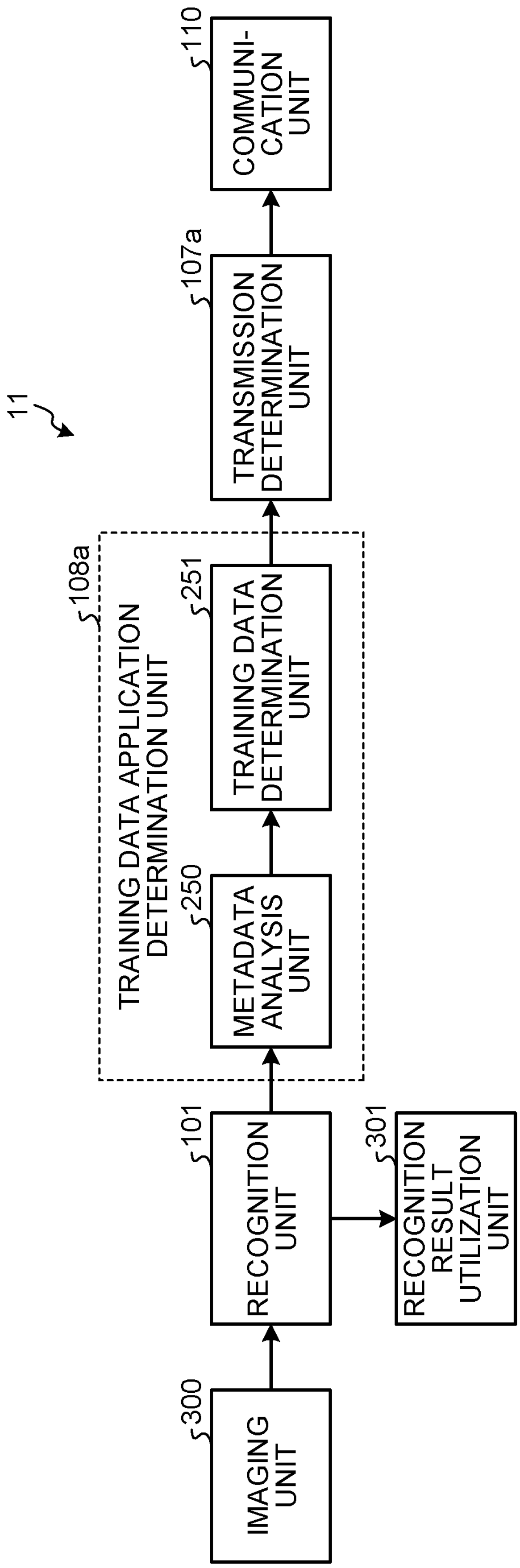
11
IMAGING UNIT
300
RECOGNITION UNIT
101
RECOGNITION RESULT UTILIZATION UNIT
301
TRAINING DATA APPLICATION DETERMINATION UNIT
108a
METADATA ANALYSIS UNIT
250
TRAINING DATA DETERMINATION UNIT
251
TRANSMISSION DETERMINATION UNIT
107a
COMMUNI-CATION UNIT
110

FIG.15

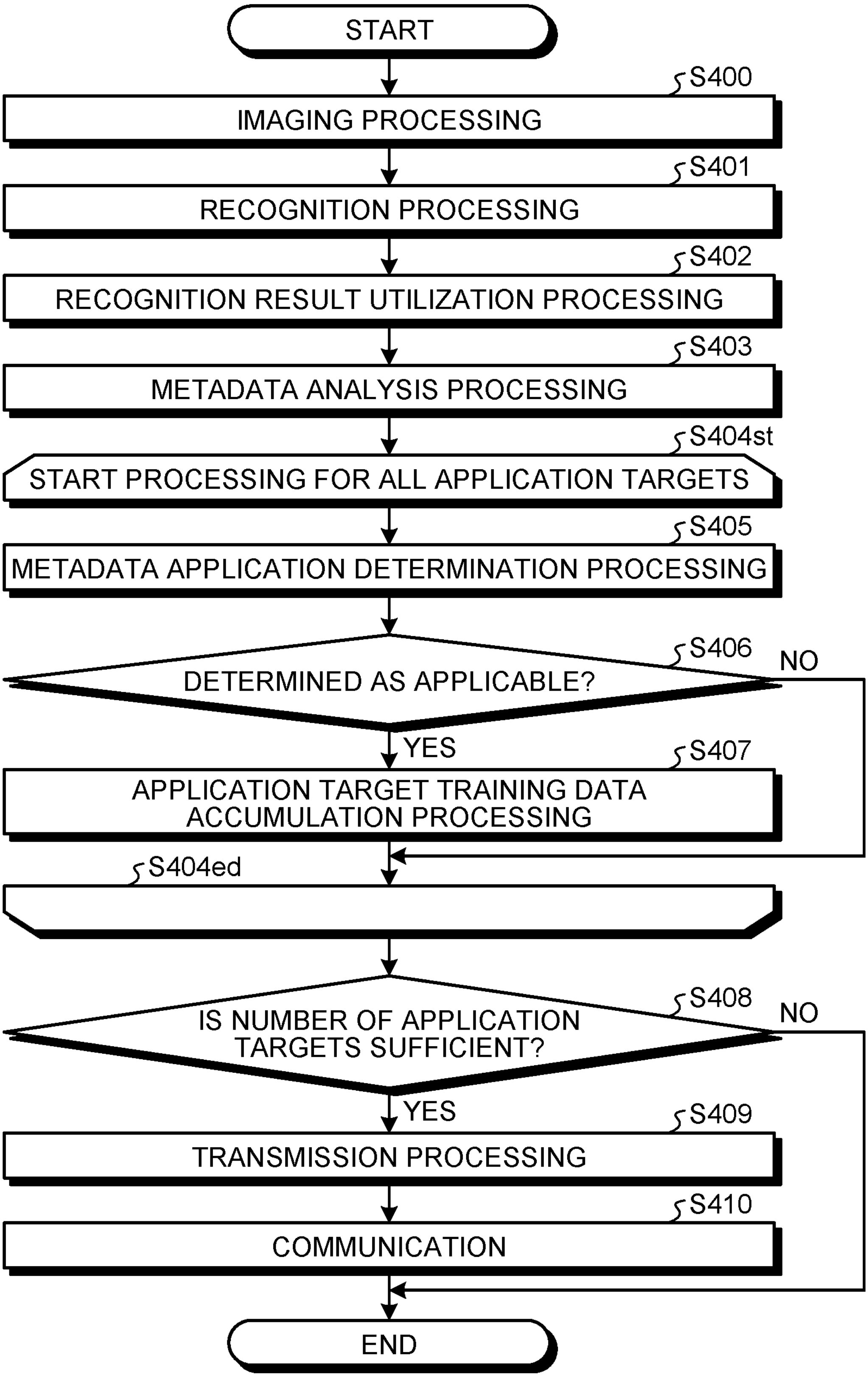
START
S400
IMAGING PROCESSING
S401
RECOGNITION PROCESSING
S402
RECOGNITION RESULT UTILIZATION PROCESSING
S403
METADATA ANALYSIS PROCESSING
S404st
START PROCESSING FOR ALL APPLICATION TARGETS
S405
METADATA APPLICATION DETERMINATION PROCESSING
S406
DETERMINED AS APPLICABLE?
NO
YES
S407
APPLICATION TARGET TRAINING DATA ACCUMULATION PROCESSING
S404ed
S408
IS NUMBER OF APPLICATION TARGETS SUFFICIENT?
NO
YES
S409
TRANSMISSION PROCESSING
S410
COMMUNICATION
END

FIG.16

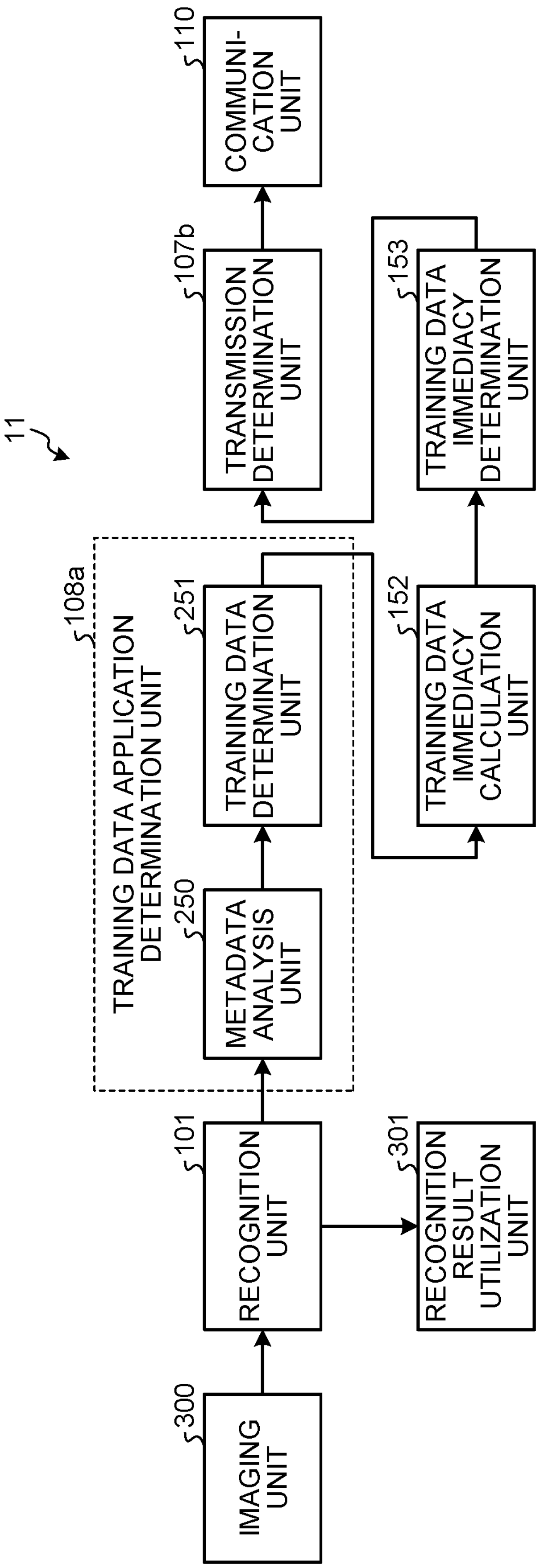
11
IMAGING UNIT
300
RECOGNITION UNIT
101
RECOGNITION RESULT UTILIZATION UNIT
301
TRAINING DATA APPLICATION DETERMINATION UNIT
108a
METADATA ANALYSIS UNIT
250
TRAINING DATA DETERMINATION UNIT
251
TRAINING DATA IMMEDIACY CALCULATION UNIT
152
TRAINING DATA IMMEDIACY DETERMINATION UNIT
153
TRANSMISSION DETERMINATION UNIT
107b
COMMUNI-CATION UNIT
110

FIG.17

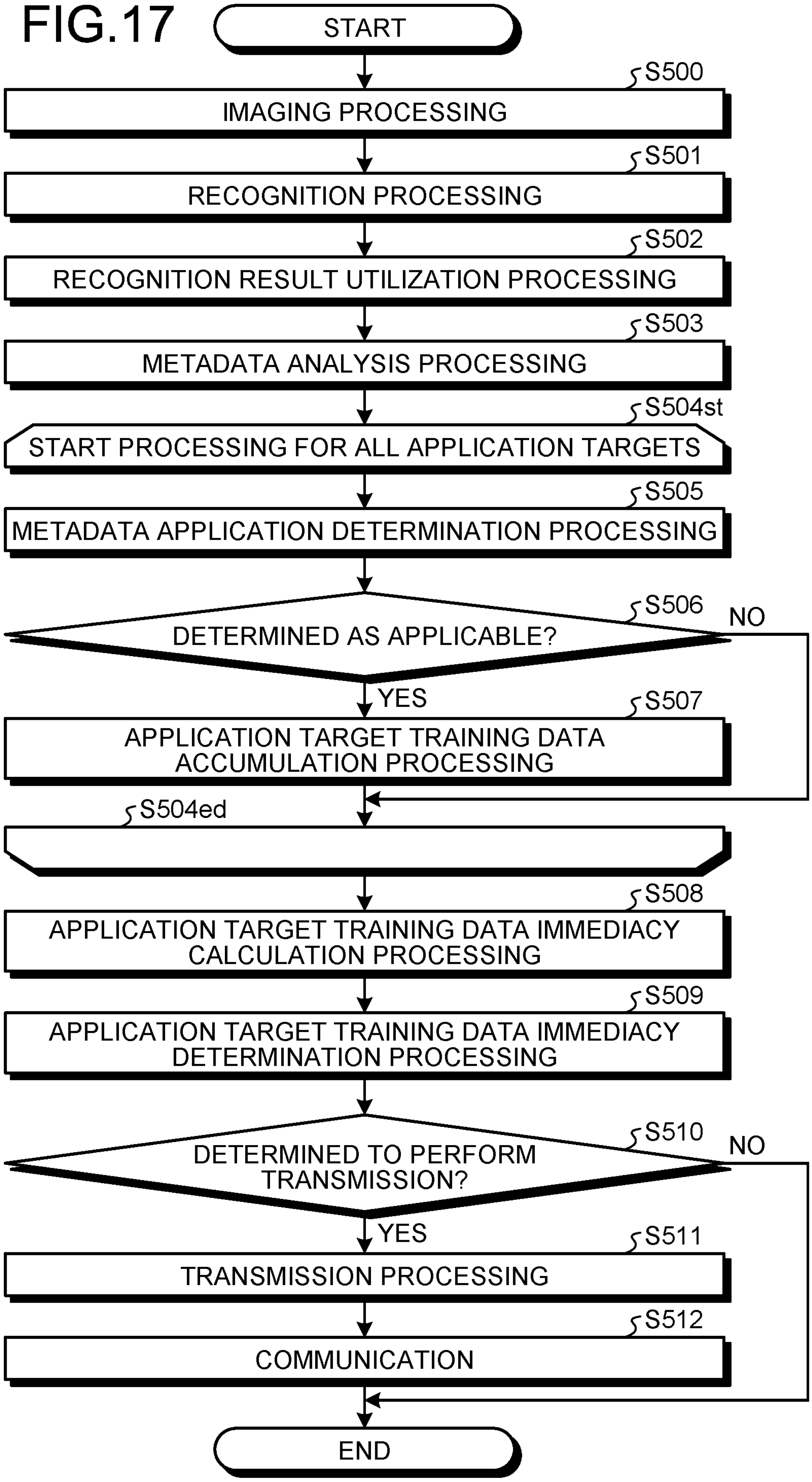
START
S500
IMAGING PROCESSING
S501
RECOGNITION PROCESSING
S502
RECOGNITION RESULT UTILIZATION PROCESSING
S503
METADATA ANALYSIS PROCESSING
S504st
START PROCESSING FOR ALL APPLICATION TARGETS
S505
METADATA APPLICATION DETERMINATION PROCESSING
S506
DETERMINED AS APPLICABLE?
NO
YES
S507
APPLICATION TARGET TRAINING DATA ACCUMULATION PROCESSING
S504ed
S508
APPLICATION TARGET TRAINING DATA IMMEDIACY CALCULATION PROCESSING
S509
APPLICATION TARGET TRAINING DATA IMMEDIACY DETERMINATION PROCESSING
S510
DETERMINED TO PERFORM TRANSMISSION?
NO
YES
S511
TRANSMISSION PROCESSING
S512
COMMUNICATION
END

FIG.18

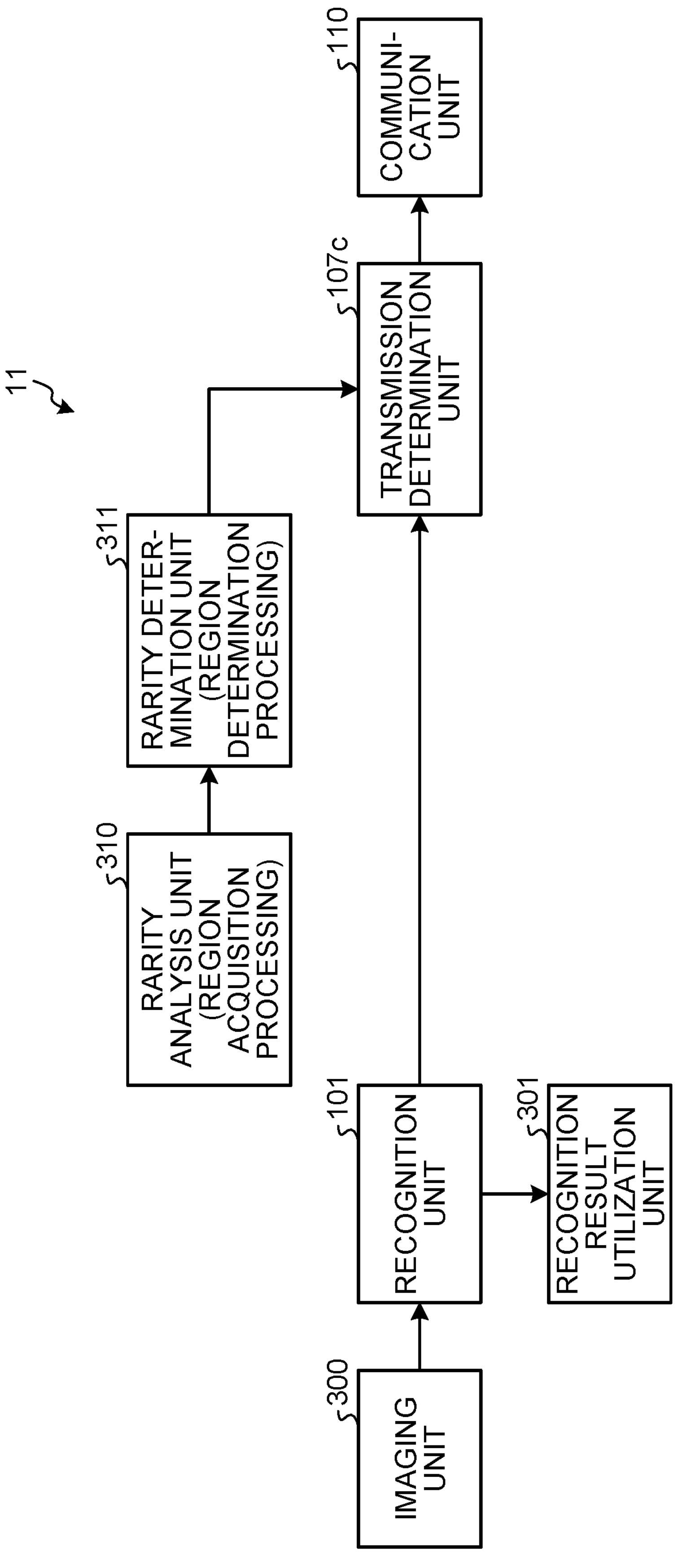
11
IMAGING UNIT
300
RECOGNITION UNIT
101
RECOGNITION RESULT UTILIZATION UNIT
301
RARITY ANALYSIS UNIT (REGION ACQUISITION PROCESSING)
310
RARITY DETERMINATION UNIT (REGION DETERMINATION PROCESSING)
311
TRANSMISSION DETERMINATION UNIT
107c
COMMUNICATION UNIT
110

FIG.19

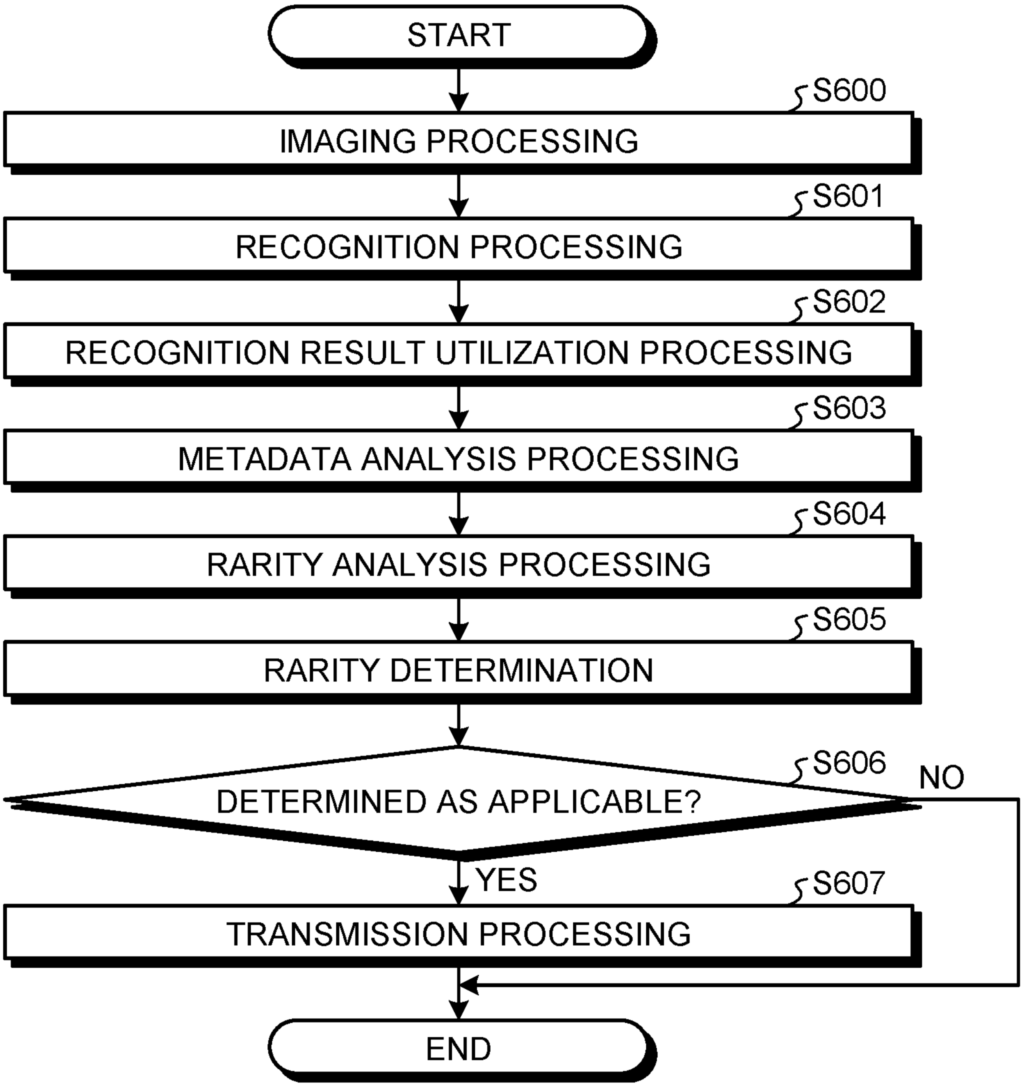
START
S600
IMAGING PROCESSING
S601
RECOGNITION PROCESSING
S602
RECOGNITION RESULT UTILIZATION PROCESSING
S603
METADATA ANALYSIS PROCESSING
S604
RARITY ANALYSIS PROCESSING
S605
RARITY DETERMINATION
S606
DETERMINED AS APPLICABLE?
NO
YES
S607
TRANSMISSION PROCESSING
END

FIG.20

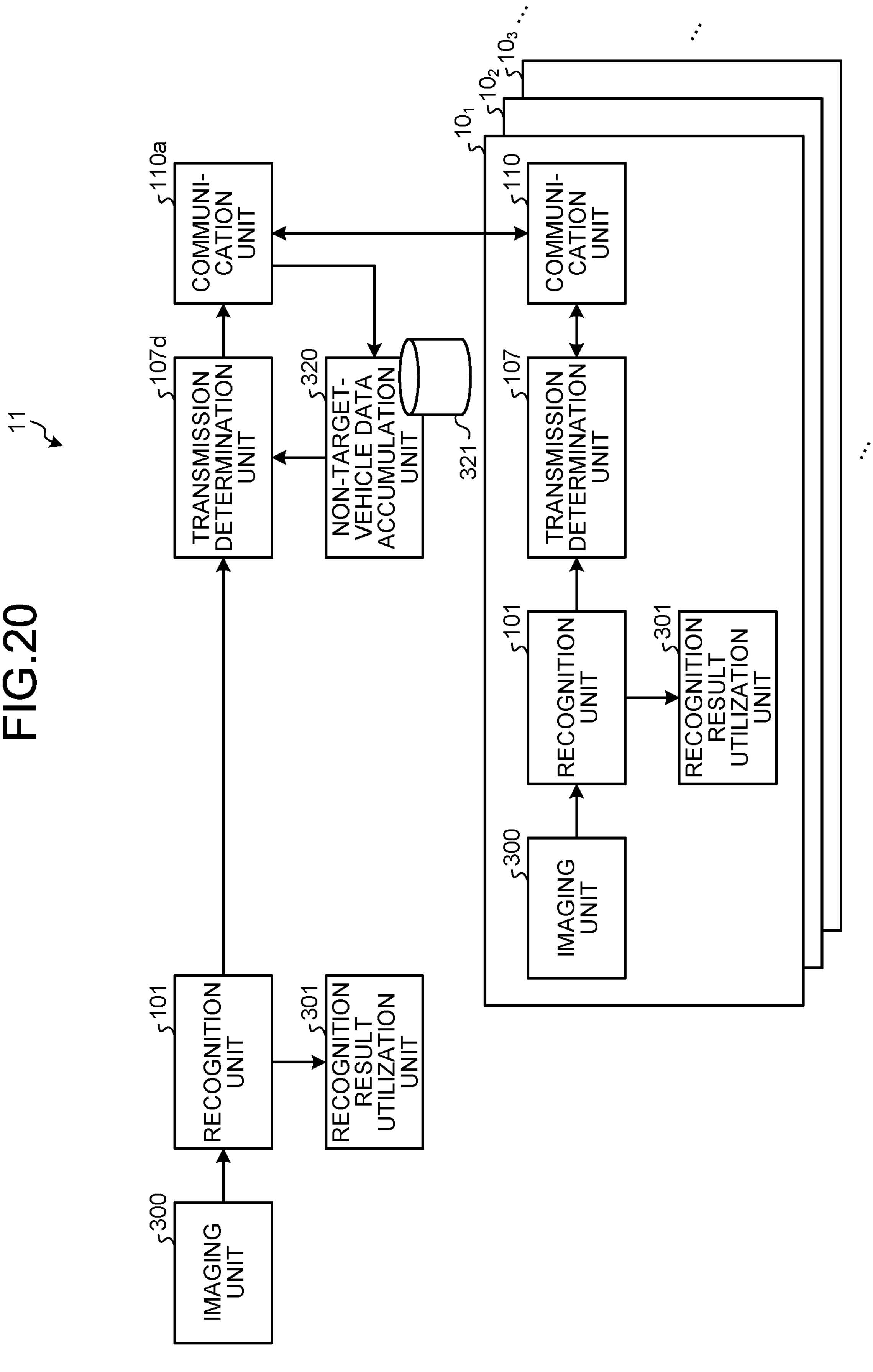
11
IMAGING UNIT
300
RECOGNITION UNIT
101
RECOGNITION RESULT UTILIZATION UNIT
301
TRANSMISSION DETERMINATION UNIT
107d
COMMUNI-CATION UNIT
110a
NON-TARGET-VEHICLE DATA ACCUMULATION UNIT
320
321
$10_1$
$10_2$
$10_3$
COMMUNI-CATION UNIT
110
TRANSMISSION DETERMINATION UNIT
107
RECOGNITION UNIT
101
RECOGNITION RESULT UTILIZATION UNIT
301
IMAGING UNIT
300

FIG.21

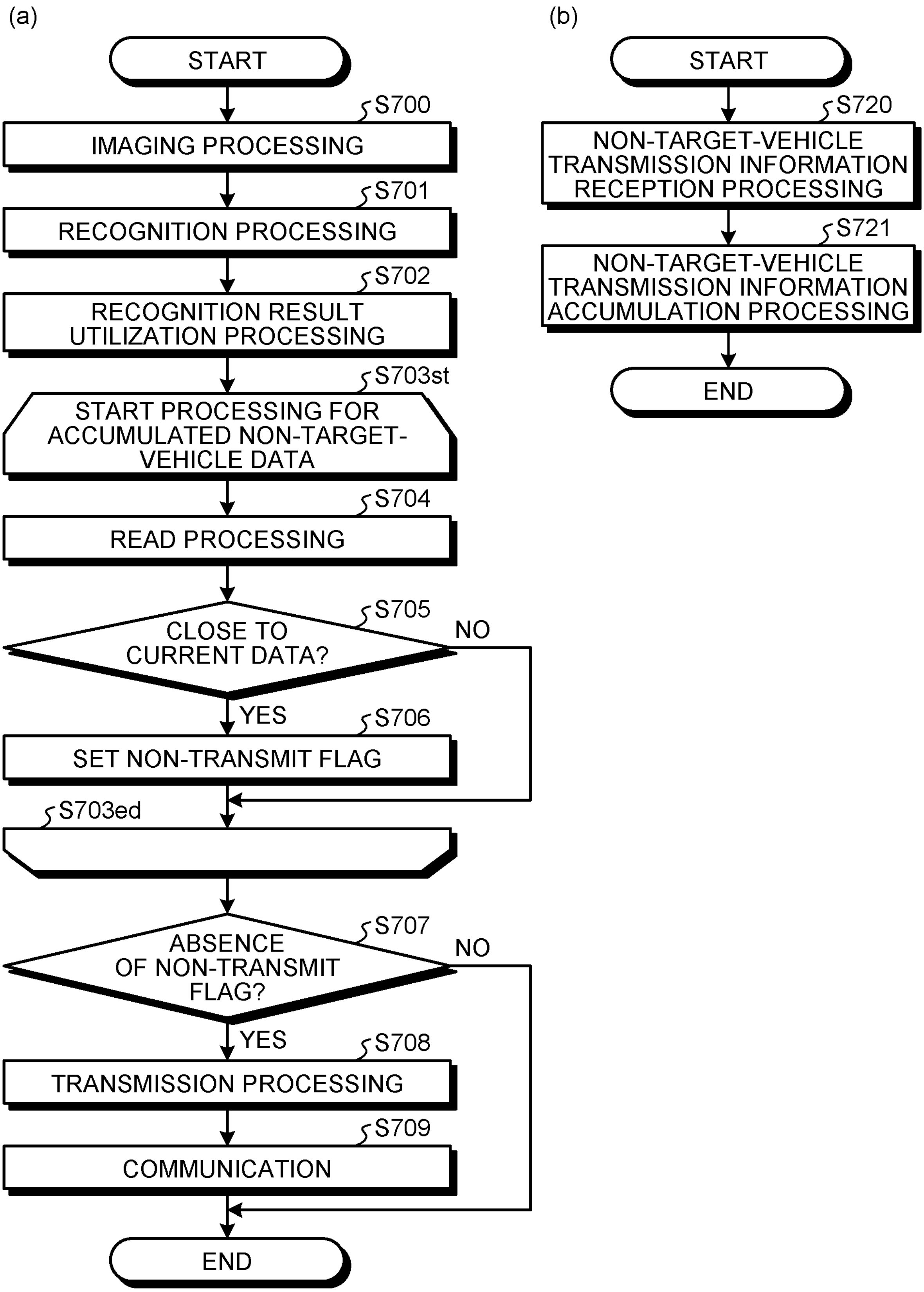
(a)
START
S700
IMAGING PROCESSING
S701
RECOGNITION PROCESSING
S702
RECOGNITION RESULT UTILIZATION PROCESSING
S703st
START PROCESSING FOR ACCUMULATED NON-TARGET-VEHICLE DATA
S704
READ PROCESSING
S705
CLOSE TO CURRENT DATA?
NO
YES
S706
SET NON-TRANSMIT FLAG
S703ed
S707
ABSENCE OF NON-TRANSMIT FLAG?
NO
YES
S708
TRANSMISSION PROCESSING
S709
COMMUNICATION
END
(b)
START
S720
NON-TARGET-VEHICLE TRANSMISSION INFORMATION RECEPTION PROCESSING
S721
NON-TARGET-VEHICLE TRANSMISSION INFORMATION ACCUMULATION PROCESSING
END

FIG.22

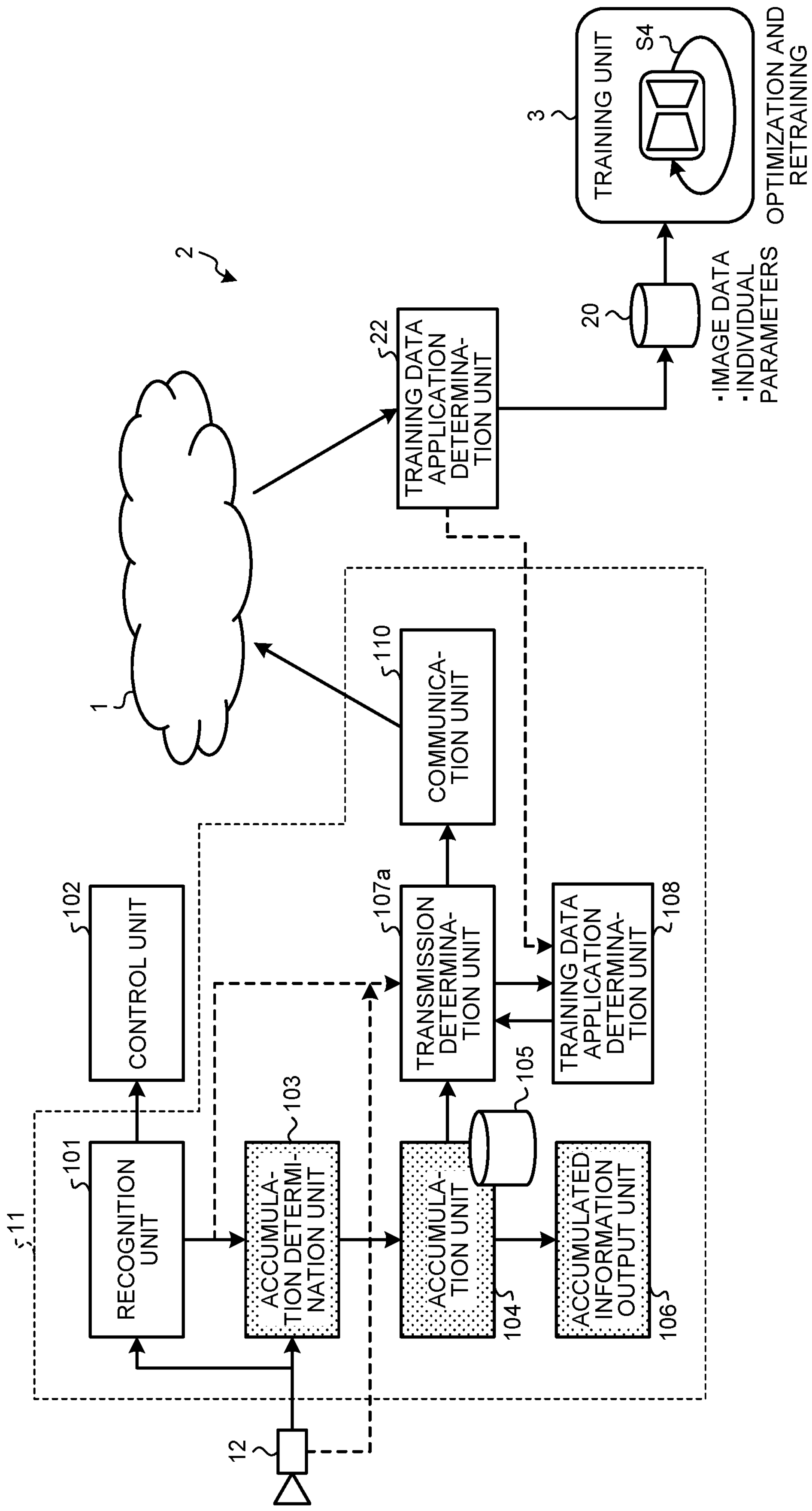
2
1
11
12
RECOGNITION UNIT
101
CONTROL UNIT
102
ACCUMULATION DETERMINATION UNIT
103
ACCUMULATION UNIT
104
105
ACCUMULATED INFORMATION OUTPUT UNIT
106
TRANSMISSION DETERMINATION UNIT
107a
TRAINING DATA APPLICATION DETERMINATION UNIT
108
COMMUNICATION UNIT
110
TRAINING DATA APPLICATION DETERMINATION UNIT
22
20
·IMAGE DATA
·INDIVIDUAL PARAMETERS
TRAINING UNIT
3
S4
OPTIMIZATION AND RETRAINING

FIG.23

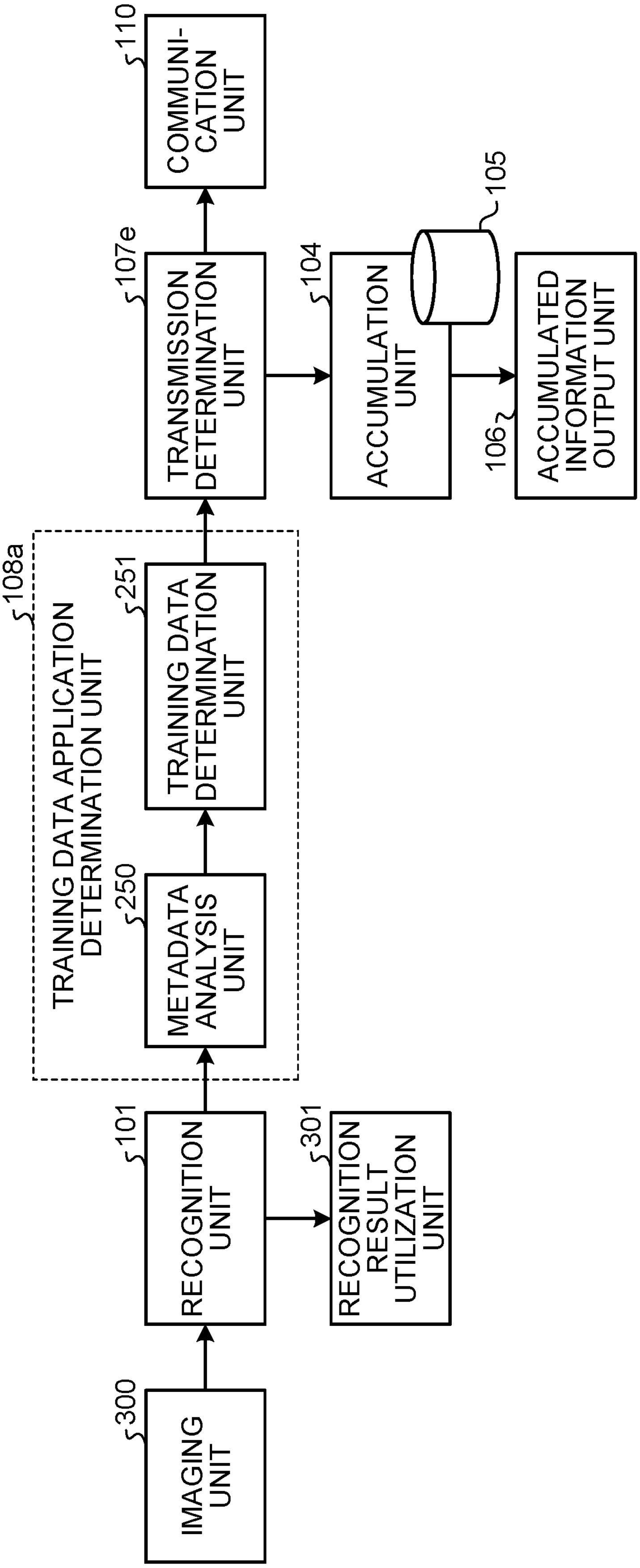
IMAGING UNIT
300
RECOGNITION UNIT
101
RECOGNITION RESULT UTILIZATION UNIT
301
TRAINING DATA APPLICATION DETERMINATION UNIT
108a
METADATA ANALYSIS UNIT
250
TRAINING DATA DETERMINATION UNIT
251
TRANSMISSION DETERMINATION UNIT
107e
COMMUNI-CATION UNIT
110
ACCUMULATION UNIT
104
105
ACCUMULATED INFORMATION OUTPUT UNIT
106

FIG.24

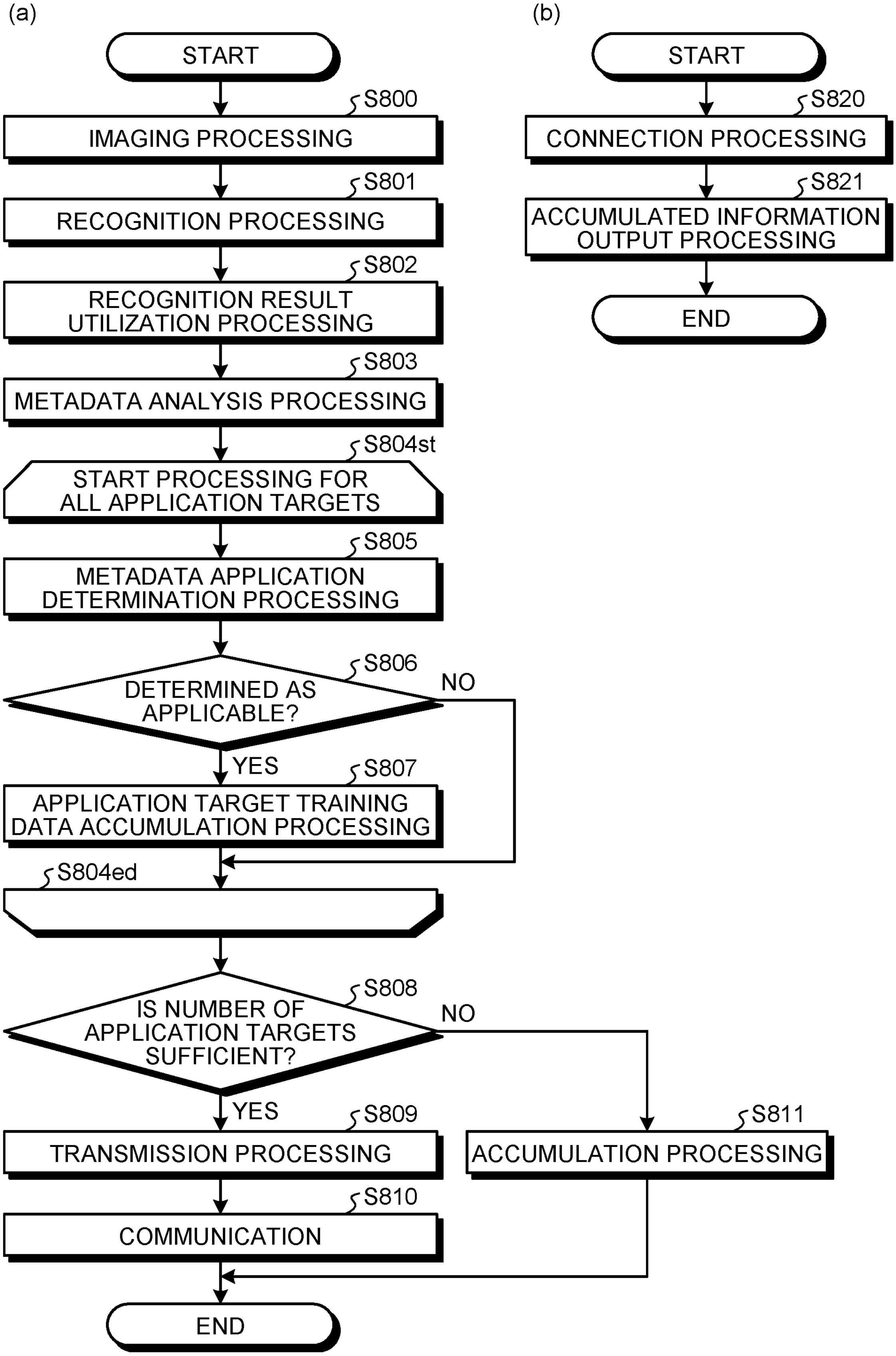
(a)
START
S800
IMAGING PROCESSING
S801
RECOGNITION PROCESSING
S802
RECOGNITION RESULT UTILIZATION PROCESSING
S803
METADATA ANALYSIS PROCESSING
S804st
START PROCESSING FOR ALL APPLICATION TARGETS
S805
METADATA APPLICATION DETERMINATION PROCESSING
S806
DETERMINED AS APPLICABLE?
NO
YES
S807
APPLICATION TARGET TRAINING DATA ACCUMULATION PROCESSING
S804ed
S808
IS NUMBER OF APPLICATION TARGETS SUFFICIENT?
NO
YES
S809
TRANSMISSION PROCESSING
S811
ACCUMULATION PROCESSING
S810
COMMUNICATION
END
(b)
START
S820
CONNECTION PROCESSING
S821
ACCUMULATED INFORMATION OUTPUT PROCESSING
END

# FIG.25

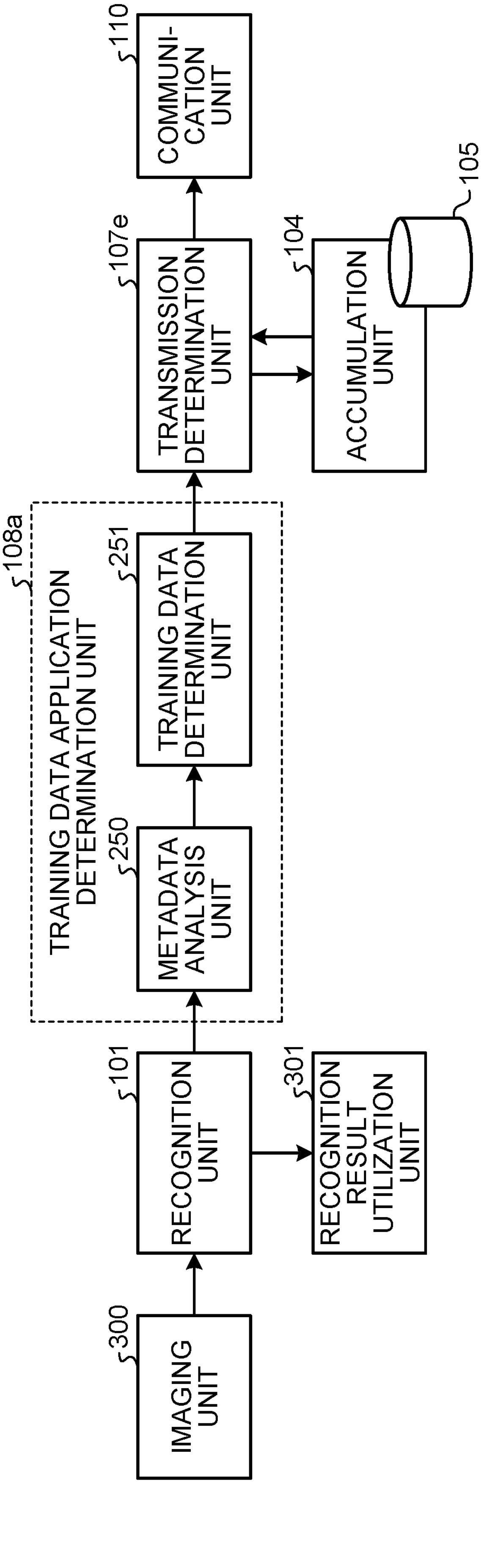
IMAGING UNIT
300
RECOGNITION UNIT
101
RECOGNITION RESULT UTILIZATION UNIT
301
TRAINING DATA APPLICATION DETERMINATION UNIT
108a
METADATA ANALYSIS UNIT
250
TRAINING DATA DETERMINATION UNIT
251
TRANSMISSION DETERMINATION UNIT
107e
ACCUMULATION UNIT
104
105
COMMUNI-CATION UNIT
110

FIG.26

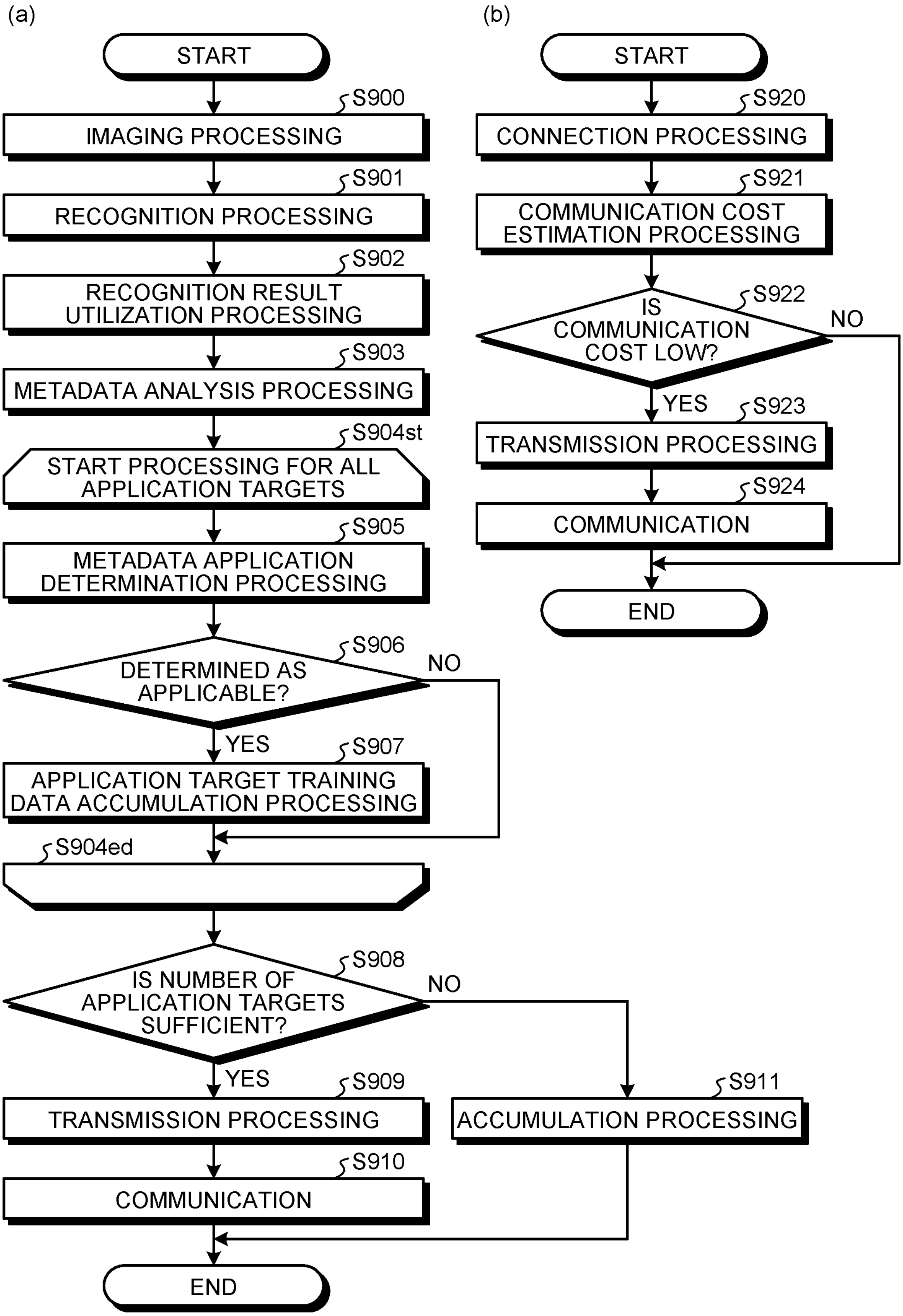
(a)
START
S900
IMAGING PROCESSING
S901
RECOGNITION PROCESSING
S902
RECOGNITION RESULT UTILIZATION PROCESSING
S903
METADATA ANALYSIS PROCESSING
S904st
START PROCESSING FOR ALL APPLICATION TARGETS
S905
METADATA APPLICATION DETERMINATION PROCESSING
S906
DETERMINED AS APPLICABLE?
NO
YES
S907
APPLICATION TARGET TRAINING DATA ACCUMULATION PROCESSING
S904ed
S908
IS NUMBER OF APPLICATION TARGETS SUFFICIENT?
NO
YES
S909
TRANSMISSION PROCESSING
S911
ACCUMULATION PROCESSING
S910
COMMUNICATION
END
(b)
START
S920
CONNECTION PROCESSING
S921
COMMUNICATION COST ESTIMATION PROCESSING
S922
IS COMMUNICATION COST LOW?
NO
YES
S923
TRANSMISSION PROCESSING
S924
COMMUNICATION
END

FIG.27

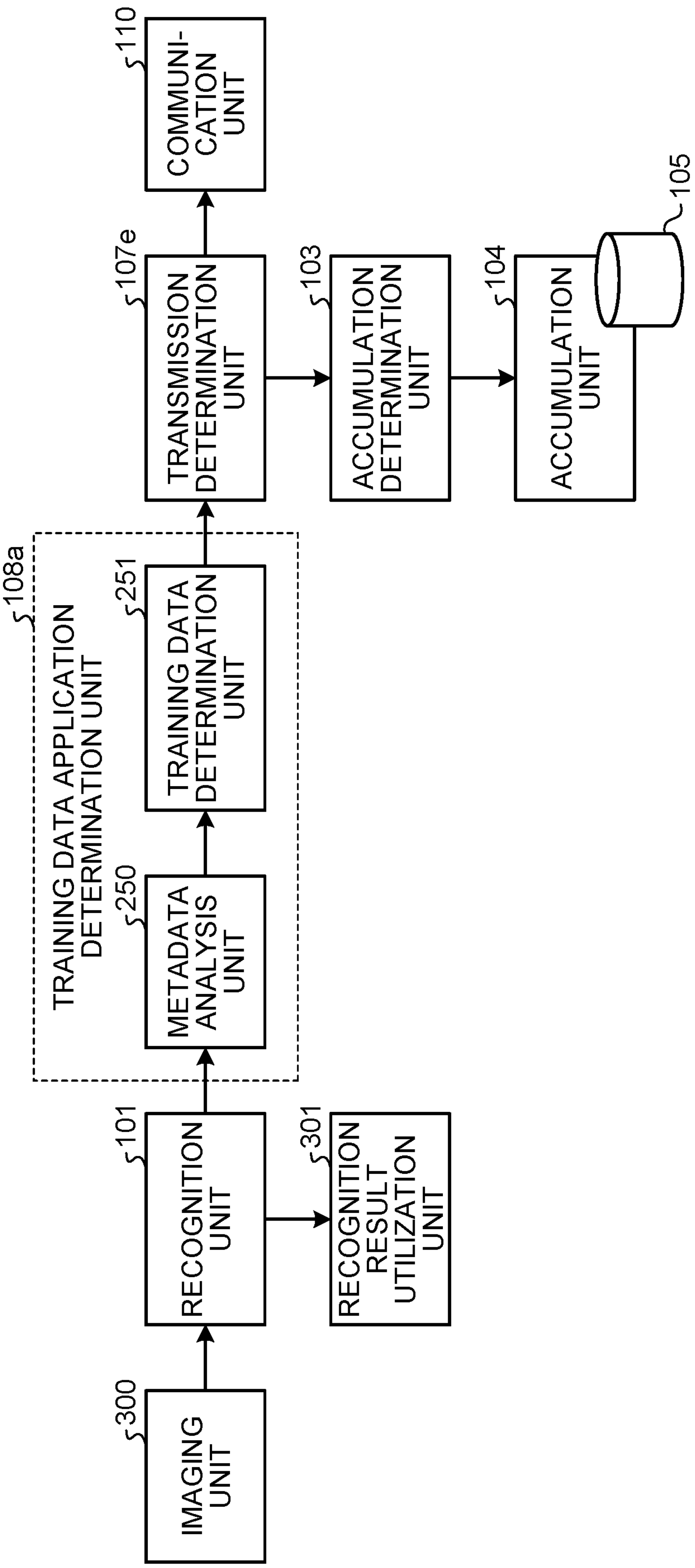

IMAGING UNIT
300
RECOGNITION UNIT
101
RECOGNITION RESULT UTILIZATION UNIT
301
TRAINING DATA APPLICATION DETERMINATION UNIT
108a
METADATA ANALYSIS UNIT
250
TRAINING DATA DETERMINATION UNIT
251
TRANSMISSION DETERMINATION UNIT
107e
COMMUNI-CATION UNIT
110
ACCUMULATION DETERMINATION UNIT
103
ACCUMULATION UNIT
104
105

FIG.28

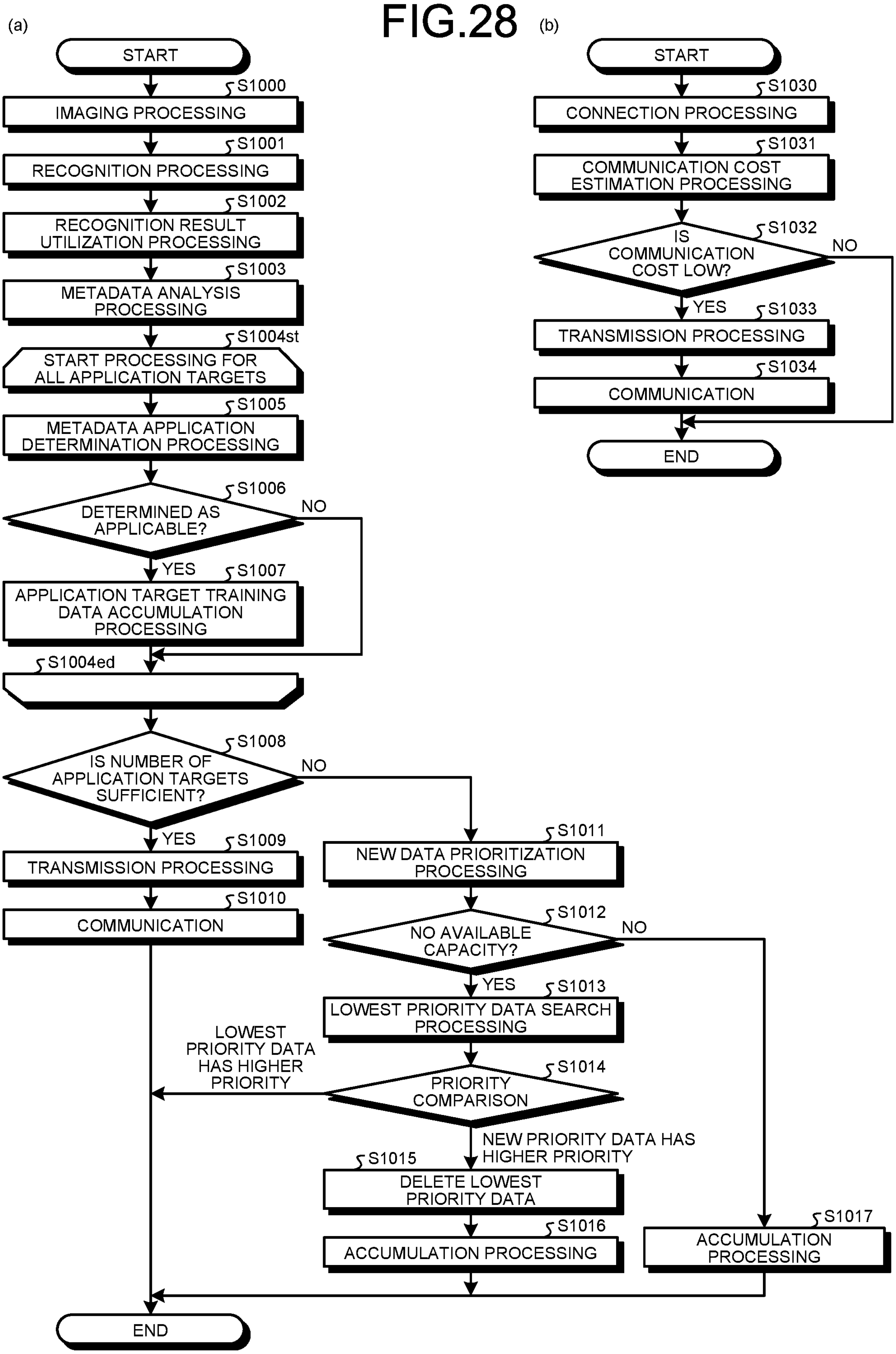
(a)
START
S1000
IMAGING PROCESSING
S1001
RECOGNITION PROCESSING
S1002
RECOGNITION RESULT UTILIZATION PROCESSING
S1003
METADATA ANALYSIS PROCESSING
S1004st
START PROCESSING FOR ALL APPLICATION TARGETS
S1005
METADATA APPLICATION DETERMINATION PROCESSING
S1006
DETERMINED AS APPLICABLE?
NO
YES
S1007
APPLICATION TARGET TRAINING DATA ACCUMULATION PROCESSING
S1004ed
S1008
IS NUMBER OF APPLICATION TARGETS SUFFICIENT?
NO
YES
S1009
TRANSMISSION PROCESSING
S1010
COMMUNICATION
S1011
NEW DATA PRIORITIZATION PROCESSING
S1012
NO AVAILABLE CAPACITY?
NO
YES
S1013
LOWEST PRIORITY DATA SEARCH PROCESSING
LOWEST PRIORITY DATA HAS HIGHER PRIORITY
S1014
PRIORITY COMPARISON
NEW PRIORITY DATA HAS HIGHER PRIORITY
S1015
DELETE LOWEST PRIORITY DATA
S1016
ACCUMULATION PROCESSING
S1017
ACCUMULATION PROCESSING
END
(b)
START
S1030
CONNECTION PROCESSING
S1031
COMMUNICATION COST ESTIMATION PROCESSING
S1032
IS COMMUNICATION COST LOW?
NO
YES
S1033
TRANSMISSION PROCESSING
S1034
COMMUNICATION
END

FIG.29

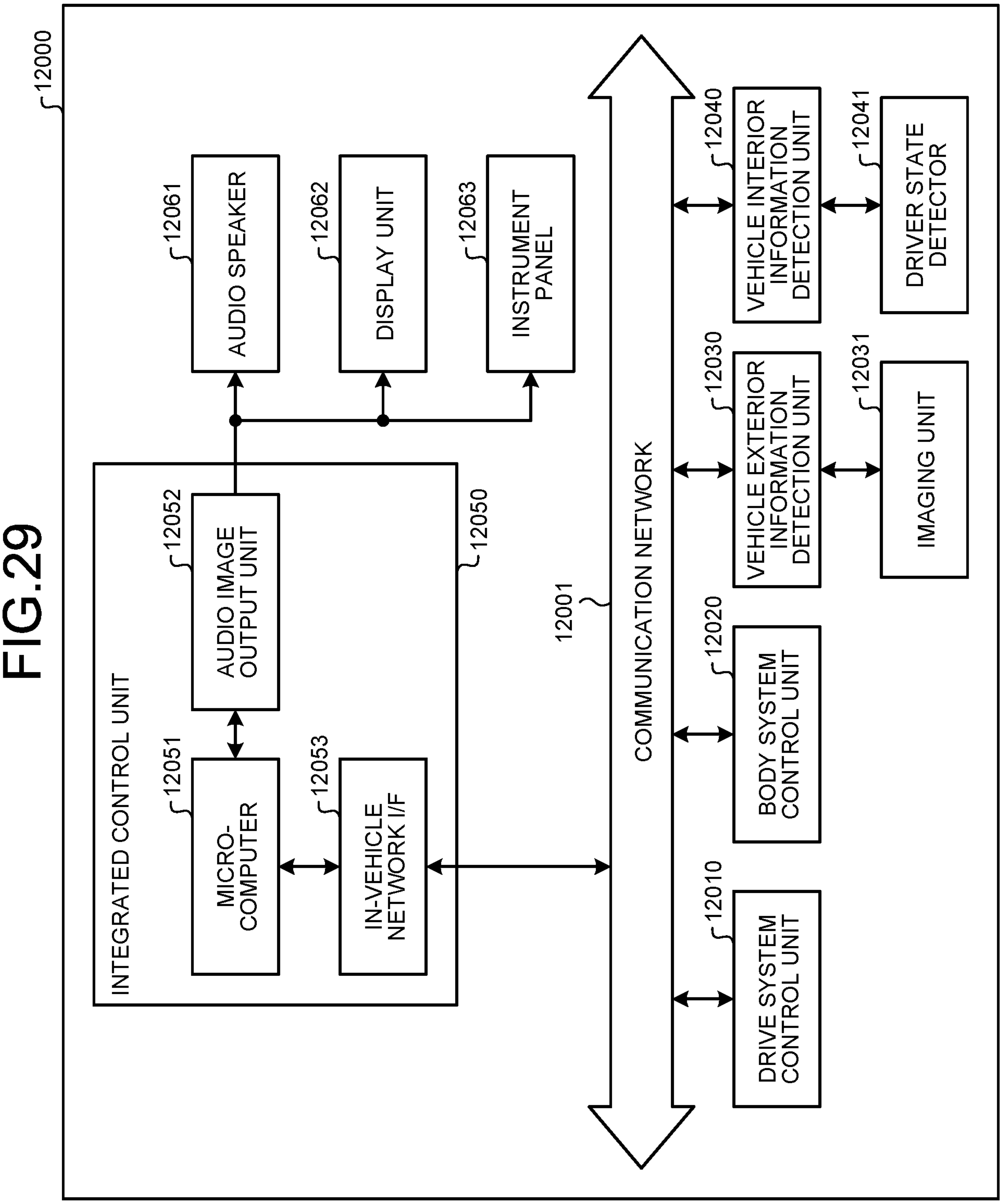
12000
INTEGRATED CONTROL UNIT
12050
MICRO-COMPUTER
12051
AUDIO IMAGE OUTPUT UNIT
12052
IN-VEHICLE NETWORK I/F
12053
AUDIO SPEAKER
12061
DISPLAY UNIT
12062
INSTRUMENT PANEL
12063
COMMUNICATION NETWORK
12001
DRIVE SYSTEM CONTROL UNIT
12010
BODY SYSTEM CONTROL UNIT
12020
VEHICLE EXTERIOR INFORMATION DETECTION UNIT
12030
IMAGING UNIT
12031
VEHICLE INTERIOR INFORMATION DETECTION UNIT
12040
DRIVER STATE DETECTOR
12041

FIG.30

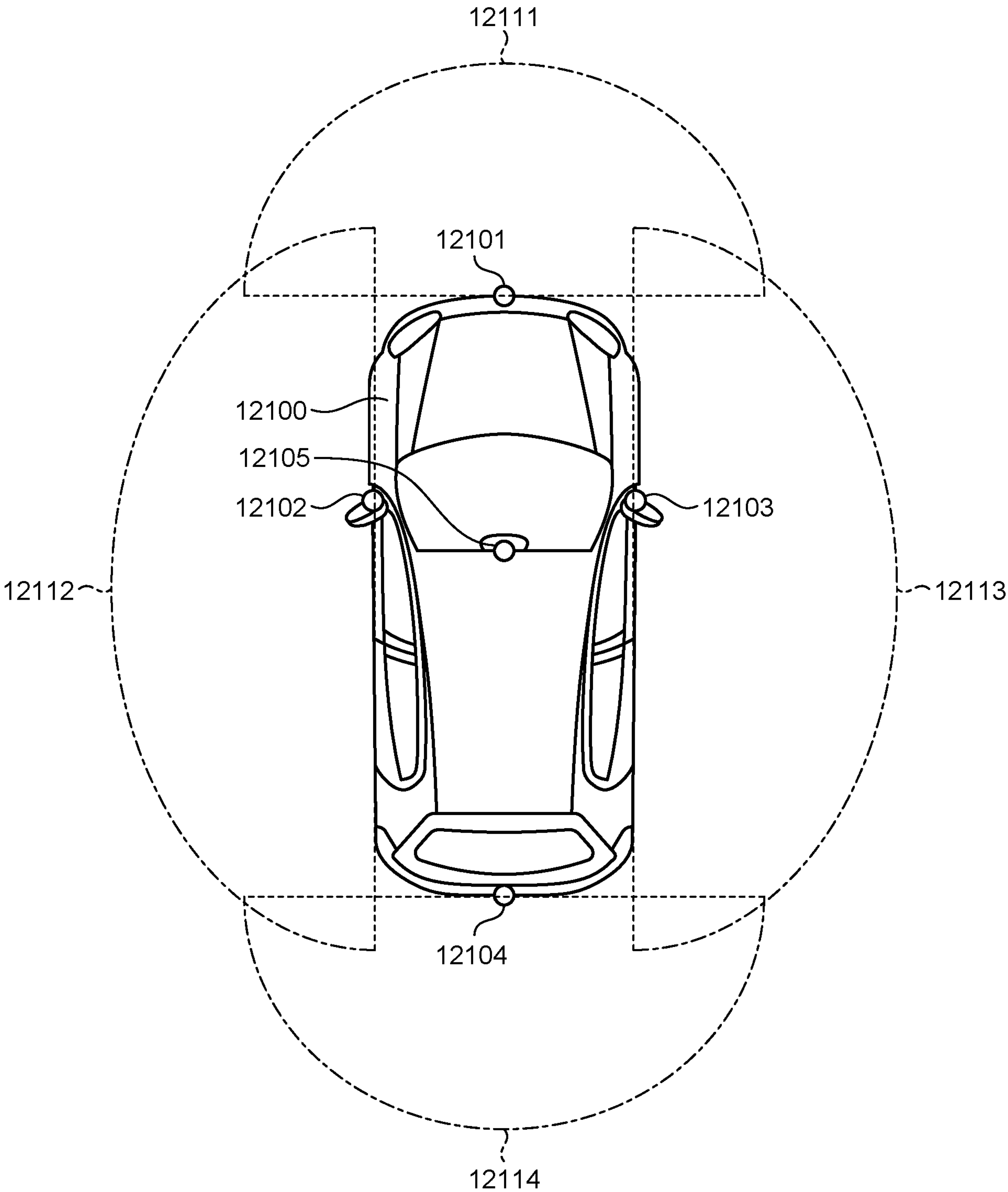
12111
12101
12100
12105
12102
12103
12112
12113
12104
12114

## INTERNATIONAL SEARCH REPORT

International application No.
PCT/JP2020/046778

A. CLASSIFICATION OF SUBJECT MATTER
Int. Cl. G06T7/00(2017.01)i, G06N20/00(2019.01)i
FI: G06N20/00, G06T7/00 350B

According to International Patent Classification (IPC) or to both national classification and IPC

B. FIELDS SEARCHED

Minimum documentation searched (classification system followed by classification symbols)
Int. Cl. G06T7/00, G06N20/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2019-159659 A (PANASONIC INTELLECTUAL PROPERTY MANAGEMENT CO., LTD.) 19 September 2019, paragraphs [0011]-[0115], fig. 1, 2 | 1-2, 4-5, 7-19<br>3, 6 |
| Y<br>A | JP 2010-55303 A (DENSO IT LABORATORY, INC.) 11 March 2010, paragraphs [0016]-[0059] | 1-2, 4-5, 7-12<br>3, 6 |
| Y<br>A | US 2019/0034829 A1 (INTEL CORPORATION) 31 January 2019, paragraphs [0011]-[0101], fig. 2 | 1-2, 4-5, 7-19<br>3, 6 |
| A | JP 2015-135552 A (DENSO CORP.) 27 July 2015, paragraphs [0016]-[0081] | 1-19 |

☐ Further documents are listed in the continuation of Box C.   ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26.01.2021 | 02.02.2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/046778

| Patent Documents referred to in the Report | Publication Date | Patent Family | Publication Date |
|---|---|---|---|
| JP 2019-159659 A | 19.09.2019 | US 2019/0281430 A1 paragraphs [0023]-[0127], fig. 1, 2 | |
| JP 2010-55303 A | 11.03.2010 | (Family: none) | |
| US 2019/0034829 A1 | 31.01.2019 | (Family: none) | |
| JP 2015-135552 A | 27.07.2015 | US 2015/0199617 A1 paragraphs [0029]-[0221] | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018202595 A